# EUROPEAN PATENT APPLICATION

(11) **EP 2 750 225 A1**
(43) Date of publication of application: **02.07.2014**
(21) Application number: 12826088.2
(22) Date of filing: 22.08.2012
(51) Int. Cl.: H01M 4/42, H01M 4/06, H01M 4/24, H01M 4/62, H01M 10/30, H01M 12/08

(54) **NEGATIVE ELECTRODE MIXTURE OR GEL ELECTROLYTE, AND BATTERY USING SAID NEGATIVE ELECTRODE MIXTURE OR SAID GEL ELECTROLYTE**

(30) Priority: 23.08.2011 JP 2011181828; 23.08.2011 JP 2011181829; 22.06.2012 JP 2012141334; 25.06.2012 JP 2012141647
(71) Applicant: Nippon Shokubai Co., Ltd., Osaka-shi, Osaka 541-0043 (JP)
(72) Inventor: YONEHARA Koji, Suita-shi Osaka 564-8512 (JP); ONO Hironobu, Himeji-shi Hyogo 671-1292 (JP); HARADA Hiroko, Suita-shi Osaka 564-8512 (JP); TAKAZAWA Yasuyuki, Suita-shi Osaka 564-8512 (JP)
(74) Representative: Hart-Davis, Jason
(86) International application number: PCT/JP2012/071204
(87) International publication number: WO 2013/027767

(57) **Abstract**

The purpose of the present invention is to provide a zinc negative electrode mixture for forming negative electrodes of safe and economic batteries exhibiting excellent battery performance; and a gel electrolyte or a negative electrode mixture which can be suitably used for forming a storage battery exhibiting excellent battery performance such as a high cycle characteristic, rate characteristic, and coulombic efficiency while suppressing change in form, such as shape change and dendrite, and passivation of the electrode active material. Another purpose of the present invention is to provide a battery including the zinc negative electrode mixture or the gel electrolyte. (1) The zinc negative electrode mixture contains a zinc-containing compound and a conductive auxiliary agent. The zinc-containing compound and/or the conductive auxiliary agent contain(s) particles having an average particle size of 1000 µm or smaller and/or particles having an aspect ratio (vertical/lateral) of 1.1 or higher. (2) The gel electrolyte intended to be used in batteries has a cross-linked structure formed by a multivalent ion and/or an inorganic compound. (3) The negative electrode mixture intended to be used in batteries contains a negative electrode active material and a polymer.

## Description

### TECHNICAL FIELD

The present invention relates to a negative electrode mixture or a gel electrolyte, and a battery including the negative electrode mixture or the gel electrolyte. The present invention specifically relates to a negative electrode mixture such as a zinc negative electrode mixture which contains zinc as a negative electrode active material and which is suitably used for forming negative electrodes of safe and economic batteries exhibiting excellent performance; a gel electrolyte suitably used as an electrolyte of batteries; and a battery including these.

### BACKGROUND ART

Negative electrode mixtures are materials including a negative electrode active material for forming negative electrodes of batteries. In particular, zinc negative electrode mixtures containing zinc as a negative electrode active material have been studied for a long time accompanying the spread of batteries. Examples of batteries containing zinc in the negative electrode include primary batteries and secondary batteries (storage batteries). Specifically, the researchers have studied and developed zinc-air batteries utilizing oxygen in the air as a positive electrode active material, nickel-zinc batteries utilizing a nickel-containing compound as a positive electrode active material, manganese-zinc batteries and zinc ion batteries utilizing a manganese-containing compound as a positive electrode active material, silver-zinc batteries utilizing a silver-containing compound as the positive electrode active material, and the like. In particular, zinc-air primary batteries, manganese-zinc primary batteries, and silver-zinc primary batteries are put to practical use and are widely used all over the world. Currently, development and improvement of batteries have an importance in various industrial fields such as from mobile devices to automobiles, and novel batteries are developed and improved which are excellent mainly in battery performance and easiness of making the batteries into secondary batteries.

Examples of conventionally studied and developed batteries utilizing zinc in the negative electrode include: alkaline zinc storage batteries including a zinc electrode mainly containing zinc and zinc oxide and containing oxides or hydroxides of cadmium and tin (for example, see Patent Literature 1); alkaline zinc storage batteries including a zinc electrode mainly containing zinc and zinc oxide and containing oxide or hydroxide of tin and titanium oxide (for example, see Patent Literature 2); zinc electrodes for alkaline storage batteries including a zinc active material that contains fluororesin and polyvinyl alcohol, and at least one inorganic compound selected from the group consisting of calcium hydroxide, barium hydroxide, titanium oxide, zirconium oxide, and magnesium oxide added to the zinc active material (for example, see Patent Literature 3); alkaline zinc storage batteries including a zinc electrode mainly containing zinc and zinc oxide and containing an electrochemically inactive nonconductive inorganic compound at the periphery of an electrode containing an alkali-resistant water-repellent synthesized resin binding agent (for example, see Patent Literature 4); and alkaline zinc storage batteries including a zinc electrode mainly containing zinc or zinc oxide and containing as additives oxide or hydroxide of indium, oxide or hydroxide of thallium, and at least one oxide or hydroxide of gallium, cadmium, lead, tin, bismuth, and mercury, with the sum of the amounts of the additives being 1 to 15% by weight in the zinc electrode (for example, see Patent Literature 5). Further, a method of producing a zinc electrode for alkaline storage batteries is disclosed which includes kneading zinc, calcium hydroxide, thallium oxide, and water; drying the mixture and reducing the dried mixture to powder; mixing the powder with zinc powder, zinc oxide powder, an additive, and a binding agent to form an active material paste; and applying the active material paste to a collector (for example, see Patent Literature 6).

Background art documents disclose that addition of an oxide of metal other than zinc to a zinc electrode active material for the purpose of improving the discharge-and-charge cycle characteristic of a zinc electrode results in the fact that indium oxide and thallium oxide among various metal oxide additives have an effect of highly improving the cycle characteristic (for example, see Non-Patent Literature 1). Non-Patent Literature 2 outlines the history of studies and development of a zinc electrode for alkaline secondary batteries.

Other documents disclose a nickel-zinc Galvanic cell including a paste-type zinc oxide negative electrode, a paste-type nickel oxide positive electrode, and an alkaline electrolyte solution, the positive electrode containing a mixture of coprecipitated cobalt oxide and fractionated metal cobalt, and the negative electrode containing an oxide other than zinc oxide (for example, see Patent Literature 7); and an electrochemical battery including a zinc electrode containing zinc oxide, a binder, and a fluoride (for example, see Patent Literature 8). Still another document discloses an electrochemical cell that includes a zinc electrode containing a mixture of zinc oxide and inorganic fibers of silica and alumina and a buffer electrolyte solution (for example, see Patent Literature 9). The present inventors have performed studies to find that a zinc electrode containing silica and alumina suffers easy dissolution of these compounds into the system, resulting in rapid deterioration.

Still other documents disclose a zinc electrode containing zinc oxide, a metal oxide, hydroxyethyl cellulose, an oxide dispersant, and a liquid binder (for example, see Patent Literature 10); a rechargeable nickel-zinc battery including a negative electrode containing zinc or a zinc compound, a positive electrode containing nickel oxide, nickel hydroxide, and/or nickel oxide hydroxide, and an electrolyte containing a phosphoric acid salt, free alkali, and a boric acid salt (for example, see Patent Literature 11); and a method of producing a rechargeable battery including a zinc negative electrode material containing ZnO, zinc or a zinc alloy, bismuth oxide, and aluminum oxide, and a nickel positive electrode material containing nickel hydroxide and/or nickel oxide hydroxide, zinc oxide, cobalt oxide, and a binding agent (for example, see Patent Literature 12).

Another document discloses a rechargeable nickel-zinc battery including a zinc negative electrode containing electrochemically active zinc and surfactant-coated carbon fibers and a nickel positive electrode, and discloses that use of the surfactant-coated carbon fibers in the zinc negative electrode improves the charge and discharge characteristics of a nickel-zinc battery (for example, see Patent Literature 13). Alternative compounds to surfactant-coated carbon fibers used in the comparative examples are alumina fibers, which the present inventors have proved to cause marked deterioration of the zinc electrode because they are dissolved in a strong alkaline aqueous electrolyte solution, so that the document fails to prove the superiority of surfactant-coated carbon fibers in a true sense. Surfactant-coated carbon fibers are considered to suppress generation of hydrogen due to decomposition of an aqueous electrolyte solution, but the surfactant-coated carbon fibers contain Pb that has a high hydrogen overvoltage (for example, see Patent Literature 14). Thus, it is obvious that such carbon fibers can suppress generation of hydrogen, and this does not mean the superiority of surfactant-coated carbon fibers. In order to improve the capacitance density of a zinc electrode even slightly, there is still room for developing a conductive auxiliary agent without surfactant coating.

Batteries conventionally include a positive electrode, a negative electrode, and an electrolyte solution interposed between these electrodes. The electrolyte solution in batteries is a liquid in many cases. In particular, storage batteries suffer problems which make it difficult to use safely and stably for a long time, such as expansion of the storage batteries due to decomposition of an electrolyte solution. Especially, storage batteries having a negative electrode of a zinc-containing compound (aqueous electrolyte solution) or lithium metal (organic-solvent-type electrolyte solution) are superior to nickel-metal hydride batteries (aqueous electrolyte solution) and lithium ion batteries (organic-solvent-type electrolyte solution), which are used as storage batteries in various fields, in properties such as operating voltage and energy density in the case of comparison using the same electrolyte solution. In contrast, repeated charge and discharge of such batteries for a long time cause local dissolution and precipitation of the metal in the electrode and involving changes in form, such as shape change and formation of dendrite, of the electrode active material and progress of such changes. This results in capacity deterioration and life shortening of the storage batteries.

For general methods of solving issues about safety and stability of storage batteries, one conventional main approach is to use a gel-like electrolyte (gel electrolyte) which is high in ion conductivity and excellent in safety and mechanical properties instead of an electrolyte solution. Examples of the gel-like electrolyte for such an approach include: an inorganic hydrogel electrolyte for solid-state alkaline secondary batteries in which a layered hydrotalcite bears an alkali hydroxide aqueous solution (for example, see Patent Literature 15); and a polymer hydrogel electrolyte for alkaline batteries including a polymer composition of polyvinyl alcohol and an anionic cross-linked (co)polymer and an alkali hydroxide contained in the polymer composition (for example, see Patent Literature 16). Another document discloses a polymer gelling agent for electrolyte solutions obtained by saponifying a precursor of a polymer gelling agent for electrolyte solutions, the precursor being a copolymer of a hydrophobic monomer having a hydrophobic group that generates a carboxyl group by saponification and a hydrophobic polyfunctional monomer, and being capable of gelling an electrolyte solution (for example, see Patent Literature 17). Other examples of the gel-like electrolyte include an alkaline polymer gel electrolyte prepared by solution-polymerization of acrylic acid salt, potassium hydroxide, and water as starting materials (for example, see Non-Patent Literature 3); an inorganic hydrogel electrolyte containing hydrotalcite bearing a potassium hydroxide aqueous solution (for example, see Non-Patent Literature 4); a polyethylene oxide-based alkaline solid polymer electrolyte (for example, see Non-Patent Literature 5); a polymer electrolyte prepared from polyethylene oxide, polyvinyl alcohol, potassium hydroxide, and water (for example, see Non-Patent Literature 6); and an alkaline polymer electrolyte nanocomposite prepared from polyvinyl alcohol, nanoparticled zirconium oxide, potassium hydroxide, and water (for example, see Non-Patent Literature 7). Another document discloses a solid electrolyte which is a viscoelastic material containing a high molecular weight polymer that contains a non-aqueous electrolyte solution in an amount of 200% by weight or more for the amount of the high molecular weight polymer (for example, see Patent Literature 18).

Although not intended to suppress changes in form, such as shape change and formation of dendrite, of the electrode active material, one method of making an active material remain in an electrode is known in which an additive (e.g. binding agent, binder) is added to an electrode mixture for producing an electrode, thereby capturing the active material (metal). For example, a method of producing an electrode for batteries is disclosed which includes impregnating pores of particles of an active material or particles mainly of an active material with a polymerizable or copolymerizable monomer or a lower polymer compound, and then polymerizing or copolymerizing the monomer or the lower polymer compound in the pores (for example, see Patent Literature 19). Further, an additive (thickening agent) including a water-insoluble water-absorbing resin is disclosed as a polymer to be added to an electrode mixture, which is used in the step of producing an electrode paste for alkaline storage batteries (for example, see Patent Literature 20). Other documents disclose a binding agent for electrodes of electrochemical elements including a vinyl polymer-type thermoreversible thickening agent reversibly changing between hydrophilicity and hydrophobicity at a certain transition temperature, a water-dispersible binder resin, and a salt of metal in the groups 1 to 7 of the periodic table (for example, see Patent Literature 21); and an aqueous dispersion including an aqueous phase and a binding agent for electrodes dispersed in the aqueous phase, the binding agent including a synthetic resin having a glass transition temperature of lower than -40°C (for example, see Patent Literature 22).

### CITATION LIST

### - Patent Literature

Patent Literature 1: JP S58-163159 A
Patent Literature 2: JP S58-163162 A
Patent Literature 3: JP S60-208053 A
Patent Literature 4: JP S61-61366 A
Patent Literature 5: JP S61-96666 A
Patent Literature 6: JP H01-163967 A
Patent Literature 7: JP 2004-513501 T
Patent Literature 8: JP 2004-520683 T
Patent Literature 9: JP 2004-522256 T
Patent Literature 10: JP 2004-526286 T
Patent Literature 11: JP 2007-214125 A
Patent Literature 12: JP 2008-532249 T
Patent Literature 13: US 2011/0033747 A
Patent Literature 14: JP S51-32365 B
Patent Literature 15: JP 2007-227032 A
Patent Literature 16: JP 2005-322635 A
Patent Literature 17: JP 2003-178797 A
Patent Literature 18: JP H05-205515 A
Patent Literature 19: JP S60-37655 A
Patent Literature 20: JP H08-222225 A
Patent Literature 21: JP 2003-331848 A
Patent Literature 22: JP 2006-172992 A

### - Non-Patent Literature

Non-Patent Literature 1: Mitsuzo Nogami, and four others, "Denki Kagaku", 1989, Vol. 57, No. 8, p.810-814
Non-patent Literature 2: F. R. McLarnon, and one other, "Journal of The Electrochemical Society", 1991, Vol. 138, No. 2, p.645-664
Non-patent Literature 3: Xiaoming Zhu, and three others, "Electrochimica Acta", 2004, Vol. 49, No. 16, p.2533-2539
Non-patent Literature 4: Hiroshi Inoue, and four others, "Electrochemical and Solid-State Letters", 2009, Vol. 12, No. 3, p.A58-A60
Non-patent Literature 5: J. F. Fauvarque, and four others, "Electrochimica Acta", 1995, Vol. 40, No. 13-14, p.2449-2453
Non-patent Literature 6: Chun-Chen Yang, "Journal of Power Sources", 2002, Vol. 109, p.22-31
Non-patent Literature 7: Chun-Chen Yang, "Materials Science and Engineering B", 2006, Vol. 131, p.256-262

### SUMMARY OF INVENTION

### - Technical Problem

Although various batteries using a zinc negative electrode have been studied as mentioned above, they are no more in the main stream of the battery development as novel batteries using other elements in negative electrodes are developed. Still, the present inventors have recognized that such batteries with zinc negative electrodes are inexpensive and highly safe, and have high energy density, so that they have focused on the possibility of these batteries for suitable uses in various applications from the above viewpoint. They have then studied the performance of zinc negative electrode batteries, and have found the batteries still have the following disadvantages to be solved so as to satisfy the performance required for current batteries; for example, repeated charge and discharge, which are essential for making a battery into a secondary battery, cause changes in form or passivation of a negative electrode active material including zinc, thereby deteriorating the charge-and-discharge cycle characteristics (battery life), as well as causing marked self-discharge in the charged state or during storage in the charged state. Solving such disadvantages possibly allows the zinc negative electrode batteries to be used as batteries satisfying the required economy and safety, as well as the required performance together in various industrial fields such as from mobile devices to automobiles.

In order to solve the disadvantages of storage batteries and to improve the performance thereof, various gel electrolytes and additives for electrode mixtures have been studied as mentioned above. From the viewpoint of the superiority of storage battery performance such as operating voltage and energy density, storage batteries using a zinc-containing compound or lithium metal as the negative electrode active material of an electrode instead of a hydrogen storage alloy or graphite are required to provide excellent battery performance such as a cycle characteristic, a rate characteristic, and coulombic efficiency while suppressing changes in form, such as shape change and formation of dendrite, dissolution, and corrosion, as well as passivation due to these factors, of the electrode active material so as to satisfy the performance required for such storage batteries. Thus, there is still a room for achieving storage batteries satisfying these requirements simultaneously. As is reported in Non-Patent Literature 3 and Non-Patent Literature 5, the above storage batteries also often use a gel electrolyte, but they fail to solve the disadvantages. Non-Patent Literature documents 4, 6, and 7 are limited to observe whether or not the characteristics of gel electrolytes are satisfactory to electrolytes of batteries, and they fail to solve the disadvantages. Thus, the gel electrolytes disclosed in these Non-Patent Literature documents are not used for suppressing changes in form of the electrode active material and for improving the battery performance such as a cycle characteristic, a rate characteristic, and coulombic efficiency. They still require improvement for sufficiently solving these disadvantages.

In each of the methods disclosed in Patent Literature documents 19 to 22, a polymer used as an additive is merely used as a thickening agent for paste electrodes of alkaline storage batteries. The polymer is not used for suppressing changes in form or passivation of the electrode active material and improving the battery performance such as a cycle characteristic, a rate characteristic, and coulombic efficiency, and it still requires improvement for sufficiently solving these disadvantages.

The present invention is devised in the aforementioned situation, and aims to provide a zinc negative electrode mixture for producing negative electrodes of batteries excellent in economy and safety, as well as battery performance, and to provide a gel electrolyte or a negative electrode mixture suitably used for producing storage batteries showing the battery performance such as a high cycle characteristic, rate characteristic, and coulombic efficiency, while suppressing changes in form, such as shape change and dendrite, dissolution, corrosion, and passivation of the electrode active material. The present invention also aims to provide a battery using such a zinc negative electrode mixture or gel electrolyte.

### - Solution to Problem

The present inventors have performed various studies on zinc negative electrode mixtures, especially those containing a zinc-containing compound as an active material and a conductive auxiliary agent, and have focused on the shapes of the zinc-containing compound and the conductive auxiliary agent. Then, they have found the following: with the zinc-containing compound and/or the conductive auxiliary agent containing particles having a small particle size that is smaller than a predetermined average particle size or long and narrow particles having a specific aspect ratio, the zinc negative electrode produced from such a zinc negative electrode mixture can better suppress generation of hydrogen, which is a side reaction, and better improve the cycle characteristic, rate characteristic, and coulombic efficiency of the battery than conventional zinc negative electrodes. They have further found that such a mixture can suppress changes in form and passivation of the zinc-containing negative electrode active material, and self-discharge in the charged state or during storage in the charged state. The zinc negative electrode having such features can be more suitably used as a negative electrode of batteries. Further, batteries including such a zinc negative electrode can use a water-containing electrolyte solution, and thus the resulting batteries are highly safe batteries. As mentioned here, the present inventors have arrived at solving the above disadvantages with the zinc negative electrode mixture that contains a zinc-containing compound and a conductive auxiliary agent in which the zinc-containing compound and/or the conductive auxiliary agent contain(s) particles having an average particle size of 1000 µm or smaller and/or particles having an aspect ratio (vertical/lateral) of 1.1 or higher.

The present inventors have further performed various studies on disadvantages regarding changes in form, such as shape change and formation of dendrite, dissolution, corrosion, and passivation of the electrode active material in batteries, and have focused on the gel electrolyte. Then, they have found that conventional gel electrolytes are still insufficient in performance as an electrolyte and, especially in the case of a concentrated alkaline solution, the solution gradually decomposes, and thus does not withstand the use in secondary batteries for industrial uses. The present inventors have also found that a gel electrolyte having a cross-linked structure formed by a multivalent ion and/or an inorganic compound can provide a storage battery that can effectively suppress changes in form, such as shape change and formation of dendrite, of the electrode active material, can have a high cycle characteristic, rate characteristic, and coulombic efficiency while maintaining a high ion conductivity of the gel electrolyte, and can have improved resistance to a concentrated alkaline solution. As mentioned here, the present inventors have arrived at solving the above disadvantages with the gel electrolyte having a cross-linked structure formed by a multivalent ion and/or an inorganic compound in storage batteries.

The present inventors have also focused on the negative electrode mixture regarding changes in form, such as shape change and formation of dendrite, of the electrode active material in storage batteries. Then, they have found that a negative electrode mixture containing a negative electrode active material and a polymer can provide a storage battery that can effectively suppress changes in form, such as shape change and formation of dendrite, and passivation of the electrode active material, and can have a high cycle characteristic, rate characteristic, and coulombic efficiency while maintaining a high electrical conductivity. As mentioned here, the present inventors have arrived at solving the above disadvantages with a negative electrode mixture for storage batteries containing a negative electrode active material and a polymer. Finally, the present inventors have completed the present invention. The present invention can be used not only for storage batteries (secondary batteries) but also for other electrochemical devices such as primary batteries, capacitors, and hybrid capacitors.

In other words, the present invention relates to a zinc negative electrode mixture including a zinc-containing compound and a conductive auxiliary agent, the zinc-containing compound and/or the conductive auxiliary agent containing particles having an average particle size of 1000 µm or smaller and/or particles having an aspect ratio (vertical/lateral) of 1.1 or higher.

The zinc negative electrode mixture of the present invention further includes an additional component, and the additional component is at least one selected from the group consisting of compounds having at least one element selected from the group consisting of elements in the groups 1 to 17 of the periodic table, organic compounds, and salts of organic compounds.

The present invention also relates to a zinc negative electrode formed from the zinc negative electrode mixture.

The present invention also relates to a battery including the zinc negative electrode.

The present invention also relates to a gel electrolyte intended to be used in batteries, and the gel electrolyte has a cross-linked structure formed by a multivalent ion and/or an inorganic compound.

The present invention also relates to a negative electrode mixture for batteries, and the negative electrode mixture includes a negative electrode active material and a polymer.

The present invention will be described in detail below.

Any combinations of two or more embodiments of the present invention to be mentioned below are also preferable embodiments of the present invention.

First of all, the following will describe a zinc negative electrode mixture (hereinafter, also referred to as the zinc negative electrode mixture of the first aspect of the present invention) including a zinc-containing compound and a conductive auxiliary agent, the zinc-containing compound and/or the conductive auxiliary agent containing particles having an average particle size of 1000 µm or smaller and/or particles having an aspect ratio (vertical/lateral) of 1.1 or higher. Next, the following will describe a gel electrolyte (hereinafter, also referred to as the gel electrolyte of the second aspect of the present invention) of the present invention. Finally, the following will describe a negative electrode mixture (hereinafter, also referred to as the negative electrode mixture of the third aspect of the present invention) including a negative electrode active material and a polymer.

First, the zinc negative electrode mixture of the first aspect of the present invention is described below.

The zinc negative electrode mixture of the first aspect of the present invention includes a zinc-containing compound and a conductive auxiliary agent, and the zinc-containing compound and/or the conductive auxiliary agent contain(s) particles having an average particle size of 1000 µm or smaller and/or particles having an aspect ratio (vertical/lateral) of 1.1 or higher.

The zinc negative electrode mixture of the present invention may contain an additional component as long as it contains the zinc-containing compound and the conductive auxiliary agent. For each of these components, one species thereof may be used, or two or more species thereof may be used.

The zinc-containing compound and/or the conductive auxiliary agent contain(s) particles having an average particle size of 1000 µm or smaller and/or particles having an aspect ratio (vertical/lateral) of 1.1 or higher. A zinc negative electrode formed from the zinc negative electrode mixture containing such a conductive auxiliary agent and zinc-containing compound is capable of improving the cycle characteristic, rate characteristic, and coulombic efficiency of batteries. The reason of this is presumably as follows.

For the negative electrode of a battery formed from a zinc negative electrode mixture including a zinc-containing compound and a conductive auxiliary agent, the molecules of the zinc-containing compound, the zinc-containing compound and the conductive auxiliary agent, and the zinc-containing compound, the conductive auxiliary agent, and a collector are preferably bound to each other so as to allow the electrode to function as a negative electrode (allow a current to pass through the electrode). However, repeated charge and discharge or rapid charge and discharge may unavoidably cause dissociation between the zinc-containing compound molecules, between the zinc-containing compound and the conductive auxiliary agent, and among the zinc-containing compound, the conductive auxiliary agent, and the collector, or cause passivation of the zinc-containing compound, thereby deteriorating the battery performance. On the contrary, use of particles having an average particle size of 1000 µm or smaller as the zinc-containing compound and/or the conductive auxiliary agent enables effective contact between the zinc-containing compound molecules, between the zinc-containing compound and the conductive auxiliary agent, and among the zinc-containing compound, the conductive auxiliary agent, and the collector. This reduces the portions of complete dissociation between the zinc-containing compound molecules, between the zinc-containing compound and the conductive auxiliary agent, and among the zinc-containing compound, the conductive auxiliary agent, and the collector, resulting in suppression of deterioration of the battery performance. In the case where the zinc-containing compound and/or the conductive auxiliary agent contain(s) particles having an aspect ratio (vertical/lateral) of 1.1 or higher, each particle has a long and narrow shape, and thus dissociation is less likely to occur between the zinc-containing compound molecules, between the zinc-containing compound and the conductive auxiliary agent, and among the zinc-containing compound, the conductive auxiliary agent, and the collector. This results in suppression of deterioration of the battery performance. In addition, such particles can suppress changes in form of the zinc-containing compound which is an active material.

In the present invention, one of the zinc-containing compound and the conductive auxiliary agent may contain particles having an average particle size of 1000 µm or smaller and/or particles having an aspect ratio (vertical/lateral) of 1.1 or higher, or both of the zinc-containing compound and the conductive auxiliary agent may contain particles having an average particle size of 1000 µm or smaller and/or particles having an aspect ratio (vertical/lateral) of 1.1 or higher.

It is also one preferable embodiment of the present invention that the zinc-containing compound and the conductive auxiliary agent contain particles having an average particle size of 1000 µm or smaller and/or particles having an aspect ratio (vertical/lateral) of 1.1 or higher.

The zinc-containing compound and/or the conductive auxiliary agent in the present invention at least contain(s) particles having an average particle size of 1000 µm or smaller and/or particles having an aspect ratio (vertical/lateral) of 1.1 or higher, and may further contain particles having different shapes. The sum of the amounts of the particles having an average particle size of 1000 µm or smaller and the particles having an aspect ratio (vertical/lateral) of 1.1 or higher is preferably 10% by mass or more in 100% by mass of the whole of the zinc-containing compound and the conductive auxiliary agent. Such a total quantity of the particles having an average particle size of 1000 µm or smaller and/or the particles having an aspect ratio (vertical/lateral) of 1.1 or higher in the whole amount of the zinc-containing compound and the conductive auxiliary agent makes it possible to more sufficiently achieve the effects of the present invention. The sum of the amounts of the particles is more preferably 40% by mass or more, and still more preferably 80% by mass or more. The sum of the amounts of the particles is particularly preferably 100% by mass; in other words, the zinc-containing compound and the conductive auxiliary agent consist of the particles having an average particle size of 1000 µm or smaller and/or the particles having an aspect ratio (vertical/lateral) of 1.1 or higher.

The particles having a small particle size herein mean particles having an average particle size of 1000 µm or smaller, and the average particle size is preferably 500 µm or smaller, more preferably 200 µm or smaller, still more preferably 100 µm or smaller, particularly preferably 75 µm or smaller, and most preferably 20 µm or smaller. The lower limit of the average particle size is preferably 1 nm. The average particle size is more preferably 2 nm or greater, and still more preferably 5 nm or greater. The above average particle size is an average particle size of the zinc-containing compound and/or the conductive auxiliary agent in the state of raw material. Still, the average particle size preferably satisfies the above value in the analysis after dispersion by 1- to 20-minute ultrasonication or in the analysis of the zinc-containing compound and/or the conductive auxiliary agent contained in the zinc negative electrode mixture prepared through the steps to be mentioned later or contained in the electrode produced from the mixture.

The average particle size can be determined with a transmission electron microscope (TEM), a scanning electron microscope (SEM), or a particle size distribution analyzer, or by X-ray powder diffraction (XRD), for example.

Examples of the state of particles include fine powder, powder, particulates, granules, scales, polyhedrons, and rods. Particles having an average particle size within the aforementioned range can be produced by a method of grinding particles with, for example, a ball mill, dispersing the resulting coarse particles in a dispersant to give a predetermined particle size, and then dry-hardening the particles; a method of sieving the coarse particles to classify the particle sizes; a method of optimizing the conditions for producing the particles, thereby producing (nano)particles having a predetermined particle size; and the like methods.

For a group of particles having multiple uneven particle sizes, a typical particle size in this group of particles is defined as the average particle size of the group. The particle size is the length of a particle measured in conformity with a general rule. For example, (i) in the case of microscopy, two or more lengths of one particle, such as the major axis diameter, the minor axis diameter, and the Feret diameter, are measured and the average value thereof is defined as the particle size. Preferably at least 100 particles are measured. (ii) In the case of image analysis, light-shielding, or Coulter principle, the directly measured value (e.g. projected area, volume) as the size of a particle is converted into a systematic shape (e.g. circle, sphere, cube) of the particle based on a geometric formula, and the diameter of the systematic shape is defined as the particle size (equivalent size). (iii) In the case of sedimentation or laser diffraction scattering, the measured value is calculated into a particle size (effective size) based on the physical law (e.g. Mie theory) deduced by supposition of a specific particle shape and specific physical conditions. (iv) In the case of dynamic light scattering, the rate of diffusion (diffusion coefficient) of particles in a liquid owing to Brownian motion is measured to calculate the particle size. Analysis of the average particle size may be performed on particles as they are, or after dispersion by 1- to 20-minute ultrasonication. In either case, the average particle size preferably satisfies the above value. For the average particle size measured using a particle size distribution analyzer, the particle size at the peak of a frequency distribution graph (i.e. corresponding to the maximum frequency distribution value) is referred to as a mode diameter, and the particle size corresponding to a cumulative distribution value of 50% is referred to as a median size.

The particles having a small particle size preferably have a specific surface area of 0.01 m²/g or larger. The specific surface area is more preferably 0.1 m²/g or larger, and still more preferably 0.5 m²/g or larger. The upper limit of the specific surface area is preferably 1500 m²/g. The specific surface area is more preferably 500 m²/g or smaller, still more preferably 350 m²/g or smaller, and particularly preferably 250 m²/g or smaller.

The specific surface area can be measured by the nitrogen adsorption BET method using a specific surface area measurement device, for example.

Particles having a specific surface area within the above range can be produced by, for example, forming particles into nanoparticles or adjusting the conditions for particle production to make irregularities on the particle surface.

The long and narrow particles may mainly have a rectangular parallelepiped shape or a cylindrical shape (fibrous shape) with an aspect ratio (vertical/lateral) of 1.1 or higher. The aspect ratio (vertical/lateral) is preferably 20 or higher, more preferably 50 or higher, and still more preferably 60 or higher. The upper limit of the aspect ratio (vertical/lateral) is preferably 100000, and more preferably 50000.

For particles having a rectangular parallelepiped shape which are observed using a TEM or SEM, the aspect ratio (vertical/lateral) can be determined by, for example, dividing the vertical length by the lateral length, where the vertical means the longest side and the lateral means the second longest side. For particles having a cylindrical shape, a sphere shape, a shape with a curved surface, a polyhedral shape, and the like, a particle is placed such that a certain one point faces downward and the particle is projected from the direction that provides the maximum aspect ratio to form a two-dimensional shape; then, the distance between the certain one point and the farthest point therefrom is measured; and the aspect ratio is determined by dividing the vertical length by the lateral length, where the vertical means the longest side and the lateral means the longest side among the straight lines crossing the center of the vertical axis.

Particles having an aspect ratio (vertical/lateral) within the above range can be obtained by, for example, selecting particles having such an aspect ratio, or optimizing the conditions for producing particles to selectively produce such particles.

The aspect ratio is an average particle size of the zinc-containing compound and/or the conductive auxiliary agent in the state of raw material. Still, the aspect ratio preferably satisfies the above value in the analysis after dispersion by 1- to 20-minute ultrasonication or in the analysis of the zinc-containing compound and/or the conductive auxiliary agent contained in the zinc negative electrode mixture prepared through the steps to be mentioned later or contained in the electrode produced from the mixture.

Any zinc-containing compounds may be used as long as they are usable as the negative electrode active material. Examples thereof include zinc metal, zinc fibers, zinc oxide (type 1, type 2, type 3), conductive zinc oxide, zinc hydroxide, zinc sulfide, tetrahydroxozincate ion salts, zinc halides, zinc carboxylate compounds (e.g. zinc acetate, zinc tartrate), magnesium zincate, calcium zincate, barium zincate, zinc borate, zinc silicate, zinc aluminate, zinc fluoride, zinc alloys, carbonate, hydrogen carbonate, nitrate, sulfate, and zinc used in alkaline batteries and zinc-air batteries. Preferable are zinc metal, zinc oxide (type 1, type 2, type 3), conductive zinc oxide, zinc hydroxide, tetrahydroxozincate ion salts, zinc halides, zinc borate, zinc fluoride, zinc alloys, and zinc used in alkaline batteries and zinc-air batteries. More preferable are zinc metal, zinc oxide (type 1, type 2), conductive zinc oxide, zinc hydroxide, zinc borate, zinc fluoride, zinc alloys, and zinc used in alkaline batteries and zinc-air batteries. Still more preferable are zinc oxide, zinc hydroxide, zinc alloys, and zinc used in alkaline batteries and zinc-air batteries. Most preferred are zinc oxide and zinc hydroxide. One of the zinc-containing compounds may be used or two or more thereof may be used.

In the case of using zinc oxide, the zinc oxide preferably contains Pb in an amount of 0.03% by mass or less and Cd in an amount of 0.01% by mass or less. Pb and Cd are known as elements to suppress decomposition of the electrolyte solution (water) (generation of hydrogen) at the zinc electrode, but it is preferable to reduce their amounts as low as possible in view of current environmental issues. The zinc oxide used in the zinc electrode more preferably satisfies the JIS standards. The zinc oxide is preferably free from Hg.

The amount of the zinc-containing compound is preferably 50 to 99.9% by mass in 100% by mass of the whole zinc negative electrode mixture. With such a range of the amount of the zinc-containing compound, the zinc negative electrode formed from the zinc negative electrode mixture achieves better battery performance when it is used as the negative electrode of a battery. The amount is more preferably 55 to 99.5% by mass, and still more preferably 60 to 99% by mass.

The zinc-containing compound preferably contains particles satisfying the following average particle size and/or aspect ratio. More preferably, the zinc-containing compound itself satisfies the following average particle size and/or aspect ratio.

The average particle size of the zinc-containing compound is preferably 500 µm to 1 nm, more preferably 100 µm to 5 nm, still more preferably 20 µm to 10 nm, and particularly preferably 10 µm to 100 nm.

In the case of using, as the zinc compound, zinc oxide dispersed in ion exchange water by five-minute ultrasonication, the average particle size thereof measured using a particle size distribution analyzer is preferably 100 µm to 100 nm, more preferably 50 µm to 200 nm, and still more preferably 10 µm to 300 nm; the mode diameter thereof is preferably 20 µm to 50 nm, more preferably 10 µm to 70 nm, and still more preferably 5 µm to 100 nm; and the median size thereof is preferably 10 µm to 100 nm, more preferably 7 µm to 150 nm, and still more preferably 5 µm to 500 nm.

For zinc-containing compounds having a shape whose aspect ratio (vertical/lateral) is measurable, such as a rectangular parallelepiped shape, a cylindrical shape, a sphere shape, a shape with a curved surface, a polyhedral shape, a scaly shape, and a rod shape, the aspect ratio (vertical/lateral) is preferably 100000 to 1.1, more preferably 50000 to 1.2, and still more preferably 10000 to 1.5. If the zinc-containing compound contains no particles satisfying the above average particle size and aspect ratio, batteries may easily suffer deterioration of a cycle characteristics due to changes in form and passivation of the negative electrode active material, and self-discharge in a charged state or during storage in a charged state.

The average particle size and the aspect ratio can be measured by the same methods as mentioned above.

The phrase "in a charged state or during storage in a charged state" herein means that a battery is in the state where part or all of the zinc-containing compound as an active material is zinc metal during the charge and discharge operation or during storage of a battery which is a full cell with a zinc electrode used as the negative electrode (reduction of zinc oxide to zinc metal is charge, whereas oxidation of zinc metal to zinc oxide is discharge). The state where part or all of the zinc-containing compound as an active material is zinc metal in a full cell during the discharge operation or in a half cell including zinc metal as the counter electrode of the zinc electrode (reduction of zinc oxide to zinc metal is discharge, whereas oxidation of zinc metal to zinc oxide is charge) is also referred to as a charged state.

The zinc-containing compound preferably contains particles satisfying the following specific surface area. More preferably, the zinc-containing compound itself satisfies the following specific surface area.

The specific surface area of the zinc-containing compound is more preferably 0.01 m²/g or larger but 60 m²/g or smaller, and still more preferably 0.1 m²/g or larger but 50 m²/g or smaller. A zinc-containing compound containing no particles satisfying the above specific surface area may easily cause deterioration of the cycle characteristic and self-discharge in a charged state or during storage in a charged state.

The specific surface area can be measured in the same manner as mentioned above.

Zinc oxide used as the zinc-containing compound preferably has a true density of 5.50 to 6.50 g/cm³. The true density is more preferably 5.60 to 6.30 g/cm³, still more preferably 5.70 to 6.20 g/cm³, particularly preferably 5.89 to 6.20 g/cm³, and most preferably 5.95 to 6.15 g/cm³. Although zinc oxide particles not satisfying the above true density have no great influence on the capacity in charge and discharge, such particles with a certain average particle size may easily cause self-discharge in a charged state or during storage in a charged state. The true density can be measured using a density measurement device or the like device. In the cases where the zinc-containing compound is used in an electrode, for example, and thus it is difficult to measure the true density of the particle alone, the true density can be assumed by calculating the ratio between zinc and oxygen using an X-ray fluorescent (XRF) analyzer or the like device.

Examples of the conductive auxiliary agent include conductive carbon, conductive ceramics, and zinc metal.

Examples of the conductive carbon include graphite, natural graphite, artificial graphite, glassy carbon, amorphous carbon, graphitizable carbon, non-graphitizable carbon, carbon nanofoam, active carbon, graphene, nanographene, graphene nanoribbon, fullerene, carbon black, graphitized carbon black, Ketjenblack, vapor grown carbon fibers, pitch-based carbon fibers, mesocarbon microbeads, metal-coated carbon, carbon-coated metal, fibrous carbon, boron-containing carbon, nitrogen-containing carbon, multi-walled/single-walled carbon nanotubes, carbon nanohorn, VULCAN, acetylene black, carbon subjected to hydrophilic treatment by introducing an oxygen-containing functional group, SiC-coated carbon, carbon surface-treated by dispersion, emulsion, suspension, or microsuspension polymerization, and microencapsulated carbon.

Examples of the conductive ceramics include compounds containing at least one selected from Bi, Co, Nb, and Y sintered together with zinc oxide.

Preferable are graphite, natural graphite, artificial graphite, graphitizable carbon, non-graphitizable carbon, graphene, carbon black, graphitized carbon black, Ketjenblack, vapor grown carbon fibers, pitch-based carbon fibers, mesocarbon microbeads, fibrous carbon, multi-walled/single-walled carbon nanotubes, VULCAN, acetylene black, carbon subjected to hydrophilic treatment by introducing an oxygen-containing functional group, and zinc metal. The zinc metal may be any of those used in practical batteries such as alkaline batteries and air batteries, or may be any of those surface-coated by other elements or carbon.

One of these conductive auxiliary agents may be used or two or more thereof may be used. Conductive carbon is not coated with a low molecular weight surfactant so as to exert its conductivity at the maximum.

Zinc metal can also serve as an active material.

The zinc metal is added as a negative electrode mixture in the production of a negative electrode. The zinc metal generated from zinc oxide or zinc hydroxide, which is a zinc-containing compound, in the charge and discharge operation also serves as a conductive auxiliary agent. The zinc-containing compound in this case practically serves as a negative electrode active material and a conductive auxiliary agent in the charge and discharge operation.

The conductive auxiliary agent, used for producing a storage battery with a water-containing electrolyte solution, may promote a side reaction of decomposing water in charge and discharge. In order to suppress such a side reaction, a predetermined element may be introduced into the conductive auxiliary agent. Examples of such an element include B, Ba, Bi, Br, Ca, Cd, Ce, Cl, F, Ga, Hg, In, La, Mn, N, Nb, Nd, P, Pb, Sc, Sn, Sb, Sr, Ti, Tl, Y, and Zr. In the case where conductive carbon is used as one conductive auxiliary agent, examples of such an element include B, Bi, Br, Ca, Cd, Ce, Cl, F, In, La, Mn, N, Nb, Nd, P, Pb, Sc, Sn, Tl, Y, and Zr.

The phrase "a predetermined element is introduced into the conductive auxiliary agent" herein means that the conductive auxiliary agent is formed into a compound containing such an element as its constituent element.

The amount of the conductive auxiliary agent is preferably 0.0001 to 100% by mass for 100% by mass of the zinc-containing compound in the zinc negative electrode mixture. The conductive auxiliary agent in an amount within this range allows a battery including, as its negative electrode, a zinc negative electrode formed from the zinc negative electrode mixture to achieve better battery performance. The amount thereof is more preferably 0.0005 to 60% by mass, and still more preferably 0.001 to 40% by mass. As mentioned here, it is also one preferable embodiment of the present invention that the amount of the conductive auxiliary agent in the zinc negative electrode mixture of the present invention is 0.0001 to 100% by mass for 100% by mass of the zinc-containing compound in the zinc negative electrode mixture.

The zinc metal used as a conductive auxiliary agent in preparation of a negative electrode mixture is treated not as a zinc-containing compound but as a conductive auxiliary agent in calculation. The zinc metal generated from zinc oxide or zinc hydroxide, which is a zinc-containing compound, in charge and discharge also functions as a conductive auxiliary agent in the system, but it is not a zerovalent zinc metal in preparation of a zinc negative electrode mixture and a zinc negative electrode. Thus, the zinc metal is not considered as a conductive auxiliary agent in this case. Consequently, the preferred amount of the conductive auxiliary agent is the preferred amount of the conductive auxiliary agent mixed in preparation of a zinc negative electrode mixture and a zinc negative electrode.

The conductive auxiliary agent preferably contains particles satisfying the following average particle size and/or aspect ratio. More preferably, the conductive auxiliary agent itself satisfies the following average particle size and/or aspect ratio.

The average particle size of the conductive auxiliary agent is preferably 500 µm to 1 nm, more preferably 200 µm to 5 nm, and still more preferably 100 µm to 10 nm.

The aspect ratio (vertical/lateral) of the conductive auxiliary agent is preferably 100000 to 1.1, more preferably 80000 to 1.2, and still more preferably 50000 to 1.5.

The average particle size and the aspect ratio can be determined by the same methods as mentioned above.

The conductive auxiliary agent preferably contains particles satisfying the following specific surface area. More preferably, the conductive auxiliary agent itself satisfies the following specific surface area.

The specific surface area of the conductive auxiliary agent is more preferably 0.1 m²/g or larger but 1500 m²/g or smaller, still more preferably 1 m²/g or larger but 1200 m²/g or smaller, still further preferably 1 m²/g or larger but 900 m²/g or smaller, particularly preferably 1 m²/g or larger but 250 m²/g or smaller, and most preferably 1 m²/g or larger but 50 m²/g or smaller.

The conductive auxiliary agent having a specific surface area satisfying the above value suppresses passivation and changes in form of the zinc-containing compound, which is an active material in charge and discharge, and also suppresses self-discharge in a charged state or during storage in a charged state. The phrase "in a charged state or during storage in a charged state" herein means the state where part or all of the negative electrode active material is reduced during the charge and discharge operation or during storage of full cells or half cells.

With conductive carbon used as a conductive auxiliary agent, a side reaction of decomposing water presumably occurs also at an edge portion of the conductive carbon. Thus, the specific surface area of the conductive carbon is preferably 0.1 m²/g or larger but 1500 m²/g or smaller, more preferably 1 m²/g or larger but 1200 m²/g or smaller, still more preferably 1 m²/g or larger but 900 m²/g or smaller, particularly preferably 1 m²/g or larger but 250 m²/g or smaller, and most preferably 1 m²/g or larger but 50 m²/g or smaller. The average particle size of the conductive carbon is preferably 20 µm to 5 nm. It is more preferably 15 µm to 10 nm.

A zinc negative electrode including a zinc negative electrode mixture containing conductive carbon as a conductive auxiliary agent is expected to withstand high-rate charge-and-discharge conditions. In particular, such a zinc negative electrode is expected to give good performance when used in onboard storage batteries. It is also expected to suppress self-discharge in a charged state or during storage in a charged state and suppress changes in form of the zinc electrode active material due to precipitation of zinc into mesopores or micropores of the conductive carbon. Since water may possibly be decomposed at an edge portion of the conductive carbon in charge and discharge, the conductive carbon may be graphitized to have less edge portions for the expected purpose of achieving a high cycle characteristic, rate characteristic, and coulombic efficiency.

The zinc negative electrode mixture of the present invention may further include an additional component in addition to the zinc-containing compound and the conductive auxiliary agent. The additional component is different from the zinc-containing compound and the conductive auxiliary agent, and examples thereof include compounds having at least one element selected from the group consisting of elements in the groups 1 to 17 of the periodic table, organic compounds, and salts of organic compounds.

From the viewpoint of safety, batteries using a water-containing electrolyte solution as its electrolyte solution are more preferred than those using an organic solvent-type electrolyte solution. From the thermodynamic viewpoint, however, side reactions may usually occur, such as electrochemical reactions involved in charge and discharge and self-discharge in a charged state or during storage in a charged state, thereby decomposing water to generate hydrogen. In contrast, the zinc negative electrode mixture of the present invention containing, as an additional component, at least one selected from compounds having at least one element selected from the group consisting of elements in the groups 1 to 17 of the periodic table, organic compounds, and salts of organic compounds enables effective suppression of generation of hydrogen due to decomposition of water in charge and discharge even in batteries including a zinc electrode formed from the zinc negative electrode mixture of the present invention as its negative electrode and a water-containing electrolyte solution. It is also expected to suppress self-discharge during storage in a charged state, to suppress changes in form of an active material of the zinc electrode, to reduce the solubility of zinc species owing to salt formation with zinc species such as tetrahydroxozincate ions, to improve the affinity with water, to improve the anion conductivity, and to improve the electronic conductivity, thereby markedly improving the charge and discharge characteristics and the coulombic efficiency. In particular, the zinc negative electrode mixture of the present invention includes the zinc-containing compound and/or the conductive auxiliary agent containing particles having a small particle size equal to or smaller than the specific average particle size and/or long and narrow particles having the specific aspect ratio, as mentioned above. Thus, a zinc negative electrode formed from such a zinc negative electrode mixture allows batteries to have excellent performance. On the other hand, side reactions are difficult to thermodynamically completely stop, such as generation of hydrogen due to decomposition of water in charge and discharge or self-discharge in a charged state or during storage in a charged state, and dissolution of the zinc negative electrode active material. Thus, it is technically very important to combine the specific zinc-containing compound and/or conductive auxiliary agent as components of the zinc negative electrode mixture in the present invention with at least one selected from the group consisting of compounds having at least one element selected from the group consisting of elements in the groups 1 to 17 of the periodic table, organic compounds, and salts of organic compounds as an additional component.

It is also one preferable embodiment of the present invention that the zinc negative electrode mixture of the present invention further includes an additional component and the additional component contains at least one selected from the group consisting of compounds having at least one element selected from the group consisting of elements in the groups 1 to 17 of the periodic table, organic compounds, and salts of organic compounds.

For the zinc negative electrode mixture of the present invention further including such an additional component, the amount of the additional component is preferably 0.01 to 100% by mass for 100% by mass of the zinc-containing compound in the zinc negative electrode mixture. The amount thereof is more preferably 0.05 to 80% by mass, and still more preferably 0.1 to 60% by mass.

As mentioned here, it is also one preferable embodiment of the present invention that the zinc negative electrode mixture of the present invention further contains an additional component in an amount of 0.01 to 100% by mass for 100% by mass of the zinc-containing compound in the zinc negative electrode mixture.

With respect to at least one selected from the group consisting of compounds having at least one element selected from the group consisting of elements in the groups 1 to 17 of the periodic table, organic compounds, and salts of organic compounds included in the additional component, the proportion of one species corresponding to the compounds having at least one element selected from the group consisting of elements in the groups 1 to 17 of the periodic table, the organic compounds, or the salts of organic compounds included in the additional component is preferably 0.1% by mass or more, more preferably 0.5% by mass or more, and still more preferably 1.0% by mass or more, for 100% by mass of the whole of the additional component. The upper limit thereof is preferably 100% by mass.

The element in the compounds having at least one element selected from the group consisting of elements in the groups 1 to 17 of the periodic table is more preferably selected from those in the groups 1 to 7 and 12 to 17, more preferably those in the groups 2 to 7, 13 to 15, and 17, and most preferably those in the groups 2 to 7 and 13 to 15. Specifically, the element is preferably at least one selected from the group consisting of Al, B, Ba, Be, Bi, Ca, Ce, Cr, Cs, F, Ga, In, La, Mg, Mn, Nb, Nd, P, Pb, S, Sc, Se, Si, Sn, Sr, Sb, Te, Ti, Tl, V, Y, Yb, and Zr. The element is more preferably selected from the group consisting of Al, B, Ba, Bi, Ca, Ce, Cs, F, Ga, In, La, Mg, Nb, Nd, P, Pb, Sc, Se, Sn, Sr, Sb, Tl, Y, Yb, and Zr. The element is most preferably selected from the group consisting of Al, Ca, Ce, La, Nb, Nd, P, Sc, Y, and Zr.

The present inventors have found that the zinc negative electrode formed from the zinc negative electrode mixture containing the above element suppresses a side reaction of decomposing water in charge and discharge or dissolution of a zinc-containing negative electrode active material and improves a cycle characteristic, rate characteristic, and coulombic efficiency, and further suppresses self-discharge in a charged state or during storage in a charged state and markedly improves the storage stability. They have also found that such an electrode effectively suppresses changes in form and passivation of the zinc-containing negative electrode active material.

Examples of the compounds having at least one element selected from the group consisting of elements in the groups 1 to 17 of the periodic table include: oxides; complex oxides; layered double hydroxides; hydroxides; clay compounds; solid solutions; halides; carboxylate compounds; carbonates; hydrogen carbonates; nitrates; sulfates; sulfonic acid salts; silicic acid salts; phosphoric acid salts; phosphorous acid salts; hypophosphorous acid salts; boric acid salts; ammonium salts; sulfides; onium compounds; and hydrogen storage compounds, of the element.

Specific examples of the compounds having at least one element selected from the group consisting of elements in the groups 1 to 17 of the periodic table include aluminum oxide, barium oxide, bismuth oxide, bismuth-containing complex oxides, calcium oxide, calcium-containing complex oxides, cerium oxide, cerium-containing complex oxides, cesium oxide, gallium oxide, indium oxide, indium-containing complex oxides, lanthanum oxide, magnesium oxide, niobium oxide, neodymium oxide, lead oxide, phosphorus oxide, tin oxide, scandium oxide, antimony oxide, titanium oxide, manganese oxide, yttrium oxide, ytterbium oxide, zirconium oxide, zirconium oxide stabilized by scandium oxide, zirconium oxide stabilized by yttrium oxide, zirconium-containing complex oxides, barium hydroxide, calcium hydroxide, cerium hydroxide, cesium hydroxide, indium hydroxide, lanthanum hydroxide, magnesium hydroxide, tin hydroxide, antimony hydroxide, zirconium hydroxide, barium acetate, bismuth acetate, calcium acetate, calcium tartrate, calcium glutamate, cerium acetate, cesium acetate, gallium acetate, indium acetate, lanthanum acetate, magnesium acetate, niobium acetate, neodymium acetate, lead acetate, tin acetate, antimony acetate, tellurium acetate, bismuth sulfate, calcium sulfate, cerium sulfate, gallium sulfate, indium sulfate, lanthanum sulfate, lead sulfate, tin sulfate, antimony sulfate, tellurium sulfate, zirconium sulfate, calcium lignosulfonate, barium nitrate, bismuth nitrate, calcium nitrate, cerium nitrate, indium nitrate, lanthanum nitrate, magnesium nitrate, lead nitrate, tin nitrate, titanium nitrate, tellurium nitrate, zirconium nitrate, calcium phosphate, magnesium phosphate, barium phosphate, calcium borate, barium borate, layered double hydroxides (e.g. hydrotalcite), clay compounds, laponite, hydroxyapatite, solid solutions (e.g. cerium oxide-zirconium oxide), ettringite, and cement.

Compounds such as cerium hydroxide, zirconium hydroxide, layered double hydroxides (e.g. hydrotalcite), hydroxyapatite, and ettringite presumably not only suppress a side reaction of decomposing water in charge and discharge or during storage in a charged state in the zinc electrode and self-discharge, and dissolution of the zinc-containing negative electrode active material, but also improve the anion conductivity.

The compound having at least one element selected from the group consisting of elements in the groups 1 to 17 of the periodic table is preferably formed into nanoparticles having a small average particle size similarly to the zinc-containing compound and/or the conductive auxiliary agent because it more effectively suppresses side reactions occurring with the use of a water-containing electrolyte solution as an electrolyte solution. The compound having at least one element selected from the group consisting of elements in the groups 1 to 17 of the periodic table may be supported on, coprecipitated with, formed into an alloy with, formed into a solid solution with, or kneaded with at least one of the zinc-containing compound, the conductive auxiliary agent, the organic compounds, and the salts of organic compounds before or after preparation of the zinc negative electrode mixture or in preparation of the zinc negative electrode mixture. The compound may be prepared by the sol-gel process.

As mentioned here, the compound having at least one element selected from the group consisting of elements in the groups 1 to 17 of the periodic table preferably has an average particle size of 1000 µm or smaller, more preferably 200 µm or smaller, still more preferably 100 µm or smaller, particularly preferably 75 µm or smaller, and most preferably 20 µm or smaller. The lower limit of the average particle size is preferably 1 nm. The average particle size can be determined in the same manner as the average particle sizes of the zinc-containing compound and the conductive auxiliary agent.

Examples of the state of particles include fine powder, powder, particulates, granules, scales, polyhedrons, and rods. Particles having an average particle size within the aforementioned range can be produced by a method of grinding particles with, for example, a ball mill, dispersing the resulting coarse particles in a dispersant to give a predetermined particle size, and then dry-hardening the particles; a method of sieving the coarse particles to classify the particle sizes; a method of optimizing the conditions for producing the particles, thereby producing (nano)particles having a predetermined particle size; and the like methods.

The compound having at least one element selected from the group consisting of elements in the groups 1 to 17 of the periodic table preferably has a specific surface area of 0.01 m²/g or larger, more preferably 0.1 m²/g or larger, and still more preferably 0.5 m²/g or larger. The upper limit of the specific surface area is preferably 200 m²/g. The specific surface area can be determined in the same manner as the specific surface areas of the zinc-containing compound and the conductive auxiliary agent.

Examples of the organic compounds and the salts of organic compounds include poly(meth)acrylic acid moiety-containing polymers, poly(meth)acrylic acid salt moiety-containing polymers, poly(meth)acrylic acid ester moiety-containing polymers, poly(α-hydroxymethyl acrylic acid salt) moiety-containing polymers, poly(α-hydroxymethyl acrylic acid ester) moiety-containing polymers, polyacrylonitrile moiety-containing polymers, polyacrylamide moiety-containing polymers, polyvinyl alcohol moiety-containing polymers, polyethylene oxide moiety-containing polymers, polypropylene oxide moiety-containing polymers, polybutene oxide moiety-containing polymers, epoxy ring-opened moiety-containing polymers, polyethylene moiety-containing polymers, polypropylene moiety-containing polymers, polyisoprenol moiety-containing polymers, polymetallyl alcohol moiety-containing polymers, polyallyl alcohol moiety-containing polymers, polyisoprene moiety-containing polymers, aromatic ring moiety-containing polymers (e.g. polystyrene), polymaleimide moiety-containing polymers, polyvinylpyrrolidone moiety-containing polymers, polyacetylene moiety-containing polymers, ketone moiety-containing polymers, ether moiety-containing polymers, sulfide group-containing polymers, sulfone group-containing polymers, carbamate group-containing polymers, thiocarbamate group-containing polymers, carbamide group-containing polymers, thiocarbamide group-containing polymers, thiocarboxylic acid (salt) group-containing polymers, ester group-containing polymers, cyclopolymerized moiety-containing polymers, lignin, synthetic rubbers (e.g. styrene-butadiene rubber (SBR)), agar, betaine moiety-containing compounds (e.g. amino), cellulose, cellulose acetate, hydroxyalkyl cellulose, carboxymethyl cellulose, hydroxyethyl cellulose, ethylene glycol, polyethylene glycol chain-containing compounds, polypropylene glycol chain-containing compounds, polybutene glycol chain-containing compounds, polyacetylene moiety-containing polymers, amino group-containing polymers (e.g. polyethylene imine), polyamide moiety-containing polymers, polypeptide moiety-containing polymers, polytetrafluoroethylene moiety-containing polymers, polyvinylidene fluoride moiety-containing polymers, poly(anhydrous) maleic acid moiety-containing polymers, polymaleic acid salt moiety-containing polymers, poly(anhydrous) itaconic acid moiety-containing polymers, polyitaconic acid salt moiety-containing polymers, polymethyleneglutaric acid moiety-containing polymers, polymethyleneglutaric acid salt moiety-containing polymers, ion-exchangeable polymers to be used for cation-anion exchange membranes, sulfonic acid salts, sulfonic acid salt moiety-containing polymers, quaternary ammonium salts, quaternary ammonium salt moiety-containing polymers, quaternary phosphonium salts, quaternary phosphonium salt moiety-containing polymers, isocyanic acid moiety-containing polymers, isocyanate group-containing polymers, thioisocyanate group-containing polymers, imide moiety-containing polymers, epoxy moiety-containing polymers, oxetane moiety-containing polymers, hydroxy moiety-containing polymers, heterocycle and/or ionized heterocycle moiety-containing polymers, polymer alloys, hetero atom-containing polymers, and low molecular weight surfactants. One of the organic compounds and the salts of organic compounds may be used, or two or more of them may be used. In the case where a polymer is used as the organic compound or the salt of an organic compound, the functional group of each polymer may exist at the main chain or at a side chain, and the main chain may be partially cross-linked.

In the case where a polymer is used as the organic compound or the salt of an organic compound, the polymer may be produced by polymerizing a monomer which corresponds to the structural unit of the polymer by, for example, radical polymerization, radical (alternating) copolymerization, anionic polymerization, anionic (alternating) copolymerization, cationic polymerization, cationic (alternating) copolymerization, graft polymerization, graft (alternating) copolymerization, living polymerization, living (alternating) copolymerization, dispersion polymerization, emulsion polymerization, suspension polymerization, ring-opening polymerization, cyclopolymerization, or light-, UV-, or electron beam-applying polymerization. In polymerization, particles of the zinc-containing compound, particles of the conductive auxiliary agent, and a compound having at least one element selected from the group consisting of elements in the groups 1 to 17 of the periodic table may be introduced into the polymer and/or on the surface of the polymer to form a single species of particles. The polymer may cause reactions such as hydrolysis in the electrolyte solution.

The organic compound and the salt of an organic compound are expected to serve as materials for achieving effects of improving the dispersibility of particles; of suppressing changes in form and passivation of binding agents which bind the particles or bind the particles and a collector, thickening agents, and the active material of the zinc electrode; of suppressing dissolution of the zinc electrode active material; of improving the hydrophilic-lipophilic balance; of improving the anion conductivity; and of improving the electronic conductivity, for example. With a water-containing electrolyte solution, the organic compound and the salt of an organic compound also have functions of suppressing a thermodynamically usually possible side reaction of decomposing water to generate hydrogen in charge and discharge, changes in form, passivation, and corrosion of the zinc electrode active material, and self-discharge in a charged state or during storage in a charged state; and of markedly improving the charge and discharge characteristics, the coulombic efficiency, and the storage stability of batteries. One factor of these effects is presumably derived from, for example, the fact that the organic compound and the salt of an organic compound suitably cover the surface of the zinc-containing compound or adsorb thereto, or they chemically interact with the zinc-containing compound. These effects of the organic compound and the salt of an organic compound are novel findings in the present invention.

The zinc negative electrode mixture of the present invention can be prepared by mixing, in addition to the zinc-containing compound and the conductive auxiliary agent, at least one selected from the group consisting of compounds having at least one element selected from the group consisting of elements in the groups 1 to 17 of the periodic table, organic compounds, and salts of organic compounds as appropriate. The mixing may be performed using a device such as a mixer, a blender, a kneader, a bead mill, a ready mill, and a ball mill. In the mixing, water, an organic solvent such as methanol, ethanol, propanol, isopropanol, tetrahydrofuran, and N-methylpyrrolidone, or a solvent mixture of water and an organic solvent may be added. After the mixing, particles may be put through a sieve, for example, to make all the particles have a predetermined particle size. The mixing may be a wet process in which liquid components such as water and an organic solvent are added to solid components, or may be a dry process performed only using solid components without adding liquid components. In the case of the wet process, the mixture may be dried so that liquid components such as water or an organic solvent are removed. The wet process and the dry process may be combined. For example, the zinc-containing compound and the compound having at least one element selected from the group consisting of elements in the groups 1 to 17 of the periodic table are mixed through the wet process, then the mixture is dried so that liquid components are removed to provide a solid mixture, and finally the solid mixture and the conductive auxiliary agent are mixed through the dry process to prepare the zinc negative electrode mixture.

The zinc electrode of the present invention is formed from the zinc negative electrode mixture of the first aspect of the present invention. Such a zinc electrode formed from the zinc negative electrode mixture of the first aspect of the present invention is also one aspect of the present invention. The zinc electrode of the present invention is preferably used as a negative electrode. The zinc electrode of the present invention used as a negative electrode is also referred to as the zinc negative electrode of the present invention hereinbelow.

The zinc negative electrode of the present invention can improve the cycle characteristic, rate characteristic, and coulombic efficiency of batteries.

The zinc negative electrode may be produced as follows, for example.

The zinc negative electrode mixture of the present invention is prepared as a slurry or a paste mixture by the aforementioned preparation method. Then, the slurry or the paste mixture obtained is applied, press-applied, or bonded onto a collector so as to make the thickness as uniform as possible.

Examples of the collector include copper foil, electrolytic copper, copper foil combined with an element such as Ni, Sn, Pb, Hg, Bi, In, Tl and carbon, copper foil plated with an element such as Ni, Sn, Pb, Hg, Bi, In, Tl, and carbon, copper mesh, copper mesh combined with an element such as Ni, Sn, Pb, Hg, Bi, In, Tl, and carbon, copper mesh plated with an element such as Ni, Sn, Pb, Hg, Bi, In, Tl, and carbon, copper foam, copper foam combined with an element such as Ni, Sn, Pb, Hg, Bi, In, Tl, and carbon, copper foam plated with an element such as Ni, Sn, Pb, Hg, Bi, In, Tl, and carbon, copper alloy, nickel foil, nickel mesh, corrosion-resistant nickel, nickel mesh combined with an element such as Sn, Pb, Hg, Bi, In, Tl, and carbon, nickel mesh plated with an element such as Sn, Pb, Hg, Bi, In, Tl, and carbon, zinc metal, corrosion-resistant zinc metal, zinc metal combined with an element such as Ni, Sn, Pb, Hg, Bi, In, Tl, and carbon, zinc metal plated with an element such as Ni, Sn, Pb, Hg, Bi, In, Tl, and carbon, zinc foil, zinc foil combined with an element such as Ni, Sn, Pb, Hg, Bi, In, Tl, and carbon, zinc foil plated with an element such as Ni, Sn, Pb, Hg, Bi, In, Tl, and carbon, zinc mesh, zinc mesh combined with an element such as Ni, Sn, Pb, Hg, Bi, In, Tl, and carbon, zinc mesh plated with an element such as Ni, Sn, Pb, Hg, Bi, In, Tl, and carbon, silver, and collector materials used for alkaline batteries and zinc-air batteries.

The slurry or the paste mixture may be applied or press-applied onto one face of the collector, or may be applied, press-applied, or bonded onto both faces. They are dried at 0°C to 250°C during the application and/or after the application. The drying temperature is more preferably 15°C to 200°C. The drying may be performed in vacuo. The drying time is preferably 5 minutes to 48 hours. The application and the drying may be repeated. After the drying, the workpiece is preferably pressed at 0.01 to 20 t using, for example, a roll press. The pressure is more preferably 0.1 to 15 t. The temperature upon pressing may be 10°C to 500°C.

Especially, in the case of using the zinc negative electrode (zinc mixture electrode) thus obtained as a negative electrode for a secondary battery, the electrode suppresses, at maximum, concentration of currents and decomposition of water in the zinc negative electrode, thereby suppressing deterioration of the electrode active material due to changes in form, such as shape change and formation of dendrite, dissolution, corrosion, and passivation, generation of hydrogen and oxygen in charge and discharge, and self-discharge in a charged state or during storage in a charged state.

The thickness of the zinc negative electrode is preferably 1 nm to 1000 µm from the viewpoints of battery structure and suppression of separation of the active material from the collector. The thickness is more preferably 10 nm to 100 µm, and still more preferably 20 nm to 50 µm.

A battery using the zinc electrode of the present invention can use a water-containing electrolyte solution as its electrolyte solution, and thus can have high safety.

A battery using the zinc electrode of the present invention as its negative electrode may be in the form of a primary battery; a secondary battery (storage battery) capable of charge and discharge; a battery utilizing mechanical charge (mechanical exchange of zinc negative electrodes); and a battery utilizing a third electrode (e.g. an electrode removing oxygen generated in charge and discharge) which is different from the zinc negative electrode of the present invention and a positive electrode formed from a positive electrode active material to be mentioned later. The battery is preferably in the form of a secondary battery (storage battery).

As mentioned here, the battery including the zinc electrode of the present invention is also one aspect of the present invention. The battery including the zinc electrode formed from the zinc negative electrode mixture of the first aspect of the present invention is also referred to as a first battery of the present invention.

A battery formed utilizing two or more of the first to third aspects of the present invention is also one aspect of the present invention.

The battery of the present invention may further include a positive electrode active material and an electrolyte solution in addition to the zinc negative electrode. The electrolyte solution is preferably a water-containing electrolyte solution to be mentioned later.

The battery including the zinc negative electrode of the present invention, a positive electrode active material, and a water-containing electrolyte solution is also one aspect of the present invention. The battery of the present invention may contain one species of each component or two or more species of each component.

The positive electrode active material may be any of those usually used as the positive electrode active material for primary batteries and secondary batteries. Examples thereof include oxygen (in the case where oxygen serves as a positive electrode active material, the positive electrode is an air electrode formed from a compound capable of reducing oxygen and oxidizing water, such as perovskite compounds, cobalt-containing compounds, iron-containing compounds, copper-containing compounds, manganese-containing compounds, vanadium-containing compounds, nickel-containing compounds, iridium-containing compounds, and platinum-containing compounds); nickel-containing compounds such as nickel oxide hydroxide, nickel hydroxide, and cobalt-containing nickel hydroxide; manganese-containing compounds such as manganese dioxide; silver oxide, lithium cobaltate, lithium manganate, and lithium iron phosphate.

Batteries using the zinc negative electrode mixture of the present invention in which the positive electrode active material is a nickel-containing compound are one preferable embodiment of the present invention.

Batteries using the zinc negative electrode mixture of the present invention in which the positive electrode active material is oxygen, such as air batteries and fuel batteries, are also one preferable embodiment of the present invention. In other words, the battery of the present invention which further satisfies that the positive electrode is an electrode capable of reducing oxygen is also one preferable embodiment of the present invention.

Any electrolyte solution usually used as an electrolyte solution of batteries may be used. Examples thereof include water-containing electrolyte solutions and organic-solvent-type electrolyte solutions, and water-containing electrolyte solutions are preferred. The water-containing electrolyte solution herein means an electrolyte solution (aqueous electrolyte solution) containing only water as the electrolyte solution material and an electrolyte solution containing a liquid mixture of water and an organic solvent as the electrolyte solution material.

Examples of the aqueous electrolyte solution include a potassium hydroxide aqueous solution, a sodium hydroxide aqueous solution, and a lithium hydroxide aqueous solution. As mentioned here, any electrolyte may be used. In the case of an aqueous electrolyte solution, it is preferably a compound generating hydroxide ions which provide ion conduction in the system. From the viewpoint of the ion conductivity, a potassium hydroxide aqueous solution is preferred. One aqueous electrolyte solution may be used, or two or more thereof may be used.

Examples of the organic solvent used in the organic-solvent-type electrolyte solution include ethylene carbonate, propylene carbonate, dimethyl carbonate, diethyl carbonate, γ-butyrolactone, dimethoxy methane, diethoxy methane, dimethoxy ethane, tetrahydrofuran, methyl tetrahydrofuran, diethoxy ethane, dimethyl sulfoxide, sulfolane, acetonitrile, benzonitrile, ionic liquid, fluorine-containing carbonates, fluorine-containing ethers, polyethylene glycols, and fluorine-containing polyethylene glycols. One organic-solvent-type electrolyte solution may be used, or two or more thereof may be used. Any electrolyte may be used in the organic-solvent-type electrolyte solution, and preferable examples thereof include LiPF₆, LiBF₄, LiB(CN)₄, lithium bis(fluorosulfonyl)imide (LiFSI), and lithium bis(trifluoromethyl sulfonyl)imide (LiTFSI).

For a water-containing electrolyte solution containing an organic-solvent-type electrolyte solution, the amount of the aqueous electrolyte solution is preferably 10 to 99.9% by mass, and more preferably 20 to 99.9% by mass for 100% by mass of the sum of the amounts of the aqueous electrolyte solution and the organic-solvent-type electrolyte solution.

With respect to the concentration of the electrolyte solution, the concentration of the electrolyte (e.g. potassium hydroxide) is preferably 0.01 to 50 mol/L. The electrolyte solution having such a concentration allows for achievement of good battery performance. The concentration is more preferably 1 to 20 mol/L, and still more preferably 3 to 18 mol/L. In the case of using the following water-containing electrolyte solution in a primary battery or a secondary battery using the water-containing electrolyte solution with a zinc-containing compound used as its negative electrode, the electrolyte solution is preferably combined with at least one zinc compound selected from the group consisting of zinc oxide, zinc hydroxide, zinc phosphate, zinc pyrophosphite, zinc borate, zinc silicate, zinc aluminate, zinc metal, and tetrahydroxozincate ion salts. This makes it possible to further suppress generation and growth of changes in form, such as shape change and formation of dendrite, and passivation of the electrode active material involved in dissolution of the zinc electrode active material in charge and discharge, and self-discharge in a charged state or during storage in a charged state. In this case, the at least one element selected from the group consisting of elements in the groups 1 to 17 of the periodic table is an element except for zinc. The zinc compound preferably exists in the electrolyte solution at a concentration of 0.0001 mol/L to saturated concentration.

The electrolyte solution may or may not be circulated.

The electrolyte solution may contain an additive. In the case of an aqueous electrolyte solution, the additive suppresses a thermodynamically usually possible side reaction of decomposing water to generate hydrogen in charge and discharge, changes in form, passivation, dissolution, and corrosion of the zinc electrode active material, and self-discharge in a charged state or during storage in a charged state, and also serves to markedly improve the charge and discharge characteristics and the coulombic efficiency. This is presumably because the additive suitably interacts with the surface of zinc oxide to suppress side reactions, changes in form, passivation, dissolution, and corrosion of the zinc electrode active material, and self-discharge.

In the case of an aqueous electrolyte solution using potassium hydroxide as its electrolyte, examples of the additive include lithium hydroxide, sodium hydroxide, rubidium hydroxide, cesium hydroxide, magnesium hydroxide, barium hydroxide, calcium hydroxide, strontium hydroxide, magnesium oxide, barium oxide, calcium oxide, strontium oxide, strontium acetate, magnesium acetate, barium acetate, calcium acetate, bismuth oxide, lithium fluoride, sodium fluoride, potassium fluoride, rubidium fluoride, cesium fluoride, beryllium fluoride, magnesium fluoride, calcium fluoride, strontium fluoride, barium fluoride, potassium acetate, boric acid, potassium metaborate, potassium borate, hydrogen potassium borate, calcium borate, fluoroboric acid, phosphoric acid, potassium phosphate, potassium pyrophosphate, potassium phosphite, potassium oxalate, potassium silicate, potassium sulfide, potassium sulfate, thiopotassium sulfate, titanium oxide, zirconium oxide, aluminum oxide, lead oxide, tellurium oxide, tin oxide, indium oxide, trialkyl phosphoric acid, quaternary ammonium salt-containing compounds, quaternary phosphonium salt-containing compounds, carboxylic acid salt-containing compounds, polyethylene glycol chain-containing compounds, chelating agents, polymers, gel compounds, low molecular weight organic compounds having a carboxylate group and/or a sulfonic acid base and/or a sulfinic acid base and/or a quaternary ammonium salt and/or a quaternary phosphonium salt and/or a polyethylene glycol chain and/or a halogen group such as fluorine, surfactants, and polymers and gel compounds containing the organic compounds and the salts of organic compounds.

The compound having at least one element selected from the group consisting of elements in the groups 1 to 17 of the periodic table may be added to the electrolyte solution. One additive may be used or two or more additives may be used.

In the case of using a water-containing electrolyte solution, including the case of making an organic-solvent-type electrolyte solution co-exist, the dissolved oxygen concentration (mg/L) (at 25°C) of only the aqueous electrolyte solution is preferably not higher than the α value calculated by the formula α = -0.26375 × β + 8.11 (β is the hydroxide ion concentration <mol/L> in the aqueous electrolyte solution). More preferably, the dissolved oxygen concentration is as close to 0 mg/L as possible. A reduced dissolved oxygen concentration suppresses dissolution of the zinc electrode active material into the electrolyte solution, thereby suppressing changes in form, dissolution, corrosion, and passivation of the zinc electrode active material and lengthening the electrode life. The dissolved oxygen concentration can be reduced to a predetermined value or lower by operation such as deaeration of the electrolyte solution or a solvent used for the electrolyte solution, or bubbling of inert gas such as nitrogen or argon. In the case of a strongly alkaline aqueous solution-containing electrolyte solution, dissolved carbon dioxide is preferably removed simultaneously through the above operation because contamination of carbon dioxide causes generation of a large amount of carbonates, thereby reducing the conductivity and affecting the storage battery performance. The formula relating to the dissolved oxygen concentration is derived from the state of dissolved oxygen and the state of corrosion of zinc metal. The value 8.11 in the formula is the saturated solubility of oxygen in pure water (25°C). Further, a predetermined concentration (25°C) of oxygen is dissolved into 4M and 8M KOH aqueous solutions to prepare 4M and 8M KOH aqueous solutions (with a predetermined dissolved oxygen concentration), and zinc metal is immersed into these solutions. The presence of corrosion is observed using an SEM to lead to the formula. A dissolved oxygen concentration not higher than the α value suppresses the reaction represented by the formula Zn+1/2O₂+H₂O → Zn(OH)₂, thereby presumably suppressing corrosion.

The battery of the present invention may further include a separator. The separator is a component for separating the positive electrode and the negative electrode and holding the electrolyte solution to secure the ion conductivity between the positive electrode and the negative electrode. In storage batteries using the zinc negative electrode, the separator also functions to suppress deformation of the zinc electrode active material and formation of dendrite, to wet the positive and negative electrodes, and to avoid lack of the liquid.

Any separator may be used, and examples thereof include nonwoven fabrics, filter paper, polyethylene, polypropylene, polytetrafluoroethylene, polyvinylidene fluoride, cellulose, fibrillar cellulose, viscose rayon, cellulose acetate, hydroxyalkyl cellulose, carboxymethyl cellulose, polyvinyl alcohol, cellophane, polystyrene, polyacrylonitrile, polyacrylamide, polyvinyl chloride, polyamide, polyimide, vinylon, nylon, microporous polymers such as poly(meth)acrylic acid and copolymers thereof, agar, gel compounds, organic-inorganic hybrid (composite) compounds, ion-exchange membranous polymers and copolymers thereof, cyclopolymers and copolymers thereof, poly(meth)acrylic acid salt-containing polymers and copolymers thereof, sulfonic acid salt-containing polymers and copolymers thereof, quaternary ammonium salt-containing polymers and copolymers thereof, quaternary phosphonium salt polymers and copolymers thereof, and inorganic materials such as ceramics.

The separator may contain the compound having at least one element selected from the group consisting of elements in the groups 1 to 17 of the periodic table.

One separator may be used or two or more separators may be used. Without an increase in the resistance and deterioration in the battery performance, any number of separators may be used. The separator may have pores, micropores, or a gas diffusion layer.

As mentioned above, a battery including a zinc electrode prepared from the zinc negative electrode mixture is also one aspect of the present invention. The battery more preferably includes a zinc negative electrode prepared from the zinc negative electrode mixture. The positive electrode is preferably a nickel electrode or an air electrode. The following will exemplify a nickel electrode and describe the structure of a nickel-zinc storage battery.

The nickel-zinc battery includes the zinc negative electrode, a nickel positive electrode, a separator for separating the positive electrode and the negative electrode, an electrolyte or an electrolyte solution, an assembly including them, and a container.

Any nickel electrode may be used. For example, nickel electrodes used in nickel-hydrogen batteries, nickel-metal hydride batteries (Ni-hydrogen storage alloy batteries), and nickel-cadmium batteries may be used. The inner walls of the assembly and the container are formed from a material which is not deteriorated by corrosion or reactions in charge and discharge. Containers used for alkaline batteries and zinc-air batteries may be used. The storage battery may be of a cylindrical type such as D size, C size, AA size, AAA size, N size, AAAA size, R123A, and R-1/3N; a square type such as 9V size and 006P size; a button type; a coin type; a laminate type; a stacked type; a type in which rectangular positive and negative plates are alternately interposed between pleated separators; a closed type; an open type; or a vented cell type. The battery may have a portion for reserving gas generated in charge and discharge.

Next, the following will describe the gel electrolyte of the second aspect of the present invention and the negative electrode mixture of the third aspect of the present invention.

The aforementioned effects of the present invention of suppressing changes in form, such as shape change and formation of dendrite, dissolution, corrosion, and passivation of the electrode active material and achieving good battery performance such as a high cycle characteristic, rate characteristic, and coulombic efficiency can be provided by making either of the gel electrolyte of the second aspect of the present invention or the negative electrode mixture of the third aspect of the present invention. Combination of the second aspect of the present invention and the third aspect of the present invention is also naturally one embodiment of the present invention.

The second aspect of the present invention is described at first, and then the third aspect of the present invention is described.

The gel electrolyte of the second aspect of the present invention has a cross-linked structure formed by a multivalent ion and/or an inorganic compound. In other words, the gel electrolyte has a cross-linked structure therein, and the cross-linked structure is cross-linked by a multivalent ion and/or an inorganic compound. For each of the multivalent ion and the inorganic compound, one species may be used or two or more species may be used.

The element of the multivalent ion is more preferably Mg, Ca, Sr, Ba, Sc, Y, La, Ce, Yb, Ti, Zr, Nb, Nd, Cr, Mo, W, Mn, Co, B, Al, Ga, In, Tl, Si, Ge, Sn, P, Sb, or Bi.

The multivalent ion is an anion or a cation generated by introducing any of substances containing a multivalent ion element, such as oxides; complex oxides; layered double hydroxides such as hydrotalcite; hydroxides; clay compounds; solid solutions; halides; carboxylate compounds; carbonic acid compounds; hydrogen carbonate compounds; nitric acid compounds; sulfuric acid compounds; sulfonic acid compounds; phosphoric acid compounds; phosphorus acid compounds; hypophosphorous acid compounds; boric acid compounds; silicic acid compounds; aluminic acid compounds; sulfides; onium compounds; and salts, into an electrolyte solution material, an electrolyte solution, a gel electrolyte, or the like. The anion or cation may be generated as a result of dissolution of part or the whole of a compound including the multivalent ion element into an electrolyte solution material, an electrolyte solution, a gel electrolyte, or the like. In the case where the compound including the multivalent ion element is insoluble, such a compound is introduced into an electrolyte solution material, an electrolyte solution, a gel electrolyte, or the like, and then the anion or cation may be generated on part of the compound, such as its surface. The multivalent ion may be generated in the gel electrolyte from the element-containing compound which serves as a precursor. In the case where the gel electrolyte of the present invention contains a polymer, the multivalent ion may be derived from the polymer.

As will be mentioned later, the gel electrolyte of the present invention containing a polymer may be produced by cross-linking resulting from an interaction, including covalent bond and coordination bond, and non-covalent interactions such as ionic bond, hydrogen bond, n bond, van der Waals bond, and agostic interaction, between the multivalent ion and a functional group existing mainly in the polymer.

The gel electrolyte of the present invention without a polymer may also be produced. This case only requires co-existence of the multivalent ion and an inorganic compound to be mentioned later in an electrolyte solution. Presumably, the multivalent ions as well as ions in the electrolyte solution more suitably cross-link the inorganic compound. In this case, the element of the multivalent ion and the element in the inorganic compound may be the same or different, and they each preferably contain at least one element different from those in the others.

The ratio by mass of the multivalent ion to the inorganic compound is preferably 50000/1 to 1/100000.

Examples of the inorganic compound include alkali metals and alkaline earth metals; and substances containing at least one element selected from the group consisting of Sc, Y, lanthanoids, Ti, Zr, Hf, V, Nb, Ta, Cr, Mo, W, Mn, Re, Fe, Ru, Co, Rh, Ir, Ni, Pd, Pt, Cu, Ag, Au, Zn, Cd, B, Al, Ga, In, Tl, Si, Ge, Sn, Pb, P, As, Sb, Bi, S, Se, Te, F, Cl, Br, and I, such as oxides; complex oxides; layered double hydroxides such as hydrotalcite; hydroxides; clay compounds; solid solutions; zeolites; halides; carboxylate compounds; carbonic acid compounds; hydrogen carbonate compounds; nitric acid compounds; sulfuric acid compounds; sulfonic acid compounds; phosphoric acid compounds such as hydroxyapatite; phosphorus acid compounds; hypophosphorous acid compounds; boric acid compounds; silicic acid compounds; aluminic acid compounds; sulfides; onium compounds; and salts. Preferable are oxides; complex oxides; layered double hydroxides such as hydrotalcite; hydroxides; clay compounds; solid solutions; zeolites; fluorides; phosphoric acid compounds such as hydroxyapatite; boric acid compounds; silicic acid compounds; aluminic acid compounds; and salts, each containing at least one element selected from the group consisting of the above elements.

The hydrotalcite is a compound represented by the formula:

[M¹₁₋ₓM²ₓ(OH)₂] (Aⁿ⁻)_{x/n}·mH₂O

wherein M¹ represents an element such as Mg, Fe, Zn, Ca, Li, Ni, Co, and Cu; M² represents an element such as Al, Fe, and Mn; A represents, for example, CO₃²⁻; m is a positive number not smaller than 0; and n is approximately 0.20 ≤ x ≤ 0.40. Any of compounds dehydrated by sintering at 150°C to 900°C, compounds with interlayer anions decomposed, compounds with interlayer anions exchanged into ions such as hydroxide ions, natural minerals represented by Mg₆Al₂(OH)₁₆CO₃·mH₂O, and the like may also be used as the inorganic compound. For a hydrotalcite-containing gel electrolyte without a polymer and an oligomer, it is preferable to co-exist a multivalent ion and/or an inorganic compound except the hydrotalcite, or to use hydrotalcite satisfying n = 0.33.

The hydroxyapatite is a compound represented by Ca₁₀(PO₄)₆(OH)₂. Any of compounds with a reduced Ca content owing to the preparation conditions and hydroxyapatite compounds with an element except Ca introduced therein may also be used as the inorganic compound.

The inorganic compound may be generated in the gel electrolyte with a compound containing the element used as a precursor. The inorganic compound introduced into an electrolyte solution material, an electrolyte solution, a gel electrolyte, or the like may be in the dissolved state, dispersed state (e.g. colloidal state), insoluble state, or the like. Preferably, part of the surface thereof is positively or negatively charged. The charged state of particles can be assumed by, for example, zeta potential measurement. As will be mentioned later, the gel electrolyte of the present invention containing a polymer may be produced by cross-linking resulting from an interaction, including covalent bond and coordination bond, and non-covalent interactions such as ionic bond, hydrogen bond, n bond, van der Waals bond, and agostic interaction, between the inorganic compound and a functional group existing mainly in the polymer. The gel electrolyte of the present invention without a polymer may also be produced. This case only requires existence of the inorganic compound in an electrolyte solution. Presumably, ions in the electrolyte solution and the inorganic compound are more suitably cross-linked. In this case, the multivalent ion may be contained. The element of the multivalent ion and the element in the inorganic compound may be the same or different, and they each preferably contain at least one element different from those in the others. With a layered compound such as hydrotalcite, a polymer is formed between the layers, resulting in a cross-linked state in some cases. The inorganic compound may be used such that part of the surface is not positively nor negatively charged (corresponding to an isoelectric point) when introduced into an electrolyte solution material, an electrolyte solution, a gel electrolyte, or the like. In this case, a preferable driving force for forming the gel electrolyte is not an electric interaction but a coordination bond, for example.

Specific examples of the inorganic compound include compounds containing elements of the multivalent ion. Whether such a compound generates ions and the ions serve as multivalent ions to form cross-linking or such a compound serves as an inorganic compound to form cross-linking as mentioned above depends on an electrolyte solution material, an electrolyte solution, a gel electrolyte, or the like to be used. In either case, the cross-linking structure is formed.

With the aforementioned water-containing electrolyte solution used as an electrolyte solution for preparing the gel electrolyte of the present invention, the compound generating the multivalent ion and the inorganic compound contribute to a high ion conductivity and permeability to gases generated in charge and discharge, suppress a thermodynamically usually possible side reaction of generating hydrogen and oxygen due to decomposition of water and changes in form, dissolution, and corrosion of the active material, and markedly improve the charge and discharge characteristics and the coulombic efficiency. This may presumably be attributed to suitable interactions of the multivalent ion and the inorganic compound with the surface of the negative electrode and suppression of diffusion of the zinc-containing compound.

The gel electrolyte may consist of a multivalent ion and/or an inorganic compound, and an electrolyte solution, or may further contain a polymer and/or an oligomer. The oligomer and/or the polymer contained in the gel electrolyte have/has a cross-linked structure formed by the multivalent ion and/or the inorganic compound. Presumably, use of such a gel electrolyte contributes to effective, physical and chemical suppression of diffusion of ions inside the electrode and/or its surface, thereby suppressing changes in form, such as shape change and formation of dendrite, dissolution, and corrosion of the electrode active material. Further, use of such a gel electrolyte provides an effect of suppressing passivation and self-discharge in a charged state or during storage in a charged state. Such an effect of suppressing passivation and self-discharge may also presumably be attributed to the functions of the above gel electrolyte. A storage battery produced using such a gel electrolyte is capable of achieving a high cycle characteristic, rate characteristic, and coulombic efficiency while maintaining a high electrical conductivity. Thus, the gel electrolyte of the present invention can be used in any of electrochemical devices such as primary batteries, secondary batteries (storage batteries), capacitors, and hybrid capacitors, and is preferably used in storage batteries.

The term "polymer" hereinbelow includes an oligomer.

It is one preferable embodiment of the present invention that the gel electrolyte contains a polymer. Preferably, the polymer used in the gel electrolyte is in a gel state and is formed into gel by covalent bond, coordination bond, or a non-covalent interaction such as ionic bond, hydrogen bond, n bond, and van der Waals bond. The polymer is more preferably one forming a cross-linking structure by functional groups in the polymer and the multivalent ion and/or the inorganic compound. Such a polymer is in a gel state, and the gel electrolyte contains an electrolyte solution as will be mentioned later. In conventional cases, the cross-linking moieties of the polymer are likely to be decomposed by the acidic condition or basic condition due to the electrolyte solution and/or the electrically loaded condition, and dissolved into the electrolyte solution, resulting in gradual deterioration of the gel electrolyte. In contrast, existence of a multivalent ion and/or an inorganic compound allows the functional groups in the polymer to serve as cross-link points owing to the multivalent ion and/or the inorganic compound, thereby suppressing the deterioration. In addition, the polymer is allowed to have a cross-linked structure formed by the multivalent ion and/or the inorganic compound, thereby forming a gel-like compound achieving good battery characteristics. This enables sufficient suppression of deterioration of the gel electrolyte, resulting in suppression of changes in form, such as shape change and formation of dendrite, dissolution, corrosion, and passivation of the electrode active material; continuous, effective suppression of self-discharge in a charged state or during storage in a charged state; and keeping of high battery performance for a longer time.

Examples of the polymer used in the gel electrolyte include aromatic group-containing polymers such as polystyrene; ether group-containing polymers such as alkylene glycol; hydroxy group-containing polymers such as polyvinyl alcohol and poly(α-hydroxymethyl acrylic acid salts); amide bond-containing polymers such as polyamide, nylon, polyacrylamide, polyvinylpyrrolidone, and N-substituted polyacrylamide; imide bond-containing polymers such as polymaleimide; carboxyl group-containing polymers such as poly(meth)acrylic acid, polymaleic acid, polyitaconic acid, and polymethyleneglutaric acid; carboxylic acid salt-containing polymers such as poly(meth)acrylic acid salts, polymaleic acid salts, polyitaconic acid salts, and polymethyleneglutaric acid salts; halogen-containing polymers such as polyvinyl chloride, polyvinylidene fluoride, and polytetrafluoroethylene; polymers bonded by ring opening of epoxy groups such as epoxy resin; sulfonic acid salt moiety-containing polymers; quaternary ammonium salts and quaternary phosphonium salt-containing polymers such as polymers having a group represented by AR¹R²R³B (wherein A is N or P; B is a halogen anion or an anion such as OH⁻; R¹, R², and R³ are the same or different, and each are a C1-C7 alkyl group, hydroxyalkyl group, alkyl carboxyl group, or aromatic ring; R¹, R², and R³ may bond to form a ring structure) bonded thereto; ion-exchangeable polymers such as those used for cation-anion exchange membranes; natural rubber; synthetic rubber such as styrene-butadiene rubber (SBR); saccharides such as cellulose, cellulose acetate, hydroxyalkyl cellulose, carboxymethyl cellulose, and hydroxyethyl cellulose; amino group-containing polymers such as polyethylene imine; carbamate moiety-containing polymers; carbamide moiety-containing polymers; epoxy moiety-containing polymers, heterocycle and/or ionized heterocycle moiety-containing polymers, polymer alloys, and hetero atom-containing polymer. The polymer is obtainable from the monomer corresponding to the structural unit by radical polymerization, radical (alternating) copolymerization, anionic polymerization, anionic (alternating) copolymerization, cationic polymerization, cationic (alternating) copolymerization, graft polymerization, graft (alternating) copolymerization, living polymerization, living (alternating) copolymerization, dispersion polymerization, emulsion polymerization, suspension polymerization, ring-opening polymerization, cyclopolymerization, and polymerization by light, UV, or electron beam application. Such a polymer may have a functional group in its main chain and/or side chain, or may have a functional group as a bonding moiety with a cross-linker. One polymer may be used, or two or more polymers may be used. The polymer may be cross-linked by an organic cross-linker compound other than the multivalent ion and/or the inorganic compound via a bond such as ester bond, amide bond, ionic bond, van der Waals bond, agostic interaction, hydrogen bond, acetal bond, ketal bond, ether bond, peroxide bond, carbon-carbon bond, carbon-nitrogen bond, carbamate bond, thiocarbamate bond, carbamide bond, thiocarbamide bond, oxazoline moiety-containing bond, and triazine bond.

The polymer preferably has a weight average molecular weight of 200 to 7000000. The polymer with a weight average molecular weight within such a range sufficiently forms a gel electrolyte. The weight average molecular weight is more preferably 400 to 6500000, and still more preferably 500 to 50000000. Adjustment of the molecular weight of the polymer or use of multiple polymers having different molecular weights or different types of polymers enables adjustment of the strength of a gel electrolyte to be formed; in addition, this makes it possible to suppress changes in form, such as shape change and formation of dendrite, dissolution, corrosion, and passivation of the electrode active material, to suppress self-discharge in a charged state or during storage in a charged state, and to achieve a high cycle characteristic, rate characteristic, and coulombic efficiency at best while maintaining a high ion conductivity. It is also possible to transport the hydrogen and oxygen generated by side reactions at the positive electrode or the negative electrode toward the counter electrode and to eliminate them.

The weight average molecular weight can be measured by gel permeation chromatography (GPC) or with a UV detector under the conditions mentioned in the section "EXAMPLES".

With respect to the ratio between the polymer and the multivalent ion and/or the inorganic compound in the gel electrolyte, the ratio by mass of the polymer to a substance corresponding to at least one of the multivalent ion and the inorganic compound is preferably 5000000/1 to 1/100000. Such a ratio enables suppression of deterioration of the gel electrolyte, as well as suppression of changes in form, such as shape change and formation of dendrite, dissolution, corrosion, and passivation, sufficiently continuous effective suppression of self-discharge in a charged state or during storage in a charged state, and keeping of high battery performance for a longer time. The ratio is more preferably 2000000/1 to 1/10000, and still more preferably 1000000/1 to 1/1000.

The inorganic compound, the electrolyte solution, and the polymer used for preparation of the gel electrolyte are preferably deoxidized. The multivalent ion and/or the inorganic compound, the electrolyte solution, and the polymer are preferably mixed in an inert atmosphere. Use of deoxidized materials and mixing thereof under an inert atmosphere provide a gel electrolyte having good electric characteristics. The dissolved oxygen concentration of the gel electrolyte is more preferably as close to 0 mg/L as possible. Reduction in the dissolved oxygen concentration suppresses dissolution of the zinc electrode active material into an electrolyte solution, thereby suppressing changes in form, dissolution, and corrosion of the zinc electrode active material and lengthening the electrode life. In the case of a strongly alkaline aqueous solution-containing electrolyte solution, contamination of carbon dioxide may cause generation of a large amount of carbonates, deteriorating the conductivity, and affecting the storage battery performance. Thus, it is preferable to remove dissolved carbon dioxide simultaneously through the above operation.

The gel electrolyte of the present invention has a cross-linked structure formed by a multivalent ion and/or an inorganic compound, and a storage battery using such a gel electrolyte is capable of suppressing changes in form, such as shape change and formation of dendrite, dissolution, corrosion, and passivation of the electrode active material, and self-discharge in a charged state or during storage in a charged state, and achieving a high cycle characteristic, rate characteristic, and coulombic efficiency while maintaining a high ion conductivity. The reason of this is as mentioned above. This gel electrolyte is also suitably used for primary batteries, suppressing changes in form of the electrode active material and achieving a high rate characteristic while maintaining a high ion conductivity.

As mentioned here, a battery including a positive electrode, a negative electrode, and an electrolyte interposed therebetween in which the electrolyte is formed essentially from the gel electrolyte of the present invention is also one aspect of the present invention. This battery of the present invention including the gel electrolyte of the present invention, which is the second aspect of the present invention, as an essential component of the electrolyte is also referred to as a second battery of the present invention. The second battery of the present invention may include one essential component, or may include two or more essential components of each of the parts.

As mentioned above, the gel electrolyte of the present invention is capable of improving various characteristics of storage batteries. Thus, it is one preferable embodiment of the present invention that the battery of the present invention (the second battery of the present invention) is a storage battery.

The whole electrolyte of the second battery of the present invention may be the gel electrolyte of the present invention, or the electrolyte may partially contain the gel electrolyte of the present invention. A battery in which the whole electrolyte is the gel electrolyte of the present invention include a gel electrolyte which is formed by swelling the electrolyte with an electrolyte solution, and such a battery has a structure where the swelled electrolyte is interposed between the positive electrode and the negative electrode. As mentioned here, it is also one preferable embodiment of the present invention that the whole electrolyte interposed between the positive electrode and the negative electrode in a battery is the gel electrolyte of the present invention.

A battery in which the electrolyte partially contains the gel electrolyte of the present invention includes an electrolyte containing the gel electrolyte of the present invention and (gel) electrolyte other than the above gel electrolyte and an electrolyte solution. For example, in the case where the gel electrolyte is used in a primary battery or a secondary battery having a zinc-containing compound as the negative electrode and a water-containing electrolyte solution to be mentioned later, the electrolyte contains the gel electrolyte of the present invention, as well as a gel electrolyte and a water-containing electrolyte solution containing no multivalent cation and/or no inorganic compound. Further, since the gel electrolyte of the present invention suppresses changes in form, such as shape change and formation of dendrite, dissolution, corrosion, and passivation of the electrode active material and suppresses self-discharge in a charged state or during storage in a charged state, the electrolyte in contact with the negative electrode is preferably formed essentially using the gel electrolyte of the present invention. As mentioned here, it is also one preferable embodiment of the present invention that a battery contains the gel electrolyte of the present invention as part of the electrolyte interposed between the positive electrode and the negative electrode and the electrolyte in contact with the negative electrode is formed essentially using the gel electrolyte of the present invention. In this case, the electrolyte in contact with the negative electrode at least partially essentially contains the gel electrolyte of the present invention. The whole electrolyte in contact with the negative electrode is preferably formed essentially from the gel electrolyte of the present invention. The gel electrolyte may be preliminarily polymerized or prepared by an operation such as kneading of a polymer and an electrolyte solution before the use in batteries. Alternatively, the materials, such as a monomer, of the gel electrolyte may be put into a battery and the components are polymerized to form the gel electrolyte in the battery. An electrolyte coating may be formed on the surface of an electrode by applying a preliminarily prepared gel electrolyte to the surface of an electrode to a thickness of 1 nm or greater but 5 mm or smaller, or applying the materials of the gel electrolyte thereto and then polymerizing the materials. Used between the electrode and its counter electrode may be the same gel electrolyte as that in contact with the electrode, or may be a different gel electrolyte, or may be a liquid electrolyte solution. Optimization of the properties and the condition of the gel electrolyte between the positive and negative electrodes further improves the performance, stability, and life of the battery.

For the electrolyte containing the gel electrolyte of the present invention and a (gel) electrolyte other than the above gel electrolyte and an electrolyte solution, the proportion of the gel electrolyte of the present invention is preferably 0.001 to 100% by mass in 100% by mass of the whole electrolyte portion. The proportion is more preferably 0.01 to 100% by mass. Especially, in the case of an electrolyte containing the gel electrolyte of the present invention and a water-containing electrolyte solution, the proportion of the gel electrolyte of the present invention is preferably 0.01 to 100% by mass in 100% by mass of the whole electrolyte. The proportion is more preferably 0.02 to 100% by mass.

Examples of the positive electrode active material include the same positive electrode active materials as those mentioned in the aforementioned first battery of the present invention. In particular, a battery using a zinc negative electrode mixture with the positive electrode active material being a nickel-containing compound is also one preferable embodiment of the present invention. It is also one preferable embodiment of the present invention that the positive electrode active material is oxygen, such as air batteries and fuel batteries. In other words, the battery of the present invention whose positive electrode is an air electrode is also one preferable embodiment of the present invention.

A battery using the zinc negative electrode mixture of the present invention may be in the form of a primary battery; a secondary battery capable of charge and discharge; a battery utilizing mechanical charge (mechanical exchange of zinc negative electrodes); and a battery utilizing a third electrode (e.g. an electrode removing oxygen generated in charge and discharge) which is different from the zinc negative electrode of the present invention and a positive electrode formed from a positive electrode active material to be mentioned later.

The negative electrode may be any of those usually used as negative electrodes of batteries, and examples thereof include lithium-containing compounds and zinc-containing compounds. Negative electrodes containing lithium or zinc markedly show changes in form, such as shape change and formation of dendrite, dissolution, corrosion, and passivation of the electrode active material. Thus, the effects of the present invention of effectively suppressing these disadvantages are more markedly exerted. This means that a negative electrode containing lithium and/or zinc in the first battery of the present invention is also one preferable embodiment of the present invention. The gel electrolyte of the present invention can be used as an electrolyte in lithium ion batteries whose negative electrode contains graphite, air batteries whose positive electrode is an air electrode, fuel batteries, and the like. In addition, the gel electrolyte can be used as a separator or an ion exchange membrane.

The electrolyte solution used in preparation of the gel electrolyte and the electrolyte solution may be any of electrolyte solutions for batteries usually used, and examples thereof include organic-solvent-type electrolyte solutions and water-containing electrolyte solutions. Examples of the organic solvents used in the organic-solvent-type electrolyte solutions and the water-containing electrolyte solutions include those used for the aforementioned first battery of the present invention, and preferable examples are the same. A preferable range of the ratio of an aqueous electrolyte solution in a water-containing electrolyte solution containing an organic-solvent-type electrolyte solution is the same as that in the first battery of the present invention.

The type of the electrolyte and the concentration of the electrolyte solution are also preferably the same as those in the first battery of the present invention.

In the case of using the gel electrolyte for primary batteries and secondary batteries in which a zinc-containing compound serves as the negative electrode and a water-containing electrolyte solution is used, it is preferable to add at least one zinc compound selected from the group consisting of zinc oxide, zinc hydroxide, zinc phosphate, zinc pyrophosphate, zinc borate, zinc silicate, zinc aluminate, zinc metal, and a tetrahydroxy zinc ion to the electrolyte solution serving as a material of the gel electrolyte. This further suppresses occurrence and growth of changes in form, such as shape change and formation of dendrite, and passivation of the electrode active material involved in dissolution of the zinc electrode active material in charge and discharge, and self-discharge in a charged state or during storage in a charged state. In this case, elements other than zinc are used for the multivalent ion and the inorganic compound. The zinc compound in the gel electrolyte is preferably 0.0001 mol/L to a saturated concentration.

With a water-containing electrolyte solution, the dissolved oxygen concentration in the aqueous electrolyte solution alone preferably satisfies a predetermined relationship with the hydroxide ion concentration in the aqueous electrolyte solution in the same manner as in the case of the aforementioned first battery of the present invention.

The (gel) electrolyte other than the gel electrolyte of the present invention may be any one that can be used as an electrolyte of batteries. Examples thereof include solid electrolytes capable of conducting cations (e.g. lithium) and anions (e.g. hydroxide ion) even without a liquid such as an electrolyte solution, and gel electrolytes containing no multivalent ion and/or no inorganic compound and cross-linked by other compounds (cross-linkers) via ester bond, amide bond, ionic bond, van der Waals bond, agostic interaction, hydrogen bond, acetal bond, ketal bond, ether bond, peroxide bond, carbon-carbon bond, carbon-nitrogen bond, carbamate bond, thiocarbamate bond, carbamide bond, thiocarbamide bond, oxazoline moiety-containing bond, triazine bond, or the like.

In the first battery of the present invention, the gel electrolyte may serve as a separator. Alternately, the battery may further include a separator. The definition and the function of the separator are the same as those in the aforementioned first battery of the present invention. The gel electrolyte and the separator each may have pores, micropores, and gas diffusion layers.

The separator may be the same separator as used in the first battery of the present invention, and the separator may contain the multivalent cation and/or the inorganic compound, a surfactant, an electrolyte solution, and the like. One separator may be used, or two or more separators may be used. Any number of separators may be used unless the resistance is increased and the battery performance is deteriorated. This is also the same as in the first battery of the present invention.

Next, the negative electrode mixture of the third aspect of the present invention is described. The negative electrode mixture of the present invention contains a negative electrode active material and a polymer, and contains a polymer in addition to the negative electrode active material. A negative electrode mixture having such a structure effectively suppresses changes in form, such as shape change and formation of dendrite, dissolution, corrosion, and passivation of the electrode active material, and self-discharge in a charged state or during storage in a charged state. This is presumably because as follows: with a negative electrode mixture containing a polymer in addition to the negative electrode active material, a film of the polymer is formed on the whole or part of the surface of the particles of the negative electrode active material and it effectively physically and chemically suppresses diffusion of, for example, ions in the electrode and/or its surface, thereby effectively suppressing changes in form, such as shape change and formation of dendrite, dissolution, corrosion, and passivation of the electrode active material, and self-discharge in a charged state or during storage in a charged state. Further, a storage battery produced using the negative electrode mixture of the present invention shows a high cycle characteristic, rate characteristic, and coulombic efficiency while maintaining a high electrical conductivity. This is presumably because such a battery shows effects of improving the hydrophilic-lipophilic balance, the ion conductivity, and the electronic conductivity, simultaneously with an effect of suppressing changes in form of the active material of the negative electrode. The negative electrode mixture of the present invention at least contains a negative electrode active material and a polymer, and may further contain an additional component such as a conductive auxiliary agent. For each of these components, one species thereof may be used, or two or more species thereof may be used. The negative electrode mixture of the present invention containing an additional component except the negative electrode active material and the polymer, the sum of the amounts of the negative electrode active material and the polymer in the negative electrode mixture of the present invention is preferably 20 to 99.99% by mass in 100% by mass of the whole negative electrode mixture. The sum of the amounts is more preferably 30 to 99.9% by mass.

An electrode formed using the negative electrode mixture of the present invention as mentioned above provides a battery showing excellent characteristics. Such an electrode formed using the negative electrode mixture of the present invention is also one aspect of the present invention. The electrode of the present invention is preferably used as a negative electrode, and a negative electrode formed using the negative electrode mixture of the present invention is also referred to as the negative electrode of the present invention.

The negative electrode mixture of the third aspect of the present invention preferably contains a zinc-containing compound as a negative electrode active material.

Examples of the zinc-containing compound may include the same zinc-containing compounds as in the aforementioned zinc negative electrode mixture of the first aspect of the present invention, and preferable examples thereof are also the same.

The average particle size and the specific surface area of the zinc-containing compound are also preferably the same as the average particle size and the specific surface area of the zinc-containing compound in the aforementioned zinc negative electrode mixture of the first aspect of the present invention.

The reason why the average particle size of the zinc-containing compound is preferably 500 µm to 1 nm is presumably as follows.

The negative electrode mixture containing a zinc-containing compound of a battery preferably further contains a conductive auxiliary agent. The negative electrode of a battery formed from a zinc negative electrode mixture containing a zinc-containing compound and a conductive auxiliary agent preferably satisfies that the zinc-containing compound molecules, the zinc-containing compound and the conductive auxiliary agent, and the zinc-containing compound, the conductive auxiliary agent, and the collector are bonded so that the negative electrode provides its function (a current is passed through the electrode). However, repeated charge and discharge or rapid charge and discharge may unavoidably promote dissociation between the zinc-containing compound molecules, between the zinc-containing compound and the conductive auxiliary agent, and among the zinc-containing compound, the conductive auxiliary agent, and the collector, or passivation of the zinc-containing compound, thereby deteriorating the battery performance. On the other hand, use of particles having the aforementioned average particle size as a zinc-containing compound allows the zinc-containing compound molecules, the zinc-containing compound and the conductive auxiliary agent, and the zinc-containing compound, the conductive auxiliary agent, and the collector to effectively contact with each other and reduces the portions where the zinc-containing compound molecules, the zinc-containing compound and the conductive auxiliary agent, and the zinc-containing compound, the conductive auxiliary agent, and the collector are completely dissociated, resulting in suppression of deterioration of the battery performance. The polymer in the negative electrode mixture further strengthens the effective contact between the zinc-containing compound molecules, between the zinc-containing compound and the conductive auxiliary agent, and among the zinc-containing compound, the conductive auxiliary agent, and the collector.

The method of measuring the average particle size and the method of producing particles having the aforementioned shape and an average particle size within the aforementioned range are the same as the method of measuring the average particle size of the zinc-containing compound and the method of producing particles having the aforementioned shape and an average particle size within the aforementioned range in the zinc negative electrode mixture of the first aspect of the present invention.

In the negative electrode mixture of the third aspect of the present invention, the amount of the negative electrode active material is preferably 50 to 99.9% by mass in 100% by mass of the whole negative electrode mixture. The negative electrode active material in an amount within the above range allows a battery including a negative electrode formed from the negative electrode mixture to achieve better battery performance. The amount is more preferably 55 to 99.5% by mass, and still more preferably 60 to 99% by mass.

The polymer in the negative electrode mixture may be the same polymer used in the above gel electrolyte, and one polymer may be used, or two or more polymers may be used.

The amount of the polymer is preferably 0.01 to 100% by mass for 100% by mass of the negative electrode active material in the negative electrode mixture. The polymer in an amount within the above range allows a battery including a negative electrode formed from the negative electrode mixture to achieve better battery performance. The amount is more preferably 0.01 to 60% by mass, and still more preferably 0.01 to 40% by mass.

The conductive auxiliary agent may be the same as the conductive auxiliary agent used in the aforementioned zinc negative electrode mixture of the first aspect of the present invention, and preferable examples thereof are also the same. Specific elements and preferable elements among them introduced into the conductive auxiliary agent are also the same as those for the conductive auxiliary agent used in the zinc negative electrode mixture of the first aspect of the present invention.

The specific surface area of the conductive auxiliary agent is preferably the same as the specific surface area of the conductive auxiliary agent used in the aforementioned zinc negative electrode mixture of the first aspect of the present invention.

The average particle size of the conductive auxiliary agent is 500 µm to 1 nm, more preferably 200 µm to 5 nm, and still more preferably 100 µm to 10 nm. The reason why the average particle size of the conductive auxiliary agent is preferably within such a range is the same as the reason why the zinc-containing compound preferably has an average particle size within the above range. Such an average particle size reduces portions where the zinc-containing compound and the conductive auxiliary agent, and the zinc-containing compound, the conductive auxiliary agent, and the collector are completely dissociated, resulting in suppression of deterioration of the battery performance.

The specific surface area and the average particle size of the conductive carbon can be measured in the same manners as for the aforementioned zinc-containing compound.

The specific surface area and the average particle size of the conductive carbon used as a conductive auxiliary agent are preferably the same as the average particle size of the conductive carbon in the aforementioned first aspect of the present invention. Similarly to the case of the first aspect of the present invention, edge portions of the conductive carbon may be reduced by graphitization, and the effects to be expected are the same.

The amount of the conductive auxiliary agent for 100% by mass of the negative electrode active material in the negative electrode mixture is preferably the same as the amount of the conductive auxiliary agent for 100% by mass of the zinc-containing compound in the zinc negative electrode mixture of the first aspect of the present invention. It is more preferably 0.0005 to 60% by mass, and still more preferably 0.001 to 40% by mass, for 100% by mass of the negative electrode active material in the negative electrode mixture.

The negative electrode mixture may further contain an additional component. Examples of the additional component include compounds having at least one element selected from the group consisting of elements in the groups 1 to 17 of the periodic table, organic compounds, and salts of organic compounds.

The effects of containing these compounds are the same as the effects of containing these compounds in the zinc negative electrode mixture of the first aspect of the present invention, except the effects achieved by containing the zinc-containing compound and/or the conductive auxiliary agent which are particles having a particle size equal to or smaller than the specific average particle size and/or long and narrow particles having the specific aspect ratio.

Preferable examples of the element in the compound having at least one element selected from the group consisting of elements in the groups 1 to 17 of the periodic table are the same as those in the case of the aforementioned zinc negative electrode mixture of the first aspect of the present invention, and the effects to be achieved are the same.

Examples of the compound having at least one element selected from the group consisting of elements in the groups 1 to 17 of the periodic table are the same as those in the case of the aforementioned zinc negative electrode mixture of the first aspect of the present invention, and preferable examples thereof are the same.

The compound having at least one element selected from the group consisting of elements in the groups 1 to 17 of the periodic table is preferably formed into nanoparticles having a small average particle size similarly to the zinc-containing compound and/or the conductive auxiliary agent because they more effectively suppress side reactions occurring when a water-containing electrolyte solution is used as the electrolyte solution, and the average particle size of the compound having at least one element selected from the group consisting of elements in the groups 1 to 17 of the periodic table is preferably the same as that in the aforementioned zinc negative electrode mixture of the first aspect of the present invention. The compound having at least one element selected from the group consisting of elements in the groups 1 to 17 of the periodic table may be supported on, coprecipitated with, formed into an alloy with, formed into a solid solution with, or kneaded with at least one of the zinc-containing compound, the conductive auxiliary agent, the organic compounds, and the salts of organic compounds before or after preparation of the zinc negative electrode mixture or in preparation of the zinc negative electrode mixture. Such a compound may be prepared by the sol-gel process.

The method of producing particles having the aforementioned shape and an average particle size within the aforementioned range is also the same as in the case of the aforementioned zinc negative electrode mixture of the first aspect of the present invention.

The specific surface area of the compound having at least one element selected from the group consisting of elements in the groups 1 to 17 of the periodic table is also preferably the same as in the case of the aforementioned zinc negative electrode mixture of the first aspect of the present invention.

Examples of the organic compounds and the salts of organic compounds include the same polymers as those used in the aforementioned gel electrolyte, lignin, betaine moiety-containing compounds such as amino acids, trialkyl phosphoric acids, and low molecular weight surfactants.

In the case where the organic compounds and the salts of organic compounds are polymers, the polymerization method of producing a polymer from the monomer corresponding to the structural unit of the polymer and the effects expected from the organic compounds and the salts of organic compounds are the same as those in the case of the aforementioned zinc negative electrode mixture of the first aspect of the present invention.

Preferable examples of the organic compounds and the salts of organic compounds are the same as those preferable as the organic compounds and the salts of the organic compounds in the aforementioned zinc negative electrode mixture of the first aspect of the present invention.

The amount of the additional component is preferably 0.1 to 100% by mass for 100% by mass of the negative electrode active material in the negative electrode mixture. The amount is more preferably 0.5 to 80% by mass, and still more preferably 1.0 to 60% by mass.

The negative electrode mixture of the present invention may be prepared by mixing the negative electrode active material and the polymer, and the conductive auxiliary agent and the compound having at least one element selected from the group consisting of elements in the groups 1 to 17 of the periodic table as appropriate. The mixing method is the same as the method of preparing the zinc negative electrode mixture of the first aspect of the present invention.

The method of preparing the zinc negative electrode is the same as the method of producing the zinc negative electrode of the first aspect of the present invention.

Especially, use of the negative electrode (negative electrode mixture electrode) thus obtained as a negative electrode for secondary batteries suppresses concentration of currents and decomposition of water in the negative electrode, thereby suppressing deterioration due to changes in form, such as shape change and formation of dendrite, dissolution, corrosion, and passivation of the negative electrode active material, generation of hydrogen and oxygen in charge and discharge, and self-discharge in a charged state or during storage in a charged state, at maximum.

The thickness of the negative electrode is preferably 1 nm to 1000 µm from the viewpoints of battery structure and suppression of separation of the active material from the collector. The thickness is more preferably 10 nm to 100 µm, and still more preferably 20 nm to 50 µm.

The negative electrode mixture of the present invention contains a negative electrode active material and a polymer. A storage battery including a negative electrode formed from such a negative electrode mixture achieves a high cycle characteristic, rate characteristic, and coulombic efficiency while maintaining a high ion conductivity and electrical conductivity. A primary battery including a negative electrode formed from the negative electrode mixture of the present invention achieves a high rate characteristic while maintaining a high ion conductivity and electrical conductivity.

As mentioned here, a battery including a positive electrode, a negative electrode, and an electrolyte interposed therebetween, the negative electrode being formed essentially from the negative electrode mixture of the present invention is also one aspect of the present invention. This battery of the present invention including as an essential component a negative electrode formed from the negative electrode mixture of the present invention, which is the third aspect of the present invention, is also referred to as the third battery of the present invention. The third battery of the present invention may include one species of each of these essential components, or may include two or more thereof.

The negative electrode mixture of the present invention may be used in primary batteries and secondary batteries (storage batteries). Still, as mentioned above, the negative electrode mixture of the present invention enhances various characteristics of storage batteries, and thus it is preferably used in storage batteries. In other words, it is one preferable embodiment of the present invention that the third battery of the present invention is a storage battery.

In the third battery of the present invention, the polymer may also serve as a binding agent for binding particles of the negative electrode active material or the conductive auxiliary agent, or binding the particles and the collector, and/or a dispersant for dispersing the particles, and/or a thickening agent.

The negative electrode in the third battery of the present invention is formed essentially from the negative electrode mixture of the present invention. In the case where the negative electrode active material in the negative electrode mixture is a lithium-containing compound or a zinc-containing compound, the negative electrode to be formed contains lithium or zinc. Although the negative electrode containing lithium and/or zinc usually markedly causes changes in form, such as shape change and formation of dendrite, dissolution, corrosion, and passivation of the electrode active material, and self-discharge in a charged state or during storage in a charged state, the negative electrode mixture of the present invention is capable of effectively suppress these disadvantages. In other words, the effects of the present invention are more markedly achieved for negative electrodes containing lithium and/or zinc. Thus, it is also one preferable embodiment of the present invention that the negative electrode contains lithium and/or zinc in the third battery of the present invention.

The positive electrode in the third battery of the present invention may be the same positive electrode in the second battery of the present invention. The electrolyte in the third battery of the present invention may be the gel electrolyte which is the second aspect of the present invention, or any electrolyte solution except for the gel electrolyte of the second aspect of the present invention to be used in the second battery of the present invention, in other words, any of organic-solvent-type electrolyte solutions, aqueous electrolyte solutions, and water-organic solvent-type electrolyte solution mixtures.

As mentioned above, combination of the second aspect of the present invention and the third aspect of the present invention is also included in the scope of the present invention, and such combination allows for more marked achievement of the effects of the present invention. In other words, a battery including a positive electrode, a negative electrode, and an electrolyte interposed therebetween, the electrolyte being formed essentially from the gel electrolyte of the present invention, and the negative electrode being formed essentially from the negative electrode mixture of the present invention is also one preferable embodiment of the present invention.

The batteries of the first to third aspects of the present invention may be produced through either a wet process or a dry process. In the wet process, for example, a positive electrode collector sheet and a negative electrode collector sheet are coated with a paste or a slurry of a positive electrode material and a paste or a slurry of a negative electrode material, respectively, and the coated electrode sheets are dried and compressed. The sheets are cut and cleaned, and the cut electrode sheets and separators are layered, thereby producing a battery assembly. The dry process is, for example, a process using a powder or granulated dry mixture of electrode components instead of a slurry or a paste. The dry process includes the steps of: (1) applying a negative electrode material to a conductive support; (2) applying a positive electrode material to a conductive support in a dried state; (3) disposing a separator between the sheets (1) and (2) to form a layered structure, thereby producing a battery assembly; and (4) winding or folding, for example, the battery assembly (3) to form a 3-dimensional structure. The electrodes may be wrapped in or coated with the separator or the gel electrolyte, for example. The positive electrode and the negative electrode may also serve as a container constituting the battery. Terminals may be attached by any conductive bonding technique such as spot welding, ultrasonic welding, laser beam welding, soldering, and other techniques suitable for the materials of terminals and collectors. The battery may be in the state of being charged or may be in the state of being discharged during the production or storage of the battery.

In the case where the batteries of the first to third aspects of the present invention are storage batteries, the charge and discharge rate of the storage battery is preferably 0.01C or higher but 100C or lower. The rate is more preferably 0.05C or higher but 80C or lower, still more preferably 0.1C or higher but 60C or lower, and particularly preferably 0.1C or higher but 30C or lower. The storage battery is preferably used in both cold districts and tropical districts on the earth, and is preferably used at a temperature of -50°C to 100°C. With nickel zinc batteries, for example, the capacity of the zinc negative electrode may be higher or lower than, or may be equal to the capacity of the nickel positive electrode, and may suffer overcharge or overdischarge. In the case of using the storage battery of the present invention for onboard applications, the depth of charge and/or the depth of discharge are/is preferably set low. This lengthens the life of the storage battery and greatly suppresses generation of oxygen by side reactions. In the storage battery using a zinc electrode, the oxygen generated in the system is preferably consumed by (i) bonding with the zinc in the negative electrode, or (ii) the reaction in a third electrode which is different from the positive electrode and the negative electrode. Still, fundamental suppression of generation of oxygen by adjusting the charge and discharge conditions easily allows for long life and sealing of the storage battery. The nickel electrode may be a nickel electrode used in nickel-cadmium batteries and nickel-metal hydride batteries. Addition of carbon and lanthanoid compounds, for example, to the nickel electrode increases the overvoltage for oxygen generation, thereby suppressing generation of oxygen to the utmost. The additive contained in the electrolyte solution or the gel electrolyte improves the performance of the nickel electrode. The multivalent ion and/or inorganic compound and/or electrolyte contained in the gel electrolyte suppress(es) generation of oxygen to the utmost and the gel electrolyte has a more flexible skeleton than conventional gel electrolytes. Thus, the gas diffuses more rapidly, and the generated oxygen is expected to be rapidly transferred to the counter electrode and the third electrode.

### - Advantageous Effects of Invention

The zinc negative electrode mixture of the first aspect of the present invention has the aforementioned structure, and a zinc negative electrode formed therefrom more improves the cycle characteristic, rate characteristic, and coulombic efficiency of batteries and better suppresses self-discharge than conventional zinc negative electrodes. Further, use of a water-containing electrolyte solution provides a battery with high safety. Thus, the zinc negative electrode mixture of the first aspect of the present invention is excellent in economy, safety, stability, and storability, and is suitably used for producing a negative electrode of batteries with excellent battery performance. Even in the case of forming a battery with a water-containing electrolyte solution, mixing of the additional component in the zinc negative electrode mixture suppresses a side reaction of decomposing water to generate hydrogen in charge and discharge and changes in form, corrosion, and passivation of the zinc electrode active material, and self-discharge in a charged state or during storage in a charged state. Further, suppression of solubility of zinc species by salt formation with zinc species such as tetrahydroxy zinc ions, and improvement of hydrophilic-lipophilic balance, anion conductivity, and electronic conductivity are expected. In addition, the charge and discharge characteristics and the coulombic efficiency are markedly improved.

The gel electrolyte of the second aspect of the present invention has the aforementioned structure, and a battery formed using such a gel electrolyte suppresses changes in form, such as shape change and formation of dendrite, dissolution, corrosion, and passivation of the electrode active material and self-discharge in a charged state or during storage in a charged state, and achieves a high cycle characteristic, rate characteristic, and coulombic efficiency while maintaining a high ion conductivity of the gel electrolyte. Thus, the gel electrolyte of the second aspect of the present invention is suitably used for producing an electrolyte of a battery having excellent battery performance.

The negative electrode mixture of the third aspect of the present invention has the aforementioned structure, and a battery formed using such a negative electrode mixture suppresses changes in form, such as shape change and formation of dendrite, and passivation of the electrode active material and self-discharge in a charged state or during storage in a charged state, and achieves a high cycle characteristic, rate characteristic, and coulombic efficiency, while maintaining a high ion conductivity and electrical conductivity of the negative electrode mixture. Thus, the negative electrode mixture of the third aspect of the present invention is suitably used for producing a negative electrode of a battery having excellent battery performance.

### BRIEF DESCRIPTION OF THE DRAWINGS

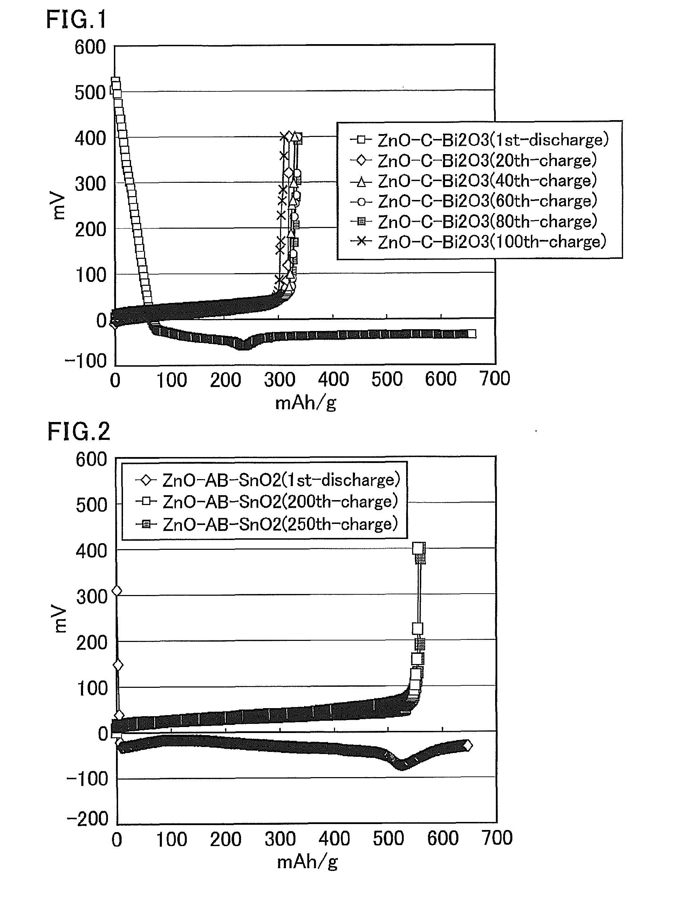

Fig. 1 is a graph showing the result of a charge and discharge test in Example 1, and indicating the discharging curve of the 1st cycle and the charging curves of the 20th cycle, 40th cycle, 60th cycle, 80th cycle, and 100th cycle.
Fig. 2 is a graph showing the result of a charge and discharge test in Example 2, and indicating the discharging curve of the 1st cycle and the charging curves of the 200th cycle and the 250th cycle.

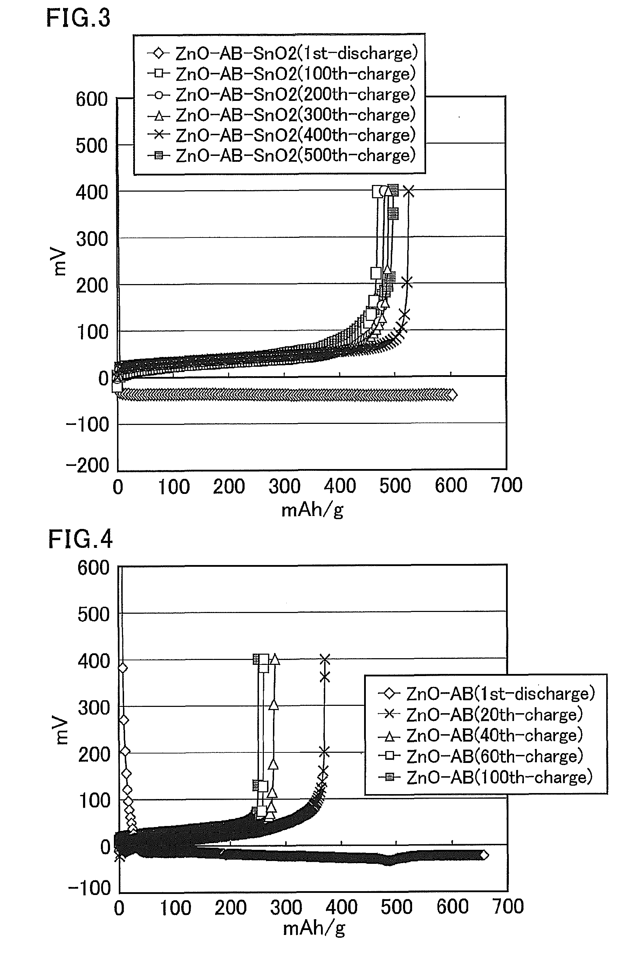

Fig. 3 is a graph showing the result of a charge and discharge test in Example 3, and indicating the discharging curve of the 1st cycle and the charging curves of the 100th cycle, 200th cycle, 300th cycle, 400th cycle, and 500th cycle.
Fig. 4 is a graph showing the result of a charge and discharge test in Example 4, and indicating the discharging curve of the 1st cycle and the charging curves of the 20th cycle, 40th cycle, 60th cycle, and 100th cycle.

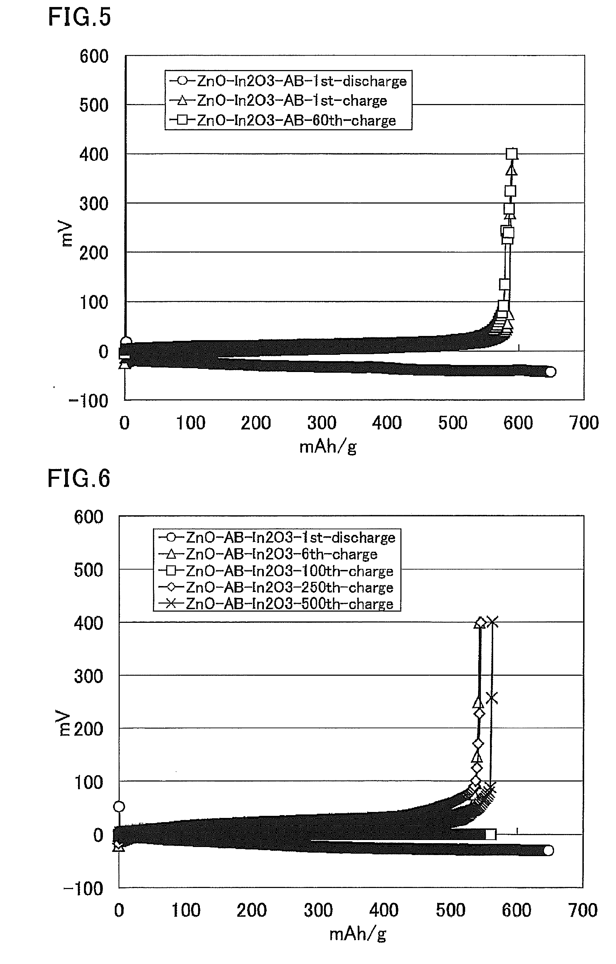

Fig. 5 is a graph showing the result of a charge and discharge test in Example 5, and indicating the discharging curve of the 1st cycle and the charging curves of the 1st cycle and 60th cycle.
Fig. 6 is a graph showing the result of a charge and discharge test in Example 6, and indicating the discharging curve of the 1st cycle and the charging curves of the 6th cycle, 100th cycle, 250th cycle, and 500th cycle.

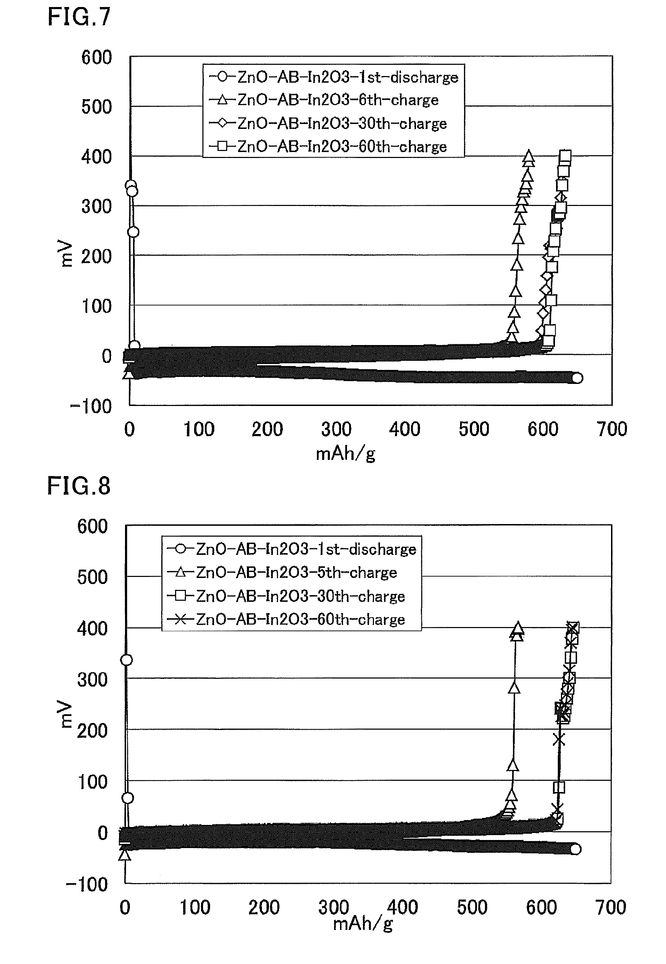

Fig. 7 is a graph showing the result of a charge and discharge test in Example 7, and indicating the discharging curve of the 1st cycle and the charging curves of the 6th cycle, 30th cycle, and 60th cycle.
Fig. 8 is a graph showing the result of a charge and discharge test in Example 8, and indicating the discharging curve of the 1st cycle and the charging curves of the 5th cycle, 30th cycle, and 60th cycle.

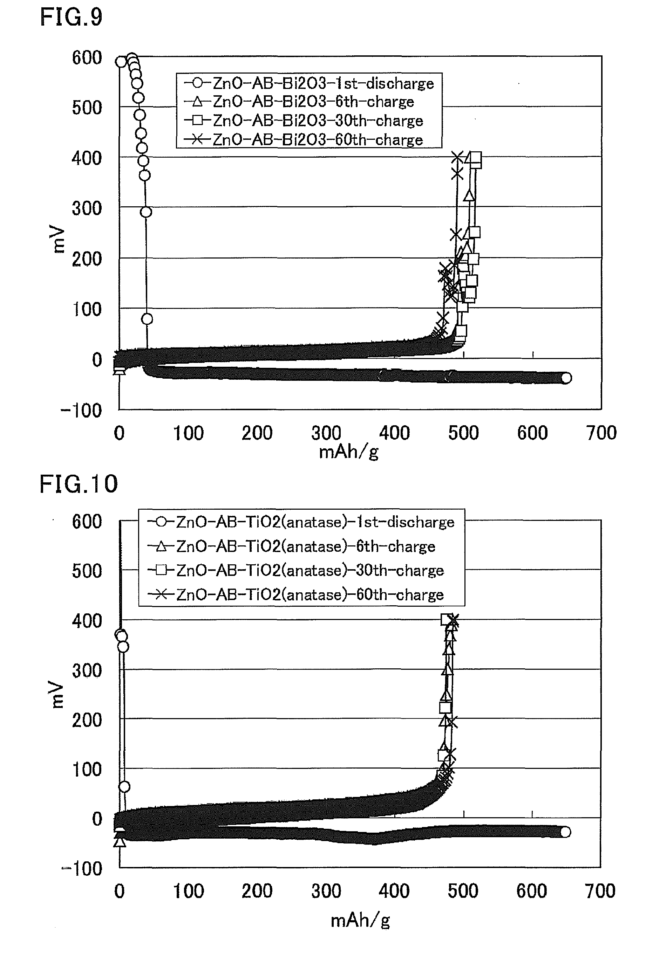

Fig. 9 is a graph showing the result of a charge and discharge test in Example 9, and indicating the discharging curve of the 1st cycle and the charging curves of the 6th cycle, 30th cycle, and 60th cycle.
Fig. 10 is a graph showing the result of a charge and discharge test in Example 10, and indicating the discharging curve of the 1st cycle and the charging curves of the 6th cycle, 30th cycle, and 60th cycle.

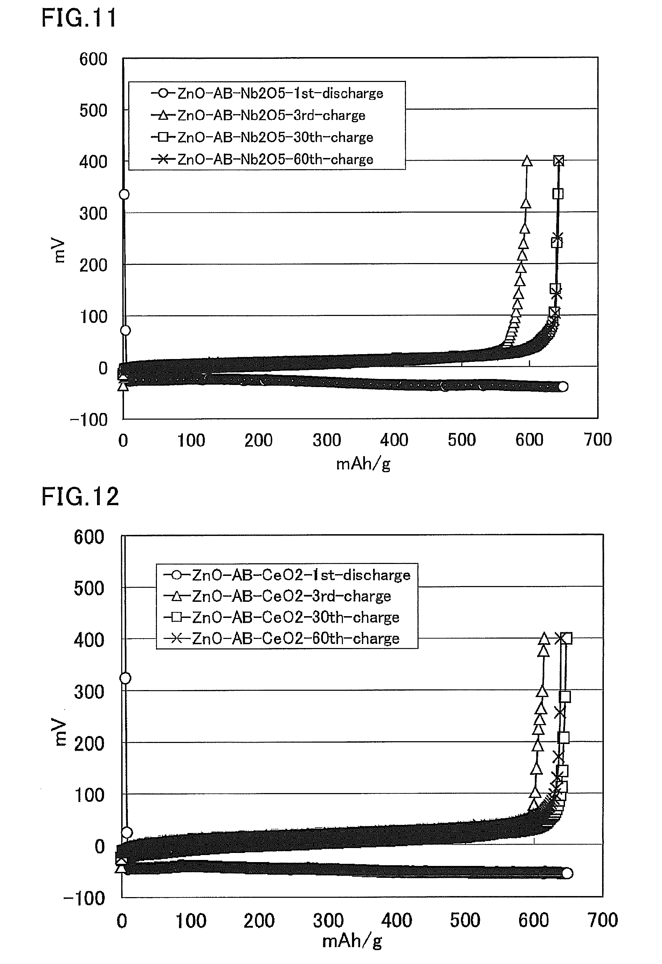

Fig. 11 is a graph showing the result of a charge and discharge test in Example 11, and indicating the discharging curve of the 1st cycle and the charging curves of the 3rd cycle, 30th cycle, and 60th cycle.
Fig. 12 is a graph showing the result of a charge and discharge test in Example 12, and indicating the discharging curve of the 1st cycle and the charging curves of the 3rd cycle, 30th cycle, and 60th cycle.

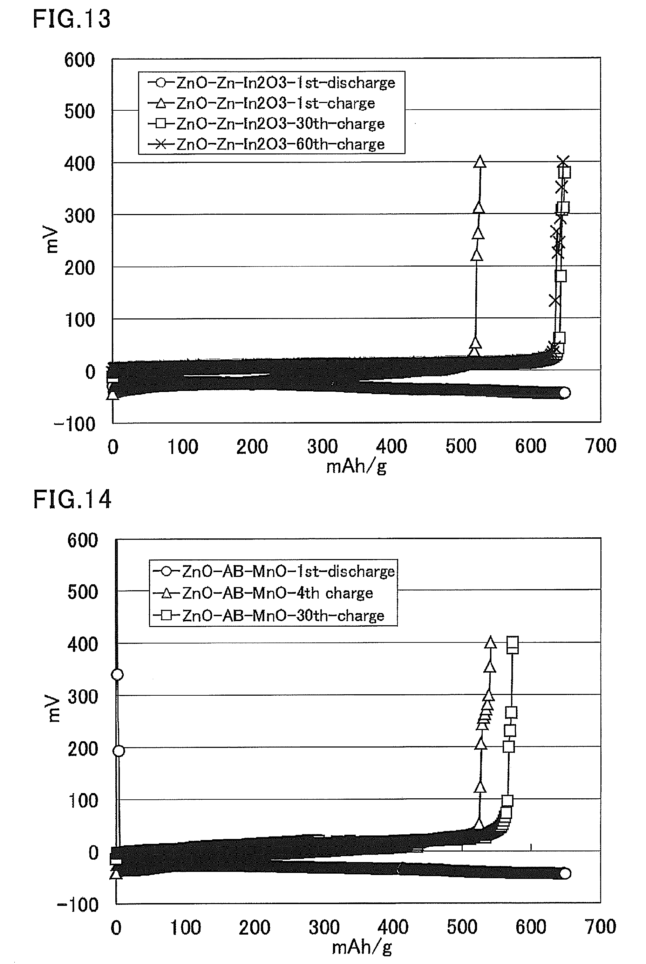

Fig. 13 is a graph showing the result of a charge and discharge test in Example 13, and indicating the discharging curve of the 1st cycle and the charging curves of the 1st cycle, 30th cycle, and 60th cycle.
Fig. 14 is a graph showing the result of a charge and discharge test in Example 14, and indicating the discharging curve of the 1st cycle and the charging curves of the 4th cycle and the 30th cycle.

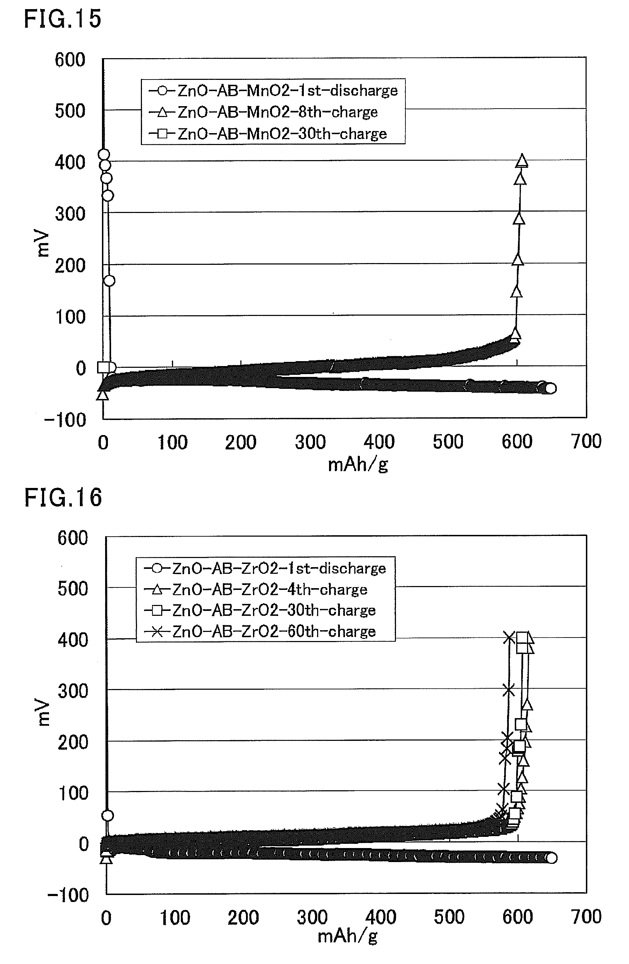

Fig. 15 is a graph showing the result of a charge and discharge test in Example 15, and indicating the discharging curve of the 1st cycle and the charging curves of the 8th cycle and the 30th cycle.
Fig. 16 is a graph showing the result of a charge and discharge test in Example 16, and indicating the discharging curve of the 1st cycle and the charging curves of the 4th cycle, 30th cycle, and 60th cycle.

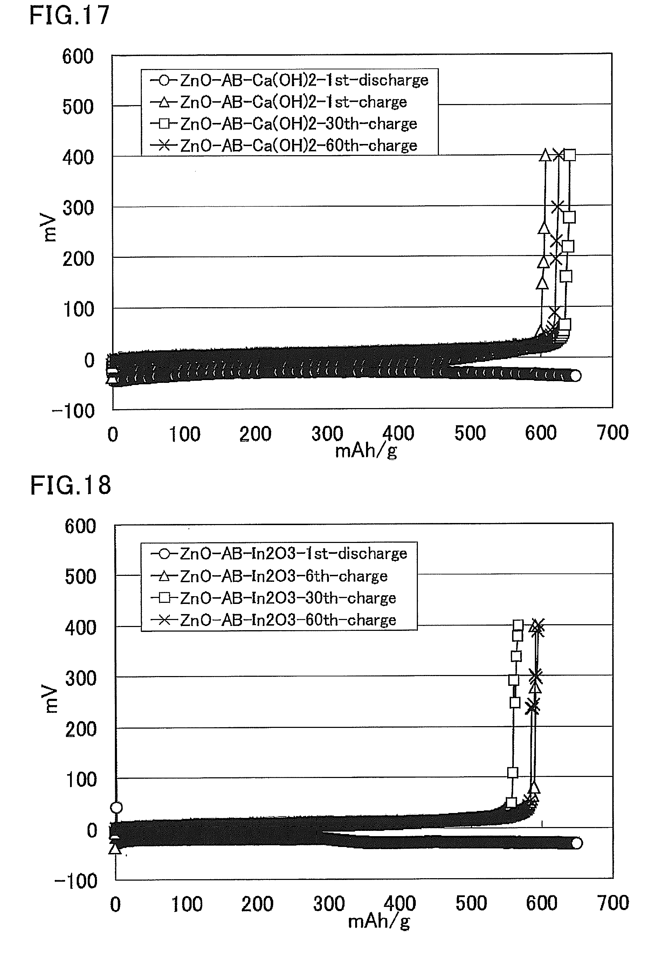

Fig. 17 is a graph showing the result of a charge and discharge test in Example 17, and indicating the discharging curve of the 1st cycle and the charging curves of the 1st cycle, 30th cycle, and 60th cycle.
Fig. 18 is a graph showing the result of a charge and discharge test in Example 18, and indicating the discharging curve of the 1st cycle and the charging curves of the 6th cycle, 30th cycle, and 60th cycle.

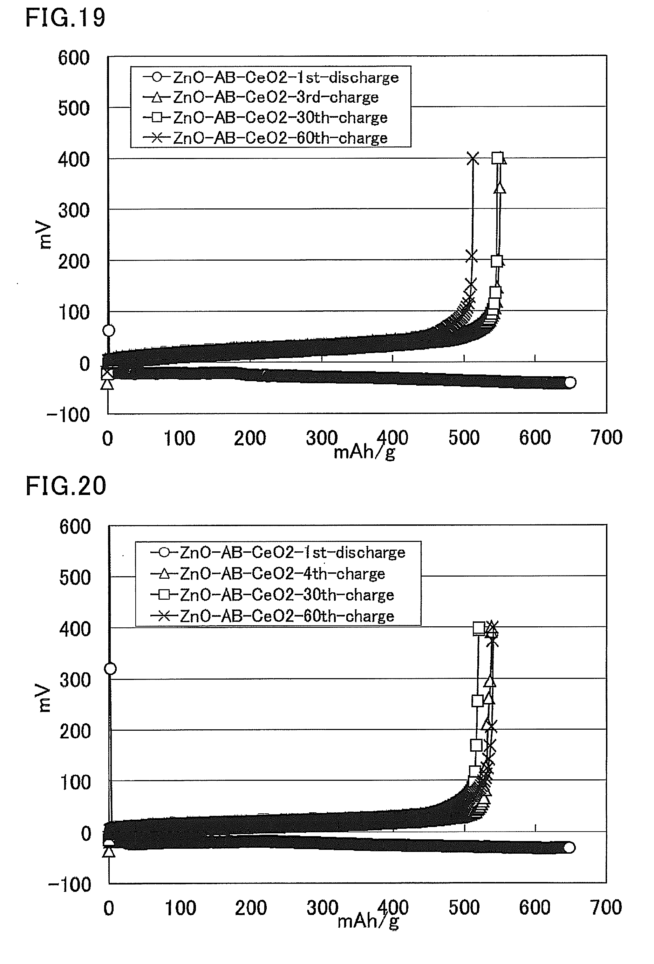

Fig. 19 is a graph showing the result of a charge and discharge test in Example 19, and indicating the discharging curve of the 1st cycle and the charging curves of the 3rd cycle, 30th cycle, and 60th cycle.
Fig. 20 is a graph showing the result of a charge and discharge test in Example 20, and indicating the discharging curve of the 1st cycle and the charging curves of the 4th cycle, 30th cycle, and 60th cycle.

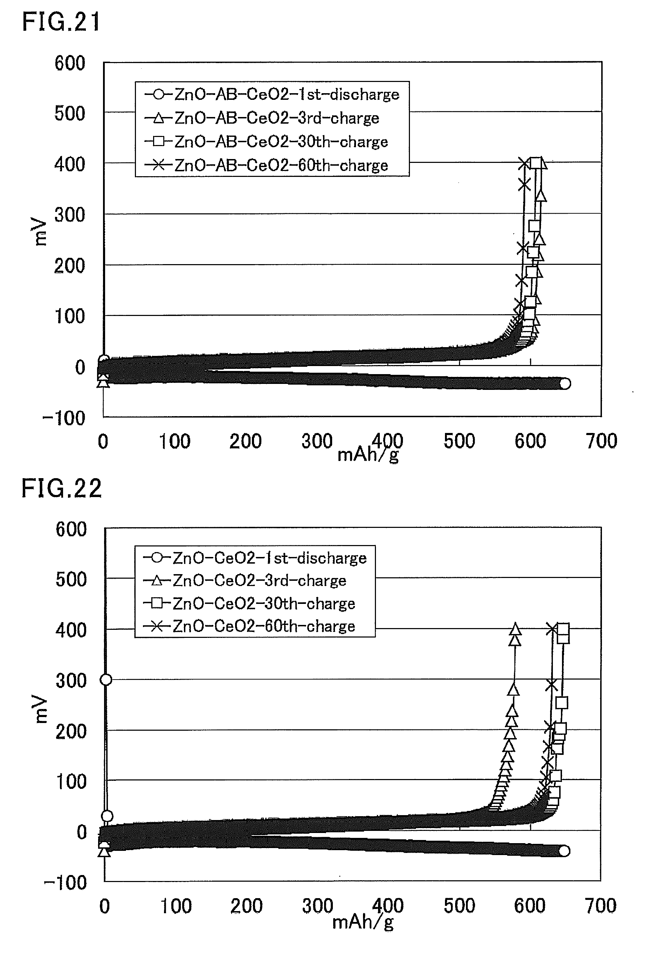

Fig. 21 is a graph showing the result of a charge and discharge test in Example 21, and indicating the discharging curve of the 1st cycle and the charging curves of the 3rd cycle, 30th cycle, and 60th cycle.
Fig. 22 is a graph showing the result of a charge and discharge test in Example 22, and indicating the discharging curve of the 1st cycle and the charging curves of the 3rd cycle, 30th cycle, and 60th cycle.

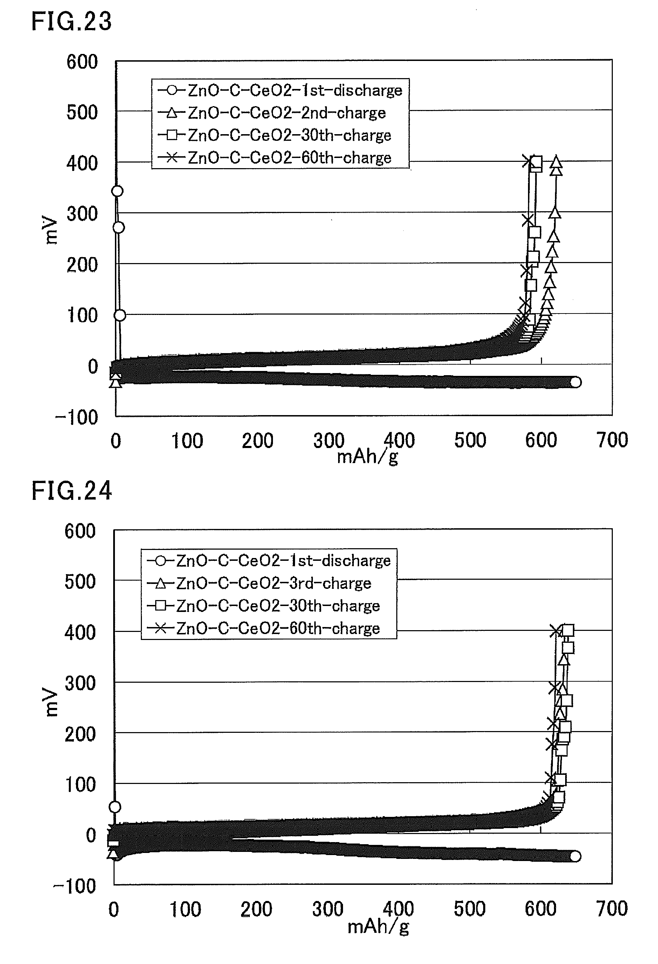

Fig. 23 is a graph showing the result of a charge and discharge test in Example 23, and indicating the discharging curve of the 1st cycle and the charging curves of the 2nd cycle, 30th cycle, and 60th cycle.
Fig. 24 is a graph showing the result of a charge and discharge test in Example 24, and indicating the discharging curve of the 1st cycle and the charging curves of the 3rd cycle, 30th cycle, and 60th cycle.

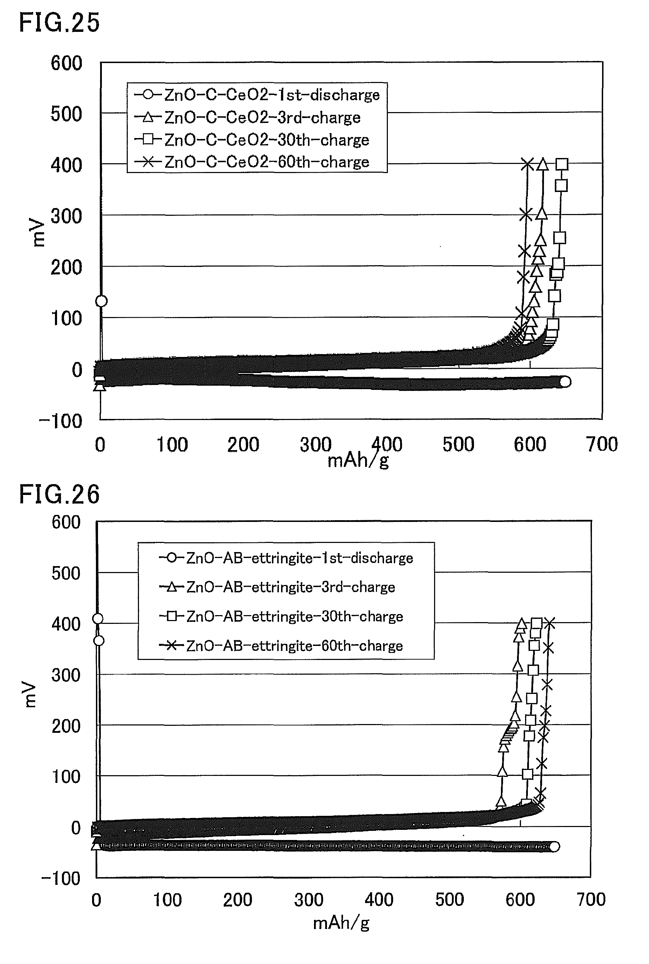

Fig. 25 is a graph showing the result of a charge and discharge test in Example 25, and indicating the discharging curve of the 1st cycle and the charging curves of the 3rd cycle, 30th cycle, and 60th cycle.
Fig. 26 is a graph showing the result of a charge and discharge test in Example 26, and indicating the discharging curve of the 1st cycle and the charging curves of the 3rd cycle, 30th cycle, and 60th cycle.

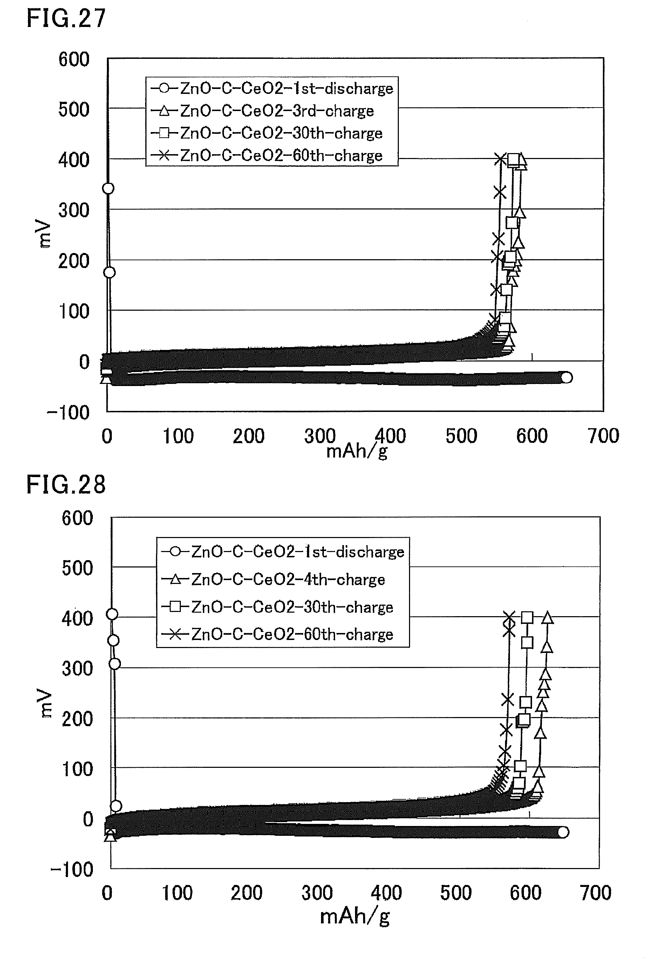

Fig. 27 is a graph showing the result of a charge and discharge test in Example 27, and indicating the discharging curve of the 1st cycle and the charging curves of the 3rd cycle, 30th cycle, and 60th cycle.
Fig. 28 is a graph showing the result of a charge and discharge test in Example 28, and indicating the discharging curve of the 1st cycle and the charging curves of the 4th cycle, 30th cycle, and 60th cycle.

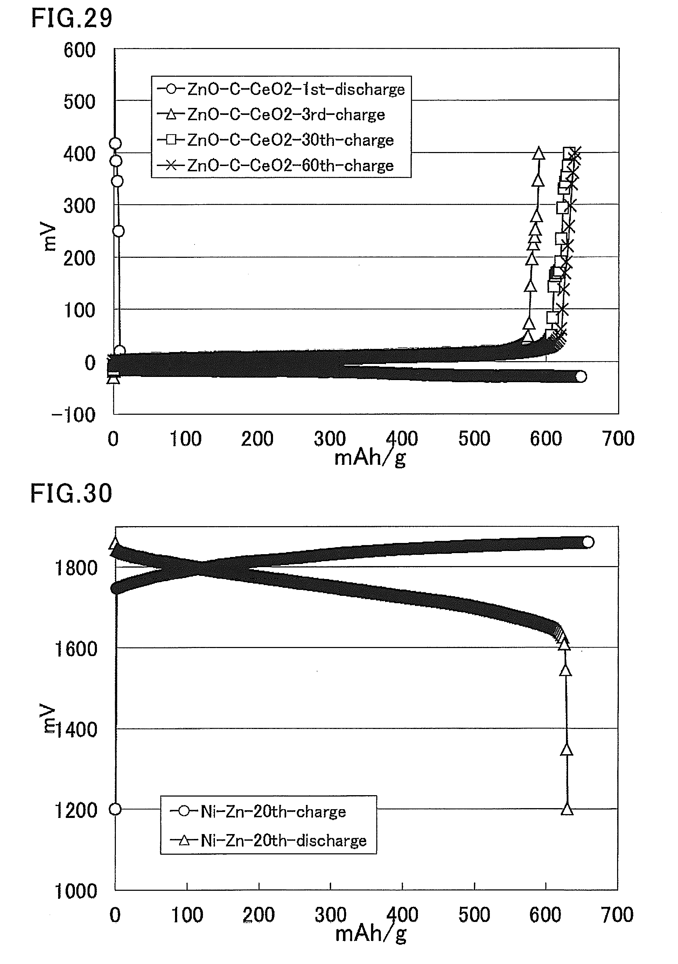

Fig. 29 is a graph showing the result of a charge and discharge test in Example 29, and indicating the discharging curve of the 1st cycle and the charging curves of the 3rd cycle, 30th cycle, and 60th cycle.
Fig. 30 is a graph showing the result of a charge and discharge test in Example 30, and indicating the charging and discharging curves of the 20th cycle.

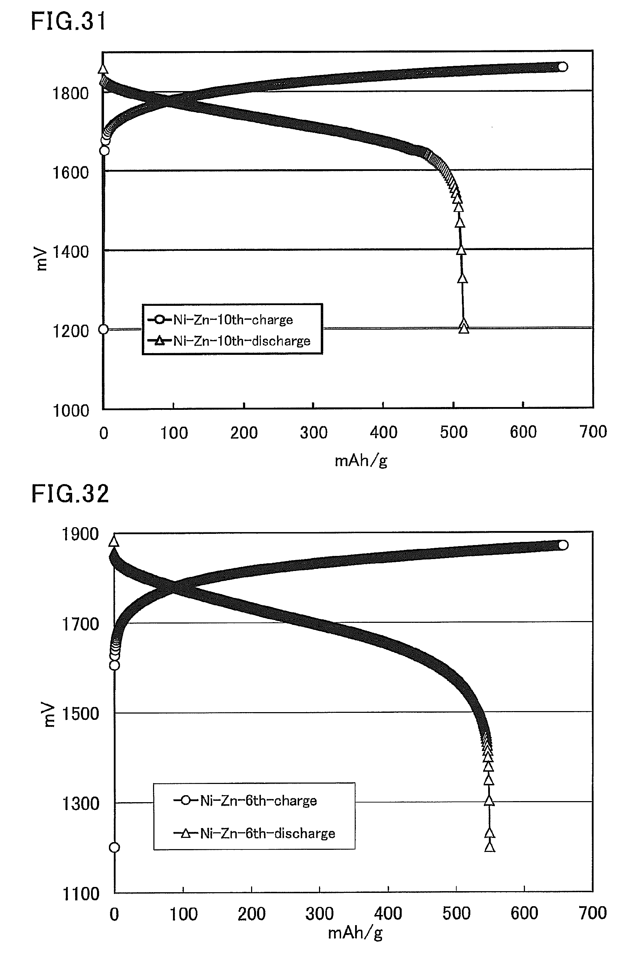

Fig. 31 is a graph showing the result of a charge and discharge test in Example 31, and indicating the charging and discharging curves of the 10th cycle.
Fig. 32 is a graph showing the result of a charge and discharge test in Example 32, and indicating the charging and discharging curves of the 6th cycle.

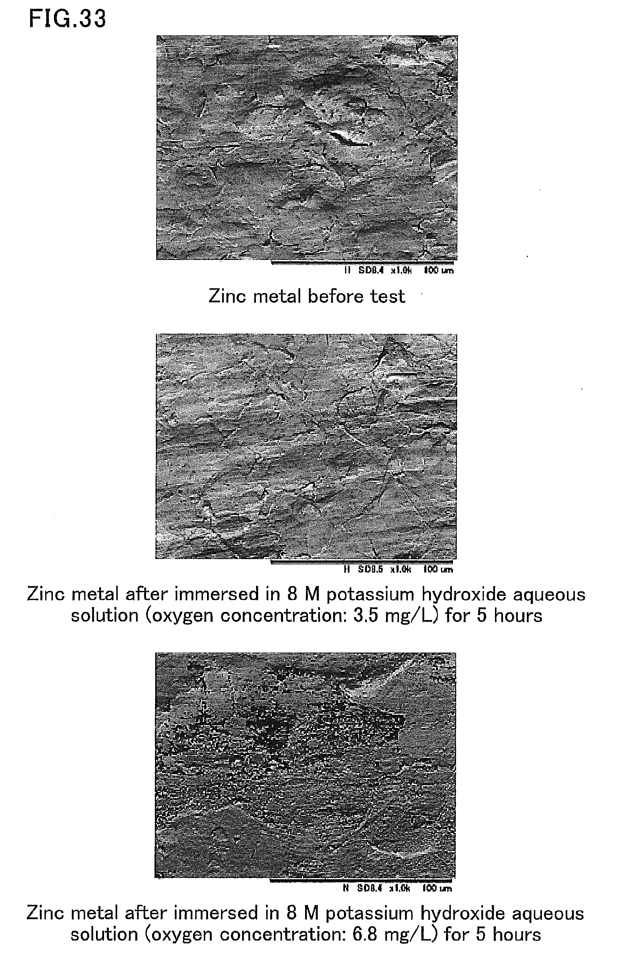

Fig. 33 shows photographs of the results of the corrosion test in Example 33, including SEM photographs of zinc metal before the test, zinc metal after immersed in an 8 M potassium hydroxide aqueous solution (oxygen concentration: 3.5 mg/L) for 5 hours, and zinc metal after immersed in an 8 M potassium hydroxide aqueous solution (oxygen concentration: 6.8 mg/L) for 5 hours.

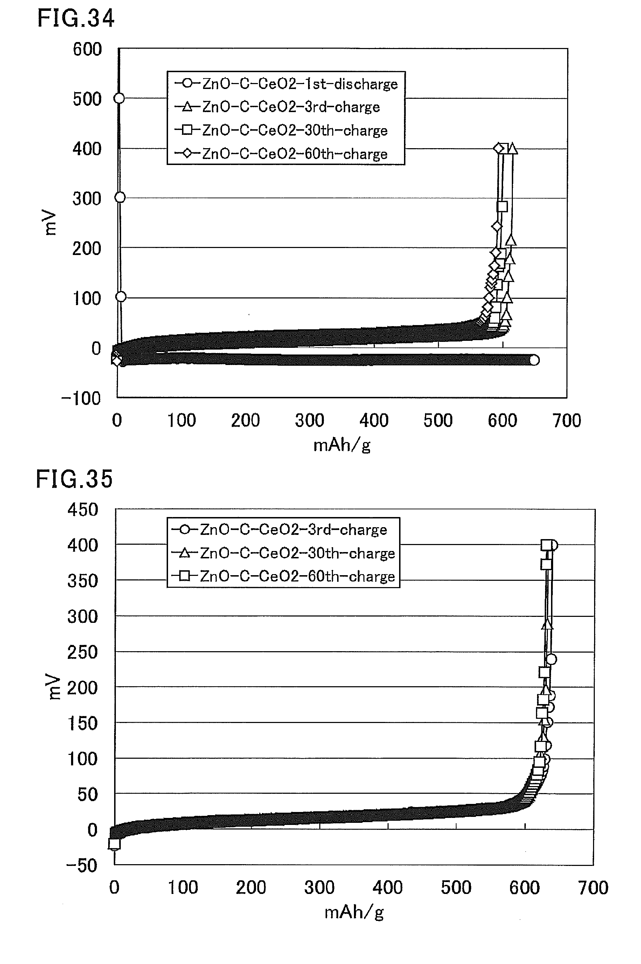

Fig. 34 is a graph showing the result of a charge and discharge test in Example 43, and indicating the discharging curve of the 1st cycle and the charging curves of the 3rd cycle, 30th cycle, and 60th cycle.
Fig. 35 is a graph showing the result of a charge and discharge test in Example 44, and the charging curves of the 3rd cycle, 30th cycle, and 60th cycle.

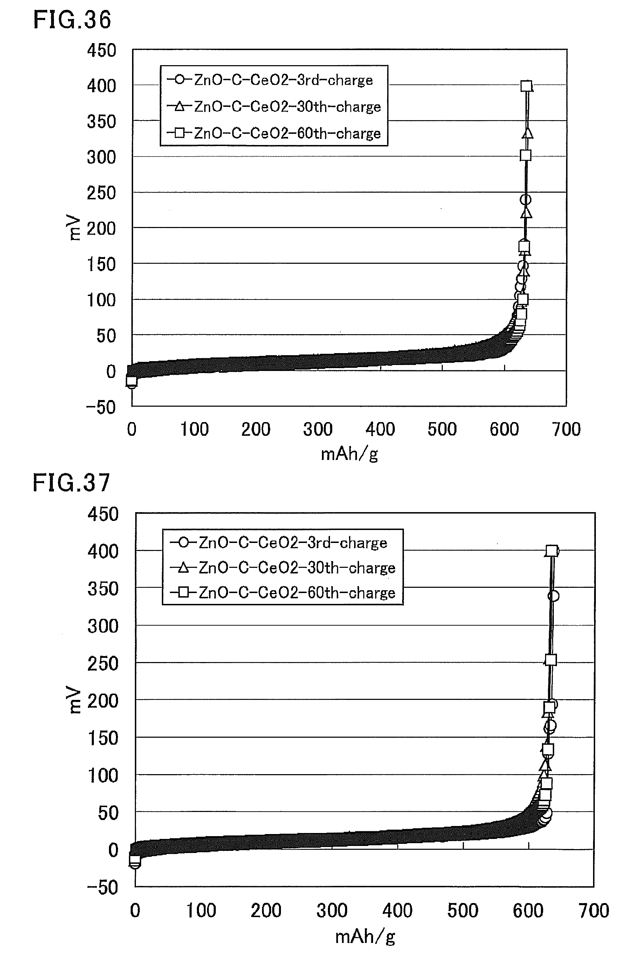

Fig. 36 is a graph showing the result of a charge and discharge test in Example 45, and the charging curves of the 3rd cycle, 30th cycle, and 60th cycle.
Fig. 37 is a graph showing the result of a charge and discharge test in Example 46, and the charging curves of the 3rd cycle, 30th cycle, and 60th cycle.

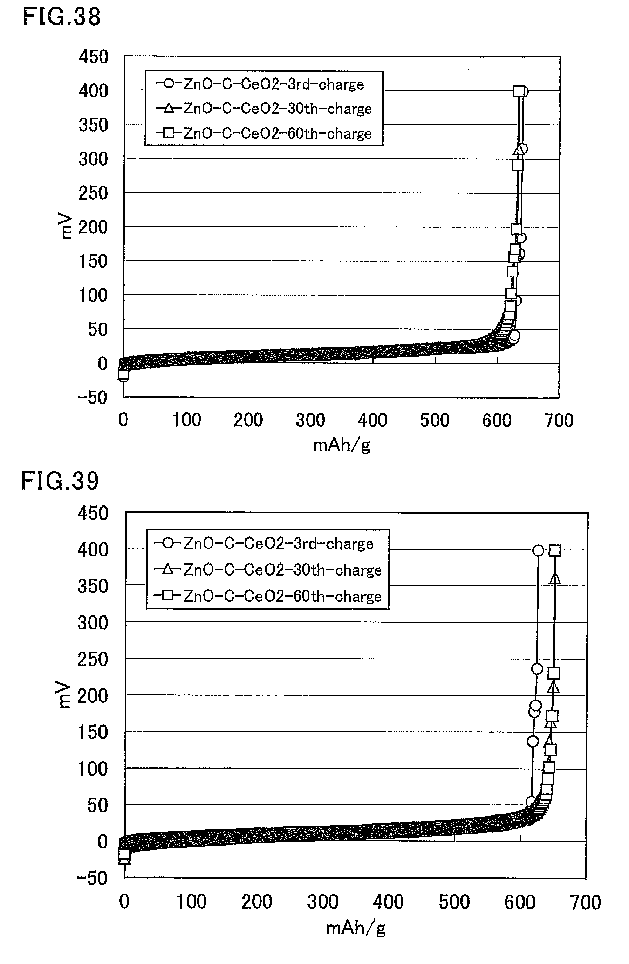

Fig. 38 is a graph showing the result of a charge and discharge test in Example 47, and the charging curves of the 3rd cycle, 30th cycle, and 60th cycle.
Fig. 39 is a graph showing the result of a charge and discharge test in Example 48, and the charging curves of the 3rd cycle, 30th cycle, and 60th cycle.

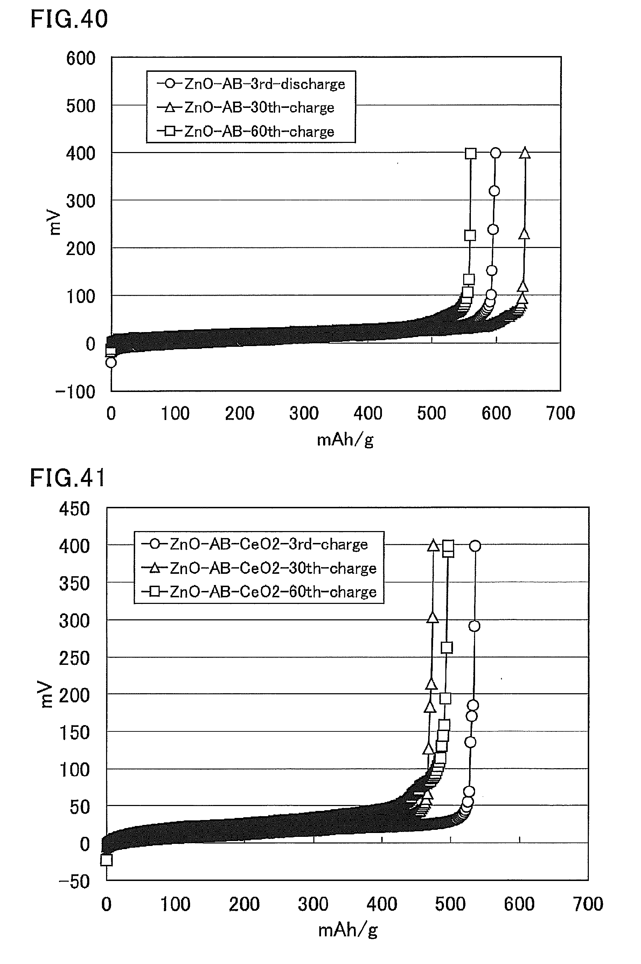

Fig. 40 is a graph showing the result of a charge and discharge test in Example 49, and indicating the discharging curve of the 3rd cycle and the charging curves of the 30th cycle and the 60th cycle.
Fig. 41 is a graph showing the result of a charge and discharge test in Example 51, and the charging curves of the 3rd cycle, 30th cycle, and 60th cycle.

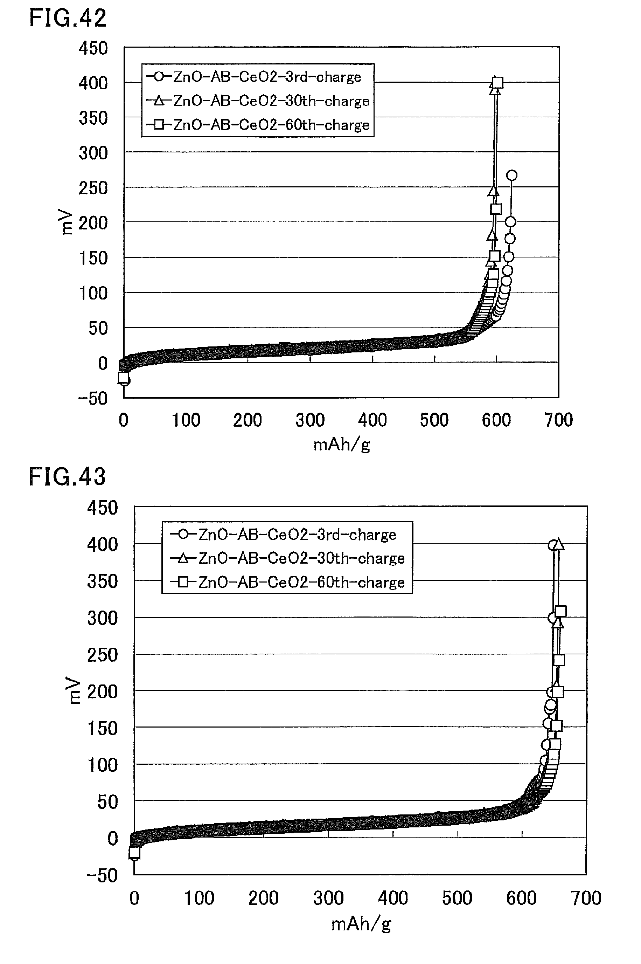

Fig. 42 is a graph showing the result of a charge and discharge test in Example 53, and the charging curves of the 3rd cycle, 30th cycle, and 60th cycle.
Fig. 43 is a graph showing the result of a charge and discharge test in Example 55, and the charging curves of the 3rd cycle, 30th cycle, and 60th cycle.

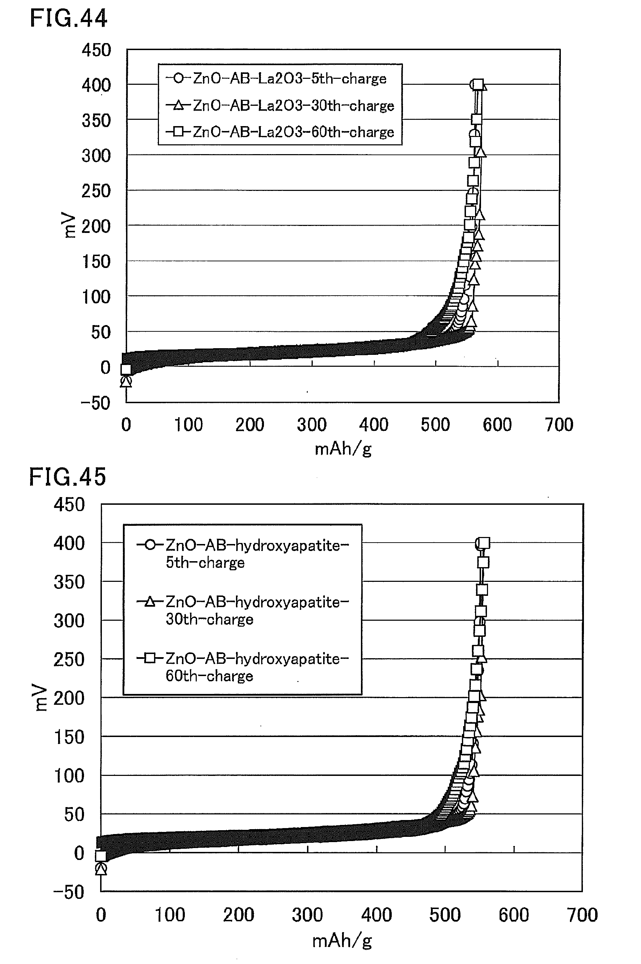

Fig. 44 is a graph showing the result of a charge and discharge test in Example 57, and the charging curves of the 5th cycle, 30th cycle, and 60th cycle.
Fig. 45 is a graph showing the result of a charge and discharge test in Example 58, and the charging curves of the 5th cycle, 30th cycle, and 60th cycle.

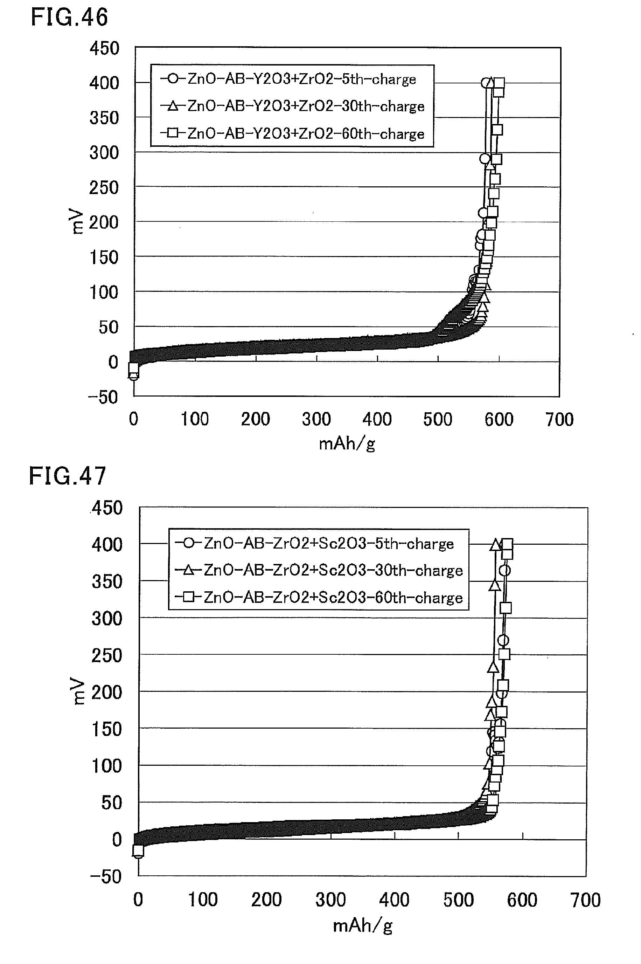

Fig. 46 is a graph showing the result of a charge and discharge test in Example 59, and the charging curves of the 5th cycle, 30th cycle, and 60th cycle.
Fig. 47 is a graph showing the result of a charge and discharge test in Example 60, and the charging curves of the 5th cycle, 30th cycle, and 60th cycle.

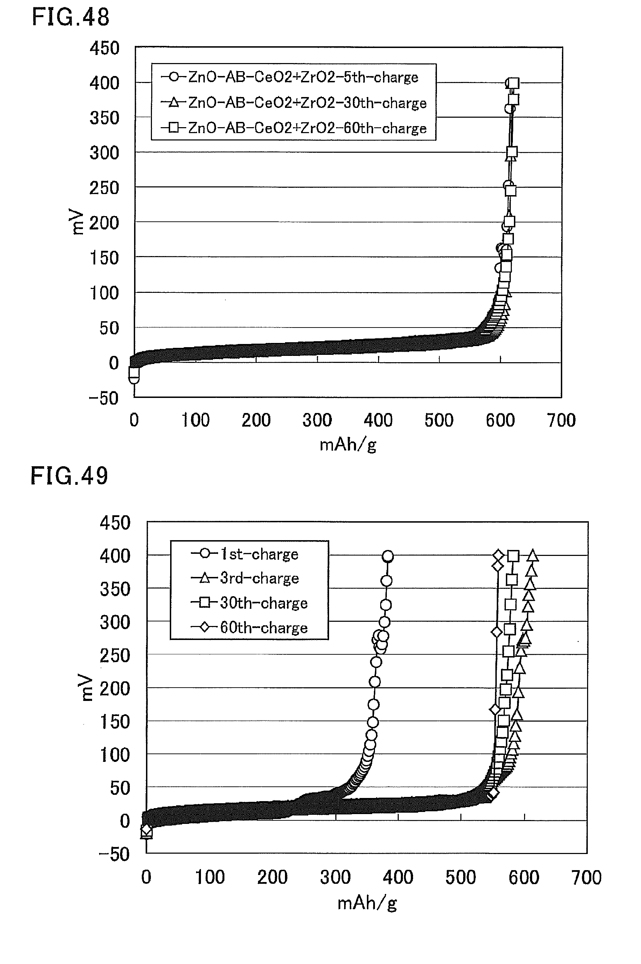

Fig. 48 is a graph showing the result of a charge and discharge test in Example 61, and the charging curves of the 5th cycle, 30th cycle, and 60th cycle.
Fig. 49 is a graph showing the result of a charge and discharge test in Example 62, and the charging curves of the 1st cycle, 3rd cycle, 30th cycle, and 60th cycle.

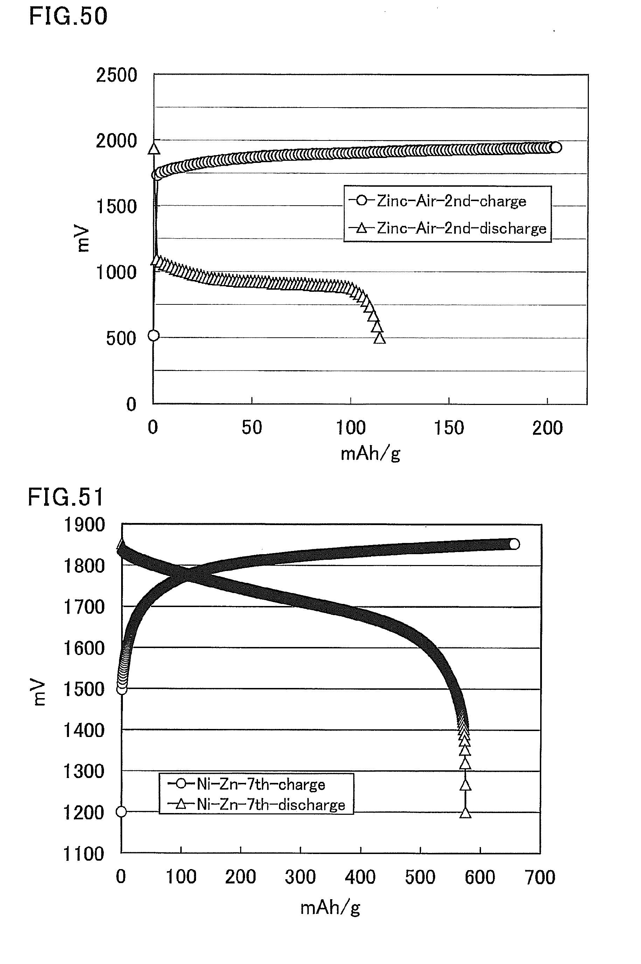

Fig. 50 is a graph showing the result of a charge and discharge test in Example 63, and indicating the charging and discharging curves of the 2nd cycle.
Fig. 51 is a graph showing the result of a charge and discharge test in Example 66, and indicating the charging and discharging curves of the 7th cycle.

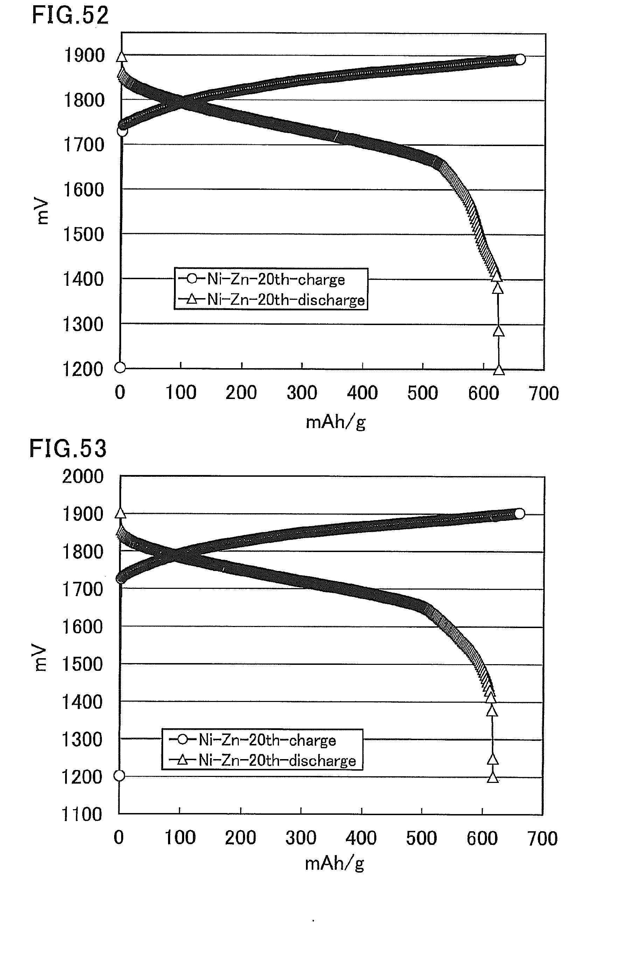

Fig. 52 is a graph showing the result of a charge and discharge test in Example 67, and indicating the charging and discharging curves of the 20th cycle.
Fig. 53 is a graph showing the result of a charge and discharge test in Example 68, and indicating the charging and discharging curves of the 20th cycle.

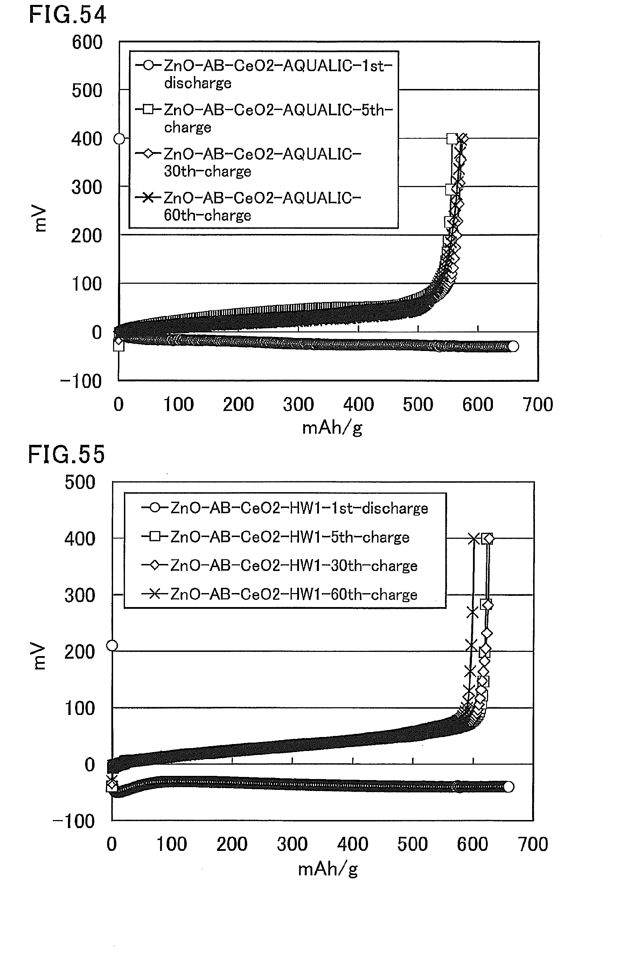

Fig. 54 is a graph showing the result of a charge and discharge test in Example 69, and indicating the discharging curve of the 1st cycle and the charging curves of the 5th cycle, 30th cycle, and 60th cycle.
Fig. 55 is a graph showing the result of a charge and discharge test in Example 70, and indicating the discharging curve of the 1st cycle and the charging curves of the 5th cycle, 30th cycle, and 60th cycle.

### DESCRIPTION OF EMBODIMENTS

The present invention will be described in more detail referring to, but not limited to, the following examples.

In the following examples, each of the physical properties is a measured value obtained as follows or, if the material is a product in the market, the official value shown in the catalog. Zinc oxide is zinc oxide #1 unless otherwise mentioned.

### <Weight average molecular weight>

The weight average molecular weight was measured using the following device under the following conditions.
Pump: L-7110 (Hitachi, Ltd.)
Detector: UV 214 nm (model 481 (Nihon Waters K.K.) or L-7400 (Hitachi, Ltd.))
Calibration curve: sodium polyacrylate standard sample (Sowa Science Corp.)
Eluent: aqueous solution prepared by adding pure water to disodium hydrogen phosphate dodecahydrate (34.5 g) and sodium dihydrogen phosphate dihydrate (46.2 g) to make up to 5,000 g, and filtering the mixture through a 0.45-micron membrane filter
Column: GF-7MHQ (Showa Denko K.K.) or TSK-GEL G3000PWXL (TOSOH CORP.)
Flow rate of eluent: 0.5 mL/min
Column temperature: 35°C

### <Average particle size>

The average particle sizes and the aspect ratios of the zinc oxides, except for the average particle sizes in Examples 5, 6, 9 to 18, 21 to 32, 34 to 37, 39 to 63, and Examples 66 to 85, were each calculated as an average value of measured values on representative 200 particles using an S-3500 scanning electron microscope (SEM) (Hitachi High-Technologies Corp.).

### <Average particle size, mode diameter, median diameter>

The average particle sizes, the mode diameters, and the median diameters of the zinc oxides in Examples 5, 6, 9 to 18, 21 to 32, 34 to 37, 39 to 63, and Examples 66 to 85 were measured using a laser analysis/scattering particle size distribution measurement device LA-950V2 Wet (HORIBA, Ltd.). The values described below were measured after dispersing the particles in ion exchange water and irradiating the particles with ultrasonic waves for five minutes.

### <True density>

The true density was measured using AccuPyc II-1340 (Shimadzu Corp.).

### <Aspect ratio>

Representative 200 particles were measured using an S-3500 series scanning electron microscope (SEM) (Hitachi High-Technologies Corp.), and the average value of the measured values was calculated.

### <Specific surface area>

The specific surface area was measured using an automatic BET specific surface area measurement device (Mountech Co., Ltd.).

### <Dissolved oxygen concentration>

The dissolved oxygen concentration was measured using an oxygen meter (UC-12-SOL series, electrode: UC-203 series) (Central Kagaku Corp.).

### [1. Examples of the first aspect of the present invention]

### (Example 1)

Zinc oxide (10.6 g, average particle size: 20 nm, specific surface area: about 20 m²/g), vapor grown carbon fibers (multi-walled carbon nanotube) (0.35 g, aspect ratio (vertical/lateral): 100, specific surface area: about 10 m²/g, average fiber length: about 15 µm), and bismuth oxide (0.87 g, average particle size: about 50 µm) were put into a bottle, and the mixture was pulverized using a zirconia ball in a ball mill for 12 hours. The obtained solid was passed through a sieve to provide an average particle size of 25 µm or smaller. This solid (1.3 g), a solution of 12% polyvinylidene fluoride in N-methylpyrrolidone (2.2 g), and N-methylpyrrolidone (1.0 g) were put into a glass vial and stirred overnight using a stirrer with a stir bar. The obtained slurry was applied to a copper foil using an automatic coating device, and then dried at 80°C for 12 hours and dried in vacuo (at room temperature) for six hours. The copper foil coated with the zinc mixture was pressed at 1 t so that the thickness of the zinc mixture was 10 µm. The workpiece was punched using a punching device (diameter: 15.95 mm) to provide a zinc mixture electrode, and this was used as a working electrode (zinc mixture weight: 2.55 mg) having an apparent area of 0.48 cm². The counter electrode was a zinc plate, the reference electrode was a zinc wire, and the electrolyte solution was a saturated solution of zinc oxide in an aqueous solution of 4 mol/L potassium hydroxide (dissolved oxygen concentration: 5.2 mg/L). Then, a charge and discharge test was performed using the three-electrode cell at a current of 1.38 mA (charge and discharge times: 1 hour, cut off at -0.2 V and 0.4 V).

### (Example 2)

Zinc oxide (10.5 g, average particle size: 20 nm, specific surface area: about 20 m²/g), acetylene black (AB) (0.36 g, average particle size: about 40 nm, specific surface area: about 70 m²/g), and tin oxide (0.87 g, average particle size: about 5 µm, specific surface area: about 5 m²/g or smaller) were put into a bottle, and the mixture was pulverized using a zirconia ball in a ball mill for 12 hours. The obtained solid was passed through a sieve to provide an average particle size of 25 µm or smaller. This solid (1.29 g), a solution of 12% polyvinylidene fluoride in N-methylpyrrolidone (2.17 g), and N-methylpyrrolidone (1.2 g) were put into a glass vial and stirred overnight using a stirrer with a stir bar. The obtained slurry was applied to a copper foil using an automatic coating device, and then dried at 80°C for 12 hours and dried in vacuo (at room temperature) for six hours. The copper foil coated with the zinc mixture was pressed at 1 t so that the thickness of the zinc mixture was 10 µm. The workpiece was punched using a punching device (diameter: 15.95 mm) to provide a zinc mixture electrode, and this was used as a working electrode (zinc mixture weight: 2.88 mg) having an apparent area of 0.48 cm². The counter electrode was a zinc plate, the reference electrode was a zinc wire, and the electrolyte solution was a saturated solution of zinc oxide in an aqueous solution of 4 mol/L potassium hydroxide (dissolved oxygen concentration: 5.2 mg/L). Then, a charge and discharge test was performed using the three-electrode cell at a current of 1.52 mA (charge and discharge times: 1 hour, cut off at -0.1 V and 0.4 V).

### (Example 3)

A zinc mixture electrode was produced through the same steps as in Example 2. This zinc mixture electrode was used as a working electrode (zinc mixture weight: 2.64 mg) having an apparent area of 0.48 cm². The counter electrode was a zinc plate, the reference electrode was a zinc wire, and the electrolyte solution was a saturated solution of zinc oxide in an aqueous solution of 4 mol/L potassium hydroxide (dissolved oxygen concentration: 5.2 mg/L). Then, a charge and discharge test was performed using the three-electrode cell at a current of 3.83 mA (charge and discharge times: 1 hour, cut off at -0.1 V and 0.4 V).

### (Example 4)

Zinc oxide (10.5 g, average particle size: 1200 µm) and acetylene black (0.36 g, average particle size: about 40 nm, specific surface area: about 70 m²/g) were put into a bottle, and the mixture was stirred using a planetary centrifugal mixer for two hours. The obtained solid (1.2 g), a solution of 12% polyvinylidene fluoride in N-methylpyrrolidone (2.0 g), and N-methylpyrrolidone (1.1 g) were put into a glass vial and stirred overnight using a stirrer with a stir bar. The obtained slurry was applied to a copper foil using an automatic coating device, and then dried at 80°C for 12 hours and dried in vacuo (at room temperature) for six hours. The copper foil coated with the zinc mixture was pressed at 1 t so that the thickness of the zinc mixture was 10 µm. The workpiece was punched using a punching device (diameter: 15.95 mm) to provide a zinc mixture electrode, and this was used as a working electrode (zinc mixture weight: 2.67 mg) having an apparent area of 0.48 cm². The counter electrode was a zinc plate, the reference electrode was a zinc wire, and the electrolyte solution was a saturated solution of zinc oxide in an aqueous solution of 4 mol/L potassium hydroxide (dissolved oxygen concentration: 5.2 mg/L). Then, a charge and discharge test was performed using the three-electrode cell at a current of 1.45 mA (charge and discharge times: 1 hour, cut off at -0.2 V and 0.4 V). The surface of the zinc mixture electrode after the charge and discharge test was observed using an SEM, and the observation revealed that the shape of the zinc electrode active material was changed.

### (Example 5)

Zinc oxide (27.6 g, average particle size: about 1.1 µm, mode diameter: about 820 nm, median diameter: about 760 nm, true density: about 5.98 g/cm³, specific surface area: about 4 m²/g), acetylene black (0.90 g, average particle size: about 40 nm, specific surface area: about 70 m²/g), indium oxide (2.4 g, NACALAI TESQUE, INC.), ethanol (92.7 g, 99.5%, Wako Pure Chemical Industries, Ltd.), and water (92.7 g) were mixed in a ball mill. Then, the mixture was dried using an evaporator under reduced pressure at 100°C for two hours, and further dried using a stationary-type vacuum dryer under reduced pressure at 110°C overnight. The dried solid was pulverized at 18000 rpm for 60 seconds using a pulverizer (WARING, X-TREME MX1200XTM). The obtained solid (1.1 g), a solution of 12% polyvinylidene fluoride in N-methylpyrrolidone (2.0 g), and N-methylpyrrolidone (0.90 g) were put into a glass vial and stirred overnight using a stirrer with a stir bar. The obtained slurry was applied to a copper foil using an automatic coating device, and then dried at 80°C for 12 hours. The copper foil coated with the zinc mixture was pressed at 3 t so that the thickness of the zinc mixture was 10 µm or smaller. The workpiece was punched using a punching device (diameter: 15.95 mm) to provide a zinc mixture electrode, and this was used as a working electrode (zinc mixture weight: 1.75 mg) having an apparent area of 0.48 cm². The counter electrode was a zinc plate, the reference electrode was a zinc wire, and the electrolyte solution was a saturated solution of zinc oxide in an aqueous solution of 4 mol/L potassium hydroxide (dissolved oxygen concentration: 5.2 mg/L). Then, a charge and discharge test was performed using the three-electrode cell at a current of 0.834 mA (charge and discharge times: 1 hour, cut off at -0.1 V and 0.4 V).

### (Example 6)

Zinc oxide (27.6 g, average particle size: about 1.1 µm, mode diameter: about 820 nm, median diameter: about 760 nm, true density: about 5.98 g/cm³, specific surface area: about 4 m²/g), acetylene black (0.90 g, average particle size: about 50 nm, specific surface area: about 40 m²/g), indium (III) oxide (2.4 g, NACALAI TESQUE, INC.), ethanol (92.7 g, 99.5%, Wako Pure Chemical Industries, Ltd.), and water (92.7 g) were mixed in a ball mill. Then, a zinc mixture electrode was produced in the same manner as in Example 5 and was used as a working electrode (zinc mixture weight: 1.24 mg) having an apparent area of 0.48 cm². In the same manner as in Example 5, a charge and discharge test was performed using the three-electrode cell at a current of 0.590 mA (charge and discharge times: 1 hour).

### (Example 7)

Zinc oxide (27.6 g, average particle size: 1.7 µm, true density: about 5.95 g/cm³), acetylene black (0.90 g, average particle size: about 50 nm, specific surface area: about 40 m²/g), indium (III) oxide (2.4 g, NACALAI TESQUE, INC.), ethanol (92.7 g, 99.5%, Wako Pure Chemical Industries, Ltd.), and water (92.7 g) were mixed in a ball mill. Then, a zinc mixture electrode was produced in the same manner as in Example 5 and was used as a working electrode (zinc mixture weight: 0.80 mg) having an apparent area of 0.48 cm². In the same manner as in Example 5, a charge and discharge test was performed using the three-electrode cell at a current of 0.501 mA (charge and discharge times: 1 hour).

### (Example 8)

Zinc oxide (27.6 g, average particle size: 5.5 µm, true density: about 5.75 g/cm³), acetylene black (0.90 g, average particle size: about 50 nm, specific surface area: about 40 m²/g), indium (III) oxide (2.4 g, NACALAI TESQUE, INC.), ethanol (92.7 g, 99.5%, Wako Pure Chemical Industries, Ltd.), and water (92.7 g) were mixed in a ball mill. Then, a zinc mixture electrode was produced in the same manner as in Example 5 and was used as a working electrode (zinc mixture weight: 1.16 mg) having an apparent area of 0.48 cm². In the same manner as in Example 5, a charge and discharge test was performed using the three-electrode cell at a current of 0.554 mA (charge and discharge times: 1 hour).

### (Example 9)

Zinc oxide (27.6 g, average particle size: about 1.1 µm, mode diameter: about 820 nm, median diameter: about 760 nm, true density: about 5.98 g/cm³, specific surface area: about 4 m²/g), acetylene black (0.90 g, average particle size: about 50 nm, specific surface area: about 40 m²/g), bismuth (III) oxide (2.4 g, 99.9%, Wako Pure Chemical Industries, Ltd.), ethanol (92.7 g, 99.5%, Wako Pure Chemical Industries, Ltd.), and water (92.7 g) were mixed in a ball mill. Then, a zinc mixture electrode was produced in the same manner as in Example 5 and was used as a working electrode (zinc mixture weight: 1.32 mg) having an apparent area of 0.48 cm². In the same manner as in Example 5, a charge and discharge test was performed using the three-electrode cell at a current of 0.675 mA (charge and discharge times: 1 hour).

### (Example 10)

Zinc oxide (27.6 g, average particle size: about 1.1 µm, mode diameter: about 820 nm, median diameter: about 760 nm, true density: about 5.98 g/cm³, specific surface area: about 4 m²/g), acetylene black (0.90 g, average particle size: about 50 nm, specific surface area: about 40 m²/g), titanium (IV) oxide (2.4 g, anatase-type, Wako Pure Chemical Industries, Ltd.), ethanol (92.7 g, 99.5%, Wako Pure Chemical Industries, Ltd.), and water (92.7 g) were mixed in a ball mill. Then, a zinc mixture electrode was produced in the same manner as in Example 5 and was used as a working electrode (zinc mixture weight: 1.09 mg) having an apparent area of 0.48 cm². In the same manner as in Example 5, a charge and discharge test was performed using the three-electrode cell at a current of 0.519 mA (charge and discharge times: 1 hour).

### (Example 11)

Zinc oxide (27.6 g, average particle size: about 1.1 µm, mode diameter: about 820 nm, median diameter: about 760 nm, true density: about 5.98 g/cm³, specific surface area: about 4 m²/g), acetylene black (0.90 g, average particle size: about 50 nm, specific surface area: about 40 m²/g), niobium (V) oxide (2.4 g, 99.9%, Wako Pure Chemical Industries, Ltd.), ethanol (92.7 g, 99.5%, Wako Pure Chemical Industries, Ltd.), and water (92.7 g) were mixed in a ball mill. Then, a zinc mixture electrode was produced in the same manner as in Example 5 and was used as a working electrode (zinc mixture weight: 1.47 mg) having an apparent area of 0.48 cm². In the same manner as in Example 5, a charge and discharge test was performed using the three-electrode cell at a current of 0.703 mA (charge and discharge times: 1 hour). The surface of the zinc mixture electrode after the charge and discharge test was observed using an SEM, showing neither shape change nor passivation of the zinc electrode active material.

### (Example 12)

Zinc oxide (27.6 g, average particle size: about 1.1 µm, mode diameter: about 820 nm, median diameter: about 760 nm, true density: about 5.98 g/cm³, specific surface area: about 4 m²/g), acetylene black (0.90 g, average particle size: about 50 nm, specific surface area: about 40 m²/g), cerium (IV) oxide (2.4 g, Wako Pure Chemical Industries, Ltd.), ethanol (92.7 g, 99.5%, Wako Pure Chemical Industries, Ltd.), and water (92.7 g) were mixed in a ball mill. Then, a zinc mixture electrode was produced in the same manner as in Example 5 and was used as a working electrode (zinc mixture weight: 1.28 mg) having an apparent area of 0.48 cm². In the same manner as in Example 5, a charge and discharge test was performed using the three-electrode cell at a current of 0.610 mA (charge and discharge times: 1 hour). The surface of the zinc mixture electrode after the charge and discharge test was observed using an SEM, showing neither shape change nor passivation of the zinc electrode active material.

### (Example 13)

Zinc oxide (27.6 g, average particle size: about 1.1 µm, mode diameter: about 820 nm, median diameter: about 760 nm, true density: about 5.98 g/cm³, specific surface area: about 4 m²/g), indium (III) oxide (2.4 g, NACALAI TESQUE, INC.), and water (180.0 g) were mixed in a ball mill. Then, a zinc mixture electrode was produced in the same manner as in Example 5 and was used as a working electrode (zinc mixture weight: 1.46 mg) having an apparent area of 0.48 cm². In the same manner as in Example 5, a charge and discharge test was performed using the three-electrode cell at a current of 0.699 mA (charge and discharge times: 1 hour).

### (Example 14)

Zinc oxide (27.6 g, average particle size: about 1.1 µm, mode diameter: about 820 nm, median diameter: about 760 nm, true density: about 5.98 g/cm³, specific surface area: about 4 m²/g), acetylene black (0.90 g, average particle size: about 50 nm, specific surface area: about 40 m²/g), manganese (II) oxide (2.4 g, KISHIDA CHEMICAL Co., Ltd.), ethanol (92.7 g, 99.5%, Wako Pure Chemical Industries, Ltd.), and water (92.7 g) were mixed in a ball mill. Then, a zinc mixture electrode was produced in the same manner as in Example 5 and was used as a working electrode (zinc mixture weight: 1.47 mg) having an apparent area of 0.48 cm². In the same manner as in Example 5, a charge and discharge test was performed using the three-electrode cell at a current of 0.701 mA (charge and discharge times: 1 hour).

### (Example 15)

Zinc oxide (27.6 g, average particle size: about 1.1 µm, mode diameter: about 820 nm, median diameter: about 760 nm, true density: about 5.98 g/cm³, specific surface area: about 4 m²/g), acetylene black (0.90 g, average particle size: about 50 nm, specific surface area: about 40 m²/g), manganese (IV) oxide (2.4 g, 99.5%, Wako Pure Chemical Industries, Ltd.), ethanol (92.7 g, 99.5%, Wako Pure Chemical Industries, Ltd.), and water (92.7 g) were mixed in a ball mill. Then, a zinc mixture electrode was produced in the same manner as in Example 5 and was used as a working electrode (zinc mixture weight: 1.15 mg) having an apparent area of 0.48 cm². In the same manner as in Example 5, a charge and discharge test was performed using the three-electrode cell at a current of 0.547 mA (charge and discharge times: 1 hour).

### (Example 16)

Zinc oxide (27.6 g, average particle size: about 1.1 µm, mode diameter: about 820 nm, median diameter: about 760 nm, true density: about 5.98 g/cm³, specific surface area: about 4 m²/g), acetylene black (0.9 g, average particle size: about 50 nm, specific surface area: about 40 m²/g), zirconium (IV) oxide (2.4 g, Wako Pure Chemical Industries, Ltd.), ethanol (92.7 g, 99.5%, Wako Pure Chemical Industries, Ltd.), and water (92.7 g) were mixed in a ball mill. Then, a zinc mixture electrode was produced in the same manner as in Example 5 and was used as a working electrode (zinc mixture weight: 1.51 mg) having an apparent area of 0.48 cm². In the same manner as in Example 5, a charge and discharge test was performed using the three-electrode cell at a current of 0.720 mA (charge and discharge times: 1 hour). The surface of the zinc mixture electrode after the charge and discharge test was observed using an SEM, showing neither shape change nor passivation of the zinc electrode active material.

### (Example 17)

Zinc oxide (27.6 g, average particle size: about 1.1 µm, mode diameter: about 820 nm, median diameter: about 760 nm, true density: about 5.98 g/cm³, specific surface area: about 4 m²/g), acetylene black (0.9 g, average particle size: about 50 nm, specific surface area: about 40 m²/g), calcium hydroxide (2.4 g, Wako Pure Chemical Industries, Ltd.), ethanol (92.7 g, 99.5%, Wako Pure Chemical Industries, Ltd.), and water (92.7 g) were mixed in a ball mill. Then, a zinc mixture electrode was produced in the same manner as in Example 5 and was used as a working electrode (zinc mixture weight: 1.38 mg) having an apparent area of 0.48 cm². In the same manner as in Example 5, a charge and discharge test was performed using the three-electrode cell at a current of 0.658 mA (charge and discharge times: 1 hour/).

### (Example 18)

Zinc oxide (27.6 g, zinc oxide #2, average particle size: about 1.9 µm, mode diameter: about 820 nm, median diameter: about 906 nm, true density: about 5.89 g/cm³, specific surface area: about 4 m²/g), acetylene black (0.9 g, average particle size: about 50 nm, specific surface area: about 40 m²/g), indium (III) oxide (2.4 g, NACALAI TESQUE, INC.), ethanol (92.7 g, 99.5%, Wako Pure Chemical Industries, Ltd.), and water (92.7 g) were mixed in a ball mill. Then, a zinc mixture electrode was produced in the same manner as in Example 5 and was used as a working electrode (zinc mixture weight: 1.59 mg) having an apparent area of 0.48 cm². In the same manner as in Example 5, a charge and discharge test was performed using the three-electrode cell at a current of 0.759 mA (charge and discharge times: 1 hour).

### (Example 19)

Needle-like zinc oxide (27.6 g, average major axis diameter: 100 nm, average minor axis diameter: 20 nm, average aspect ratio: 5, specific surface area: 30 m²/g), acetylene black (0.9 g, average particle size: about 50 nm, specific surface area: about 40 m²/g), cerium (IV) oxide (2.4 g, Wako Pure Chemical Industries, Ltd.), ethanol (92.7 g, 99.5%, Wako Pure Chemical Industries, Ltd.), and water (92.7 g) were mixed in a ball mill. Then, a zinc mixture electrode was produced in the same manner as in Example 5 and was used as a working electrode (zinc mixture weight: 3.71 mg) having an apparent area of 0.48 cm². In the same manner as in Example 5, a charge and discharge test was performed using the three-electrode cell at a current of 1.77 mA (charge and discharge times: 1 hour, cut off at - 0.1 V and 0.4 V).

### (Example 20)

Needle-like zinc oxide (27.6 g, average major axis diameter: 900 nm, average minor axis diameter: 60 nm, average aspect ratio: 15, specific surface area: 4 m²/g), acetylene black (0.9 g, average particle size: about 50 nm, specific surface area: about 40 m²/g), cerium (IV) oxide (2.4 g, Wako Pure Chemical Industries, Ltd.), ethanol (92.7 g, 99.5%, Wako Pure Chemical Industries, Ltd.), and water (92.7 g) were mixed in a ball mill. Then, a zinc mixture electrode was produced in the same manner as in Example 5 and was used as a working electrode (zinc mixture weight: 1.64 mg) having an apparent area of 0.48 cm². In the same manner as in Example 5, a charge and discharge test was performed using the three-electrode cell at a current of 0.784 mA (charge and discharge times: 1 hour).

### (Example 21)

Zinc oxide (22.1 g, average particle size: about 2.0 µm, mode diameter: about 710 nm, median diameter: about 1.0 µm, true density: about 5.91 g/cm³, specific surface area: 3.3 m²/g), needle-like zinc oxide (5.5 g, average major axis diameter: 100 nm, average minor axis diameter: 20 nm, average aspect ratio: 5, specific surface area: 30 m²/g), acetylene black (0.9 g, average particle size: about 50 nm, specific surface area: about 40 m²/g), cerium (IV) oxide (2.4 g, Wako Pure Chemical Industries, Ltd.), ethanol (92.7 g, 99.5%, Wako Pure Chemical Industries, Ltd.), and water (92.7 g) were mixed in a ball mill. Then, a zinc mixture electrode was produced in the same manner as in Example 5 and was used as a working electrode (zinc mixture weight: 1.78 mg) having an apparent area of 0.48 cm². In the same manner as in Example 5, a charge and discharge test was performed using the three-electrode cell at a current of 0.848 mA (charge and discharge times: 1 hour).

### (Example 22)

Zinc oxide (22.1 g, average particle size: about 2.0 µm, mode diameter: about 710 nm, median diameter: about 1.0 µm, true density: about 5.91 g/cm³), zinc oxide (5.5 g, average particle size: 5.5 µm, true density: about 5.75 g/cm³), acetylene black (0.9 g, average particle size: about 50 nm, specific surface area: about 40 m²/g), cerium (IV) oxide (2.4 g, Wako Pure Chemical Industries, Ltd.), ethanol (92.7 g, 99.5%, Wako Pure Chemical Industries, Ltd.), and water (92.7 g) were mixed in a ball mill. Then, a zinc mixture electrode was produced in the same manner as in Example 5 and was used as a working electrode (zinc mixture weight: 1.66 mg) having an apparent area of 0.48 cm². In the same manner as in Example 5, a charge and discharge test was performed using the three-electrode cell at a current of 0.792 mA (charge and discharge times).

### (Example 23)

Zinc oxide (27.6 g, average particle size: about 1.1 µm, mode diameter: about 820 nm, median diameter: about 760 nm, true density: about 5.98 g/cm³, specific surface area: about 4 m²/g), conductive carbon black (0.9 g, average particle size: about 25 nm, specific surface area: about 225 m²/g), cerium (IV) oxide (2.4 g, Wako Pure Chemical Industries, Ltd.), ethanol (92.7 g, 99.5%, Wako Pure Chemical Industries, Ltd.), and water (92.7 g) were mixed in a ball mill. Then, a zinc mixture electrode was produced in the same manner as in Example 5 and was used as a working electrode (zinc mixture weight: 1.55 mg) having an apparent area of 0.48 cm². In the same manner as in Example 5, a charge and discharge test was performed using the three-electrode cell at a current of 0.739 mA (charge and discharge times: 1 hour).

### (Example 24)

Zinc oxide (27.6 g, average particle size: about 1.1 µm, mode diameter: about 820 nm, median diameter: about 760 nm, true density: about 5.98 g/cm³, specific surface area: about 4 m²/g), artificial graphite fine powder (0.9 g, average particle size: about 3 µm, specific surface area: about 40 m²/g), cerium (IV) oxide (2.4 g, Wako Pure Chemical Industries, Ltd.), ethanol (92.7 g, 99.5%, Wako Pure Chemical Industries, Ltd.), and water (92.7 g) were mixed in a ball mill. Then, a zinc mixture electrode was produced in the same manner as in Example 5 and was used as a working electrode (zinc mixture weight: 1.46 mg) having an apparent area of 0.48 cm². In the same manner as in Example 5, a charge and discharge test was performed using the three-electrode cell at a current of 0.696 mA (charge and discharge times: 1 hour).

### (Example 25)

Zinc oxide (27.6 g, average particle size: about 1.1 µm, mode diameter: about 820 nm, median diameter: about 760 nm, true density: about 5.98 g/cm³, specific surface area: about 4 m²/g), artificial graphite fine powder (0.9 g, average particle size: about 10 µm, specific surface area: about 15 m²/g), cerium (IV) oxide (2.4 g, Wako Pure Chemical Industries, Ltd.), ethanol (92.7 g, 99.5%, Wako Pure Chemical Industries, Ltd.), and water (92.7 g) were mixed in a ball mill. Then, a zinc mixture electrode was produced in the same manner as in Example 5 and was used as a working electrode (zinc mixture weight: 1.22 mg) having an apparent area of 0.48 cm². In the same manner as in Example 5, a charge and discharge test was performed using the three-electrode cell at a current of 0.583 mA (charge and discharge times: 1 hour).

### (Preparation Example)

A 5-L separable flask was charged with calcium hydroxide (88.9 g, Wako Pure Chemical Industries, Ltd.) and water (1930 g), and the substances were stir-mixed to provide an aqueous suspension. The aqueous suspension was warmed to 60°C. A 10% by mass aluminum sulfate aqueous solution (684.3 g) was put into the separable flask while the stirring was continued, and the stir-mixing was continued for four hours while the liquid temperature was kept at 60°C. Then, the stirring was stopped and the liquid was cooled down to room temperature, and the liquid mixture was left to stand overnight. Next, the precipitate was separated by filtration. The obtained precipitate was identified by X-ray diffraction, and this precipitate was proved to be ettringite (Ca₆Al₂(SO₄)₃(OH)₁₂·26H₂O). The obtained precipitate was dried using a stationary-type dryer at 100°C for one day, and then pulverized using a pulverizer (WARING, X-TREME MX1200XTM) at 18000 rpm for 60 seconds, thereby providing a dried, desiccated powder of ettringite.

### (Example 26)

Zinc oxide (27.6 g, average particle size: about 1.1 µm, mode diameter: about 820 nm, median diameter: about 760 nm, true density: about 5.98 g/cm³, specific surface area: about 4 m²/g), acetylene black (0.9 g, average particle size: about 50 nm, specific surface area: about 40 m²/g), the dried, desiccated powder of ettringite obtained in the Preparation Example (2.4 g), ethanol (92.7 g, 99.5%, Wako Pure Chemical Industries, Ltd.), and water (92.7 g) were mixed in a ball mill. Then, a zinc mixture electrode was produced in the same manner as in Example 5 and was used as a working electrode (zinc mixture weight: 1.13 mg) having an apparent area of 0.48 cm². In the same manner as in Example 5, a charge and discharge test was performed using the three-electrode cell at a current of 0.540 mA (charge and discharge times: 1 hour). The surface of the zinc mixture electrode after the charge and discharge test was observed using an SEM, showing neither shape change nor passivation of the zinc electrode active material.

### (Example 27)

Zinc oxide (27.6 g, average particle size: about 1.1 µm, mode diameter: about 820 nm, median diameter: about 760 nm, true density: about 5.98 g/cm³, specific surface area: about 4 m²/g), graphitized carbon black (0.9 g, average particle size: about 70 nm, specific surface area: about 27 m²/g), cerium (IV) oxide (2.4 g, Wako Pure Chemical Industries, Ltd.), ethanol (92.7 g, 99.5%, Wako Pure Chemical Industries, Ltd.), and water (92.7 g) were mixed in a ball mill. Then, a zinc mixture electrode was produced in the same manner as in Example 5 and was used as a working electrode (zinc mixture weight: 1.29 mg) having an apparent area of 0.48 cm². In the same manner as in Example 5, a charge and discharge test was performed using the three-electrode cell at a current of 0.597 mA (charge and discharge times: 1 hour).

### (Example 28)

Zinc oxide (27.6 g, average particle size: about 1.1 µm, mode diameter: about 820 nm, median diameter: about 760 nm, true density: about 5.98 g/cm³, specific surface area: about 4 m²/g), Ketjenblack (0.9 g, average particle size: about 40 nm, specific surface area: about 800 m²/g), cerium (IV) oxide (2.4 g, Wako Pure Chemical Industries, Ltd.), ethanol (92.7 g, 99.5%, Wako Pure Chemical Industries, Ltd.), and water (92.7 g) were mixed in a ball mill. Then, a zinc mixture electrode was produced in the same manner as in Example 5 and was used as a working electrode (zinc mixture weight: 1.21 mg) having an apparent area of 0.48 cm². In the same manner as in Example 5, a charge and discharge test was performed using the three-electrode cell at a current of 0.580 mA (charge and discharge times: 1 hour).

### (Example 29)

Zinc oxide (27.6 g, average particle size: about 1.1 µm, mode diameter: about 820 nm, median diameter: about 760 nm, true density: about 5.98 g/cm³, specific surface area: about 4 m²/g), carbon black (0.9 g, average particle size: about 30 nm, specific surface area: about 250 m²/g), cerium (IV) oxide (2.4 g, Wako Pure Chemical Industries, Ltd.), ethanol (92.7 g, 99.5%, Wako Pure Chemical Industries, Ltd.), and water (92.7 g) were mixed in a ball mill. Then, a zinc mixture electrode was produced in the same manner as in Example 5 and was used as a working electrode (zinc mixture weight: 0.875 mg) having an apparent area of 0.48 cm². In the same manner as in Example 5, a charge and discharge test was performed using the three-electrode cell at a current of 0.418 mA (charge and discharge times: 1 hour).

### (Example 30)

The zinc mixture electrode produced in Example 12 was used as a working electrode (zinc mixture weight: 1.82 mg) having an apparent area of 0.79 cm². The counter electrode was a nickel electrode (active material: nickel hydroxide, the capacity was set three times or more as high as that of the zinc electrode), and the electrolyte solution was a saturated solution of zinc oxide in an aqueous solution of 7.3 mol/L potassium hydroxide and 1.0 mol/L potassium fluoride (dissolved oxygen concentration: 2.9 mg/L). A charge and discharge test was performed using the two-electrode cell at a current of 1.20 mA (charge and discharge times: 1 hour, cut off at 1.9 V and 1.2 V). This charge and discharge test proved that the cell was stably used at least 300 cycles.

### (Example 31)

The zinc mixture electrode produced in Example 12 was used as a working electrode (zinc mixture weight: 6.21 mg) having an apparent area of 2.0 cm². The counter electrode was a nickel electrode (active material: cobalt-coated nickel hydroxide, the capacity was set three times or more as high as that of the zinc electrode), and the electrolyte solution was a saturated solution of zinc oxide in an aqueous solution of 7.3 mol/L potassium hydroxide (dissolved oxygen concentration: 3.2 mg/L). Nonwoven fabrics (two sheets) and a polypropylene microporous membrane (one sheet) were interposed between the zinc electrode and the nickel electrode as separators to form a coin cell, and a charge and discharge test was performed using the coin cell at a current of 3.01 mA (charge and discharge times: 1 hour, cut off at 1.9 V and 1.2 V).

### (Example 32)

The zinc mixture electrode produced in Example 12 was used as a working electrode (zinc mixture weight: 10.3 mg) having an apparent area of 2.0 cm². The counter electrode was a nickel electrode (active material: cobalt-coated nickel hydroxide, the capacity was set three times or more as high as that of the zinc electrode) and the electrolyte solution was a saturated solution of zinc oxide in an aqueous solution of 7.3 mol/L potassium hydroxide (dissolved oxygen concentration: 3.2 mg/L). Nonwoven fabrics (two sheets) and a polypropylene microporous membrane (one sheet) were interposed between the zinc electrode and the nickel electrode as separators to form a coin cell, and a charge and discharge test was performed using the coin cell at a current of 1.49 mA (charge and discharge times: 3 hours 20 minutes, cut off at 1.9 V and 1.2 V).

### (Example 33)

A zinc plate was immersed in an 8 M KOH aqueous solution (dissolved oxygen concentration: 3.5 mg/L or 6.8 mg/L) for five hours, and the surface of the zinc plate was observed using Miniscope TM3000 (Hitachi High-Technologies Corp.).

### (Example 34)

A zinc mixture electrode was produced according to the composition in Example 11, and a charge and discharge test was performed using the same device under the same conditions as in Example 11 (10 cycles). The charging capacity at the 10th cycle was 657 mAh/g. Then, a discharge operation was performed under the same conditions, so that the whole zinc oxide in the zinc mixture electrode was converted into zinc metal. The cell was left to stand for 24 hours, and a charge operation was performed under the same conditions. The test proved that the discharging capacity at that time was 657 mAh/g and no self-discharge occurred.

### (Example 35)

A zinc mixture electrode was produced according to the composition in Example 12, and a charge and discharge test was performed using the same device under the same conditions as in Example 12 (10 cycles). The charging capacity at the 10th cycle was 655 mAh/g. Then, a discharge operation was performed under the same conditions, so that the whole zinc oxide in the zinc mixture electrode was converted into zinc metal. The cell was left to stand for 24 hours, and a charge operation was performed under the same conditions. The test proved that the discharging capacity at that time was 630 mAh/g and self-discharge hardly occurred.

### (Example 36)

A zinc mixture electrode was produced according to the composition in Example 16, and a charge and discharge test was performed using the same device under the same conditions as in Example 16 (10 cycles). The charging capacity at the 10th cycle was 658 mAh/g. Then, a discharge operation was performed under the same conditions, so that the whole zinc oxide in the zinc mixture electrode was converted into zinc metal. The cell was left to stand for 24 hours, and a charge operation was performed under the same conditions. The test proved that the discharging capacity at that time was 658 mAh/g and no self-discharge occurred.

### (Example 37)

A zinc mixture electrode was produced according to the composition in Example 24, and a charge and discharge test was performed using the same device under the same conditions as in Example 24 (10 cycles). The charging capacity at the 10th cycle was 650 mAh/g. Then, a discharge operation was performed under the same conditions, so that the whole zinc oxide in the zinc mixture electrode was converted into zinc metal. The cell was left to stand for 24 hours, and a charge operation was performed under the same conditions. The test proved that the discharging capacity at that time was 574 mAh/g and self-discharge was effectively suppressed.

### (Example 38)

A zinc mixture electrode was produced according to the composition in Example 4, and a charge and discharge test was performed using the same device under the same conditions as in Example 4 (10 cycles). The charging capacity at the 10th cycle was 380 mAh/g. Then, a discharge operation was performed under the same conditions, so that the whole zinc oxide in the zinc mixture electrode was converted into zinc metal. The cell was left to stand for 24 hours, and a charge operation was performed under the same conditions. The test proved that the discharging capacity at that time was 0 mAh/g and self-discharge occurred.

### (Example 39)

Zinc oxide (27.6 g, average particle size: about 1.1 µm, mode diameter: about 820 nm, median diameter: about 760 nm, true density: about 5.98 g/cm³, specific surface area: about 4 m²/g), conductive carbon black (0.9 g, average particle size: about 25 nm, specific surface area: about 225 m²/g), zirconium (IV) oxide (2.4 g, Wako Pure Chemical Industries, Ltd.), ethanol (92.7 g, 99.5%, Wako Pure Chemical Industries, Ltd.), and water (92.7 g) were mixed in a ball mill. Then, a zinc mixture electrode was produced in the same manner as in Example 5 and was used as a working electrode (zinc mixture weight: 1.57 mg) having an apparent area of 0.48 cm². In the same manner as in Example 5, a charge and discharge test was performed using the three-electrode cell at a current of 0.762 mA (charge and discharge times: 1 hour). The charging capacity at the 10th cycle was 654 mAh/g. Then, a discharge operation was performed under the same conditions, so that the whole zinc oxide in the zinc mixture electrode was converted into zinc metal. The cell was left to stand for 24 hours, and a charge operation was performed under the same conditions. The test proved that the discharging capacity at that time was 655 mAh/g and no self-discharge occurred.

### (Example 40)

Zinc oxide (27.6 g, average particle size: about 1.1 µm, mode diameter: about 820 nm, median diameter: about 760 nm, true density: about 5.98 g/cm³, specific surface area: about 4 m²/g), graphitized carbon black (0.9 g, average particle size: about 70 nm, specific surface area: about 27 m²/g), zirconium (IV) oxide (2.4 g, Wako Pure Chemical Industries, Ltd.), ethanol (92.7 g, 99.5%, Wako Pure Chemical Industries, Ltd.), and water (92.7 g) were mixed in a ball mill. Then, a zinc mixture electrode was produced in the same manner as in Example 5 and was used as a working electrode (zinc mixture weight: 2.45 mg) having an apparent area of 0.48 cm². In the same manner as in Example 5, a charge and discharge test was performed using the three-electrode cell at a current of 1.19 mA (charge and discharge times: 1 hour). The charging capacity at the 10th cycle was 658 mAh/g. Then, a discharge operation was performed under the same conditions, so that the whole zinc oxide in the zinc mixture electrode was converted into zinc metal. The cell was left to stand for 24 hours, and a charge operation was performed under the same conditions. The test proved that the discharging capacity at that time was 638 mAh/g and self-discharge hardly occurred.

### (Example 41)

Zinc oxide (27.6 g, average particle size: about 1.1 µm, mode diameter: about 820 nm, median diameter: about 760 nm, true density: about 5.98 g/cm³, specific surface area: about 4 m²/g), artificial graphite fine powder (0.9 g, average particle size: about 3 µm, specific surface area: about 40 m²/g), zirconium (IV) oxide (2.4 g, Wako Pure Chemical Industries, Ltd.), ethanol (92.7 g, 99.5%, Wako Pure Chemical Industries, Ltd.), and water (92.7 g) were mixed in a ball mill. Then, a zinc mixture electrode was produced in the same manner as in Example 5 and was used as a working electrode (zinc mixture weight: 2.85 mg) having an apparent area of 0.48 cm². In the same manner as in Example 5, a charge and discharge test was performed using the three-electrode cell at a current of 1.38 mA (charge and discharge times: 1 hour). The charging capacity at the 10th cycle was 647 mAh/g. Then, a discharge operation was performed under the same conditions, so that the whole zinc oxide in the zinc mixture electrode was converted into zinc metal. The cell was left to stand for 24 hours, and a charge operation was performed under the same conditions. The test proved that the discharging capacity at that time was 620 mAh/g and self-discharge hardly occurred.

### (Example 42)

Zinc oxide (27.6 g, average particle size: about 1.1 µm, mode diameter: about 820 nm, median diameter: about 760 nm, true density: about 5.98 g/cm³, specific surface area: about 4 m²/g), Ketjenblack (0.9 g, average particle size: about 40 nm, specific surface area: about 800 m²/g), zirconium (IV) oxide (2.4 g, Wako Pure Chemical Industries, Ltd.), ethanol (92.7 g, 99.5%, Wako Pure Chemical Industries, Ltd.), and water (92.7 g) were mixed in a ball mill. Then, a zinc mixture electrode was produced in the same manner as in Example 5 and was used as a working electrode (zinc mixture weight: 1.59 mg) having an apparent area of 0.48 cm². In the same manner as in Example 5, a charge and discharge test was performed using the three-electrode cell at a current of 0.769 mA (charge and discharge times: 1 hour). The charging capacity at the 10th cycle was 647 mAh/g. Then, a discharge operation was performed under the same conditions, so that the whole zinc oxide in the zinc mixture electrode was converted into zinc metal. The cell was left to stand for 24 hours, and a charge operation was performed under the same conditions. The test proved that the discharging capacity at that time was 620 mAh/g and self-discharge hardly occurred.

### (Example 43)

Zinc oxide (27.6 g, average particle size: about 1.1 µm, mode diameter: about 820 nm, median diameter: about 760 nm, true density: about 5.98 g/cm³, specific surface area: about 4 m²/g), carbon black (0.9 g, average particle size: about 12 nm, specific surface area: about 1200 m²/g), cerium (IV) oxide (2.4 g, Wako Pure Chemical Industries, Ltd.), ethanol (92.7 g, 99.5%, Wako Pure Chemical Industries, Ltd.), and water (92.7 g) were mixed in a ball mill. Then, a zinc mixture electrode was produced in the same manner as in Example 5 and was used as a working electrode (zinc mixture weight: 2.06 mg) having an apparent area of 0.48 cm². In the same manner as in Example 5, a charge and discharge test was performed using the three-electrode cell at a current of 0.991 mA (charge and discharge times: 1 hour).

### (Example 44)

Zinc oxide (27.6 g, average particle size: about 1.1 µm, mode diameter: about 820 nm, median diameter: about 760 nm, true density: about 5.98 g/cm³, specific surface area: about 4 m²/g), scaly natural graphite (0.9 g, average particle size: about 6.5 µm), cerium (IV) oxide (2.4 g, Wako Pure Chemical Industries, Ltd.), ethanol (92.7 g, 99.5%, Wako Pure Chemical Industries, Ltd.), and water (92.7 g) were mixed in a ball mill. Then, a zinc mixture electrode was produced in the same manner as in Example 5 and was used as a working electrode (zinc mixture weight: 2.74 mg) having an apparent area of 0.48 cm². In the same manner as in Example 5, a charge and discharge test was performed using the three-electrode cell at a current of 1.33 mA (charge and discharge times: 1 hour).

### (Example 45)

Zinc oxide (27.6 g, average particle size: about 1.1 µm, mode diameter: about 820 nm, median diameter: about 760 nm, true density: about 5.98 g/cm³, specific surface area: about 4 m²/g), bulk natural graphite (0.9 g, average particle size: about 7.8 µm), cerium (IV) oxide (2.4 g, Wako Pure Chemical Industries, Ltd.), ethanol (92.7 g, 99.5%, Wako Pure Chemical Industries, Ltd.), and water (92.7 g) were mixed in a ball mill. Then, a zinc mixture electrode was produced in the same manner as in Example 5 and was used as a working electrode (zinc mixture weight: 1.57 mg) having an apparent area of 0.48 cm². In the same manner as in Example 5, a charge and discharge test was performed using the three-electrode cell at a current of 0.762 mA (charge and discharge times: 1 hour).

### (Example 46)

Zinc oxide (27.6 g, average particle size: about 1.1 µm, mode diameter: about 820 nm, median diameter: about 760 nm, true density: about 5.98 g/cm³, specific surface area: about 4 m²/g), pyrolytic graphite (0.9 g, average particle size: about 6.9 µm), cerium (IV) oxide (2.4 g, Wako Pure Chemical Industries, Ltd.), ethanol (92.7 g, 99.5%, Wako Pure Chemical Industries, Ltd.), and water (92.7 g) were mixed in a ball mill. Then, a zinc mixture electrode was produced in the same manner as in Example 5 and was used as a working electrode (zinc mixture weight: 1.80 mg) having an apparent area of 0.48 cm². In the same manner as in Example 5, a charge and discharge test was performed using the three-electrode cell at a current of 0.872 mA (charge and discharge times: 1 hour).

### (Example 47)

Zinc oxide (27.6 g, average particle size: about 1.1 µm, mode diameter: about 820 nm, median diameter: about 760 nm, true density: about 5.98 g/cm³, specific surface area: about 4 m²/g), spherical graphite (0.9 g, average particle size: about 8.6 µm), cerium (IV) oxide (2.4 g, Wako Pure Chemical Industries, Ltd.), ethanol (92.7 g, 99.5%, Wako Pure Chemical Industries, Ltd.), and water (92.7 g) were mixed in a ball mill. Then, a zinc mixture electrode was produced in the same manner as in Example 5 and was used as a working electrode (zinc mixture weight: 2.00 mg) having an apparent area of 0.48 cm². In the same manner as in Example 5, a charge and discharge test was performed using the three-electrode cell at a current of 0.968 mA (charge and discharge times: 1 hour).

### (Example 48)

Zinc oxide (27.6 g, average particle size: about 1.1 µm, mode diameter: about 820 nm, median diameter: about 760 nm, true density: about 5.98 g/cm³, specific surface area: about 4 m²/g), graphitized carbon microspheres (0.9 g, average particle size: about 270 nm), cerium (IV) oxide (2.4 g, Wako Pure Chemical Industries, Ltd.), ethanol (92.7 g, 99.5%, Wako Pure Chemical Industries, Ltd.), and water (92.7 g) were mixed in a ball mill. Then, a zinc mixture electrode was produced in the same manner as in Example 5 and was used as a working electrode (zinc mixture weight: 1.84 mg) having an apparent area of 0.48 cm². In the same manner as in Example 5, a charge and discharge test was performed using the three-electrode cell at a current of 0.890 mA (charge and discharge times: 1 hour).

### (Example 49)

Zinc oxide (30 g, average particle size: about 1.1 µm, mode diameter: about 820 nm, median diameter: about 760 nm, true density: about 5.98 g/cm³, specific surface area: about 4 m²/g), acetylene black (0.90 g, average particle size: about 40 nm, specific surface area: about 70 m²/g), ethanol (92.7 g, 99.5%, Wako Pure Chemical Industries, Ltd.), and water (92.7 g) were mixed in a ball mill. Then, a zinc mixture electrode was produced in the same manner as in Example 5 and was used as a working electrode (zinc mixture weight: 2.74 mg) having an apparent area of 0.48 cm². In the same manner as in Example 5, a charge and discharge test was performed using the three-electrode cell at a current of 1.33 mA (charge and discharge times: 1 hour). The surface of the zinc mixture electrode after the charge and discharge test was observed using an SEM, and the observation revealed that the shape of zinc electrode active material was changed.

### (Example 50)

A zinc mixture electrode was produced according to the composition in Example 49, and a charge and discharge test was performed using the same device under the same conditions as in Example 49 (10 cycles). The charging capacity at the 10th cycle was 582 mAh/g. Then, a discharge operation was performed under the same conditions, so that the whole zinc oxide in the zinc mixture electrode was converted into zinc metal. The cell was left to stand for 24 hours, and a charge operation was performed under the same conditions. The test proved that the discharging capacity at that time was 0 mAh/g and self-discharge occurred.

### (Example 51)

Zinc oxide (27.6 g, zinc oxide #3, average particle size: about 800 nm, mode diameter: about 107 nm, median diameter: about 368 nm, true density: about 5.85 g/cm³, specific surface area: about 4 m²/g), acetylene black (0.9 g, average particle size: about 50 nm, specific surface area: about 40 m²/g), cerium (IV) oxide (2.4 g, Wako Pure Chemical Industries, Ltd.), ethanol (92.7 g, 99.5%, Wako Pure Chemical Industries, Ltd.), and water (92.7 g) were mixed in a ball mill. Then, a zinc mixture electrode was produced in the same manner as in Example 5 and was used as a working electrode (zinc mixture weight: 1.90 mg) having an apparent area of 0.48 cm². In the same manner as in Example 5, a charge and discharge test was performed using the three-electrode cell at a current of 0.919 mA (charge and discharge times: 1 hour).

### (Example 52)

A zinc mixture electrode was produced according to the composition in Example 51, and a charge and discharge test was performed using the same device under the same conditions as in Example 51 (10 cycles). The charging capacity at the 10th cycle was 470 mAh/g. Then, a discharge operation was performed under the same conditions, so that the whole zinc oxide in the zinc mixture electrode was converted into zinc metal. The cell was left to stand for 24 hours, and a charge operation was performed under the same conditions. The test proved that the discharging capacity at that time was 0 mAh/g and self-discharge occurred.

### (Example 53)

Zinc oxide (27.6 g, zinc oxide #2, average particle size: about 1.1 µm, mode diameter: about 930 nm, median diameter: about 810 nm, true density: about 5.70 g/cm³, specific surface area: about 4 m²/g), acetylene black (0.9 g, average particle size: about 50 nm, specific surface area: about 40 m²/g), cerium (IV) oxide (2.4 g, Wako Pure Chemical Industries, Ltd.), ethanol (92.7 g, 99.5%, Wako Pure Chemical Industries, Ltd.), and water (92.7 g) were mixed in a ball mill. Then, a zinc mixture electrode was produced in the same manner as in Example 5 and was used as a working electrode (zinc mixture weight: 2.19 mg) having an apparent area of 0.48 cm². In the same manner as in Example 5, a charge and discharge test was performed using the three-electrode cell at a current of 1.06 mA (charge and discharge times: 1 hour).

### (Example 54)

A zinc mixture electrode was produced according to the composition in Example 53, and a charge and discharge test was performed using the same device under the same conditions as in Example 53 (10 cycles). The charging capacity at the 10th cycle was 610 mAh/g. Then, a discharge operation was performed under the same conditions, so that the whole zinc oxide in the zinc mixture electrode was converted into zinc metal. The cell was left to stand for 24 hours, and a charge operation was performed under the same conditions. The test proved that the discharging capacity at that time was 0 mAh/g and self-discharge occurred.

### (Example 55)

Zinc oxide (27.6 g, zinc oxide #2, average particle size: about 1.1 µm, mode diameter: about 820 nm, median diameter: about 880 nm, true density: about 6.00 g/cm³, specific surface area: about 4 m²/g), acetylene black (0.9 g, average particle size: about 50 nm, specific surface area: about 40 m²/g), cerium (IV) oxide (2.4 g, Wako Pure Chemical Industries, Ltd.), ethanol (92.7 g, 99.5%, Wako Pure Chemical Industries, Ltd.), and water (92.7 g) were mixed in a ball mill. Then, a zinc mixture electrode was produced in the same manner as in Example 5 and was used as a working electrode (zinc mixture weight: 2.03 mg) having an apparent area of 0.48 cm². In the same manner as in Example 5, a charge and discharge test was performed using the three-electrode cell at a current of 0.982 mA (charge and discharge times: 1 hour).

### (Example 56)

A zinc mixture electrode was produced according to the composition in Example 55, and a charge and discharge test was performed using the same device under the same conditions as in Example 55 (10 cycles). The charging capacity at the 10th cycle was 658 mAh/g. Then, a discharge operation was performed under the same conditions, so that the whole zinc oxide in the zinc mixture electrode was converted into zinc metal. The cell was left to stand for 24 hours, and a charge operation was performed under the same conditions. The test proved that the discharging capacity at that time was 658 mAh/g and no self-discharge occurred.

### (Example 57)

Zinc oxide (27.6 g, average particle size: about 1.1 µm, mode diameter: about 820 nm, median diameter: about 760 nm, true density: about 5.98 g/cm³, specific surface area: about 4 m²/g), acetylene black (0.90 g, average particle size: about 50 nm, specific surface area: about 40 m²/g), lanthanum oxide (2.4 g, Wako Pure Chemical Industries, Ltd.), ethanol (92.7 g, 99.5%, Wako Pure Chemical Industries, Ltd.), and water (92.7 g) were mixed in a ball mill. Then, a zinc mixture electrode was produced in the same manner as in Example 5 and was used as a working electrode (zinc mixture weight: 2.25 mg) having an apparent area of 0.48 cm². In the same manner as in Example 5, a charge and discharge test was performed using the three-electrode cell at a current of 1.07 mA (charge and discharge times: 1 hour).

### (Example 58)

Zinc oxide (27.6 g, average particle size: about 1.1 µm, mode diameter: about 820 nm, median diameter: about 760 nm, true density: about 5.98 g/cm³, specific surface area: about 4 m²/g), acetylene black (0.90 g, average particle size: about 50 nm, specific surface area: about 40 m²/g), hydroxyapatite (2.4 g, Wako Pure Chemical Industries, Ltd.), ethanol (92.7 g, 99.5%, Wako Pure Chemical Industries, Ltd.), and water (92.7 g) were mixed in a ball mill. Then, a zinc mixture electrode was produced in the same manner as in Example 5 and was used as a working electrode (zinc mixture weight: 2.60 mg) having an apparent area of 0.48 cm². In the same manner as in Example 5, a charge and discharge test was performed using the three-electrode cell at a current of 1.24 mA (charge and discharge times: 1 hour).

### (Example 59)

Zinc oxide (27.6 g, average particle size: about 1.1 µm, mode diameter: about 820 nm, median diameter: about 760 nm, true density: about 5.98 g/cm³, specific surface area: about 4 m²/g), acetylene black (0.90 g, average particle size: about 50 nm, specific surface area: about 40 m²/g), yttrium oxide-stabilized zirconium oxide (2.4 g), ethanol (92.7 g, 99.5%, Wako Pure Chemical Industries, Ltd.), and water (92.7 g) were mixed in a ball mill. Then, a zinc mixture electrode was produced in the same manner as in Example 5 and was used as a working electrode (zinc mixture weight: 2.34 mg) having an apparent area of 0.48 cm². In the same manner as in Example 5, a charge and discharge test was performed using the three-electrode cell at a current of 1.11 mA (charge and discharge times: 1 hour).

### (Example 60)

Zinc oxide (27.6 g, average particle size: about 1.1 µm, mode diameter: about 820 nm, median diameter: about 760 nm, true density: about 5.98 g/cm³, specific surface area: about 4 m²/g), acetylene black (0.90 g, average particle size: about 50 nm, specific surface area: about 40 m²/g), scandium oxide-stabilized zirconium oxide (2.4 g), ethanol (92.7 g, 99.5%, Wako Pure Chemical Industries, Ltd.), and water (92.7 g) were mixed in a ball mill. Then, a zinc mixture electrode was produced in the same manner as in Example 5 and was used as a working electrode (zinc mixture weight: 1.71 mg) having an apparent area of 0.48 cm². In the same manner as in Example 5, a charge and discharge test was performed using the three-electrode cell at a current of 0.81 mA (charge and discharge times: 1 hour).

### (Example 61)

Zinc oxide (27.6 g, average particle size: about 1.1 µm, mode diameter: about 820 nm, median diameter: about 760 nm, true density: about 5.98 g/cm³, specific surface area: about 4 m²/g), acetylene black (0.90 g, average particle size: about 50 nm, specific surface area: about 40 m²/g), cerium oxide-zirconium oxide solid solutions (2.4 g, CeO₂/ZrO₂/Y₂O₃ = 25/74/1), ethanol (92.7 g, 99.5%, Wako Pure Chemical Industries, Ltd.), and water (92.7 g) were mixed in a ball mill. Then, a zinc mixture electrode was produced in the same manner as in Example 5 and was used as a working electrode (zinc mixture weight: 2.47 mg) having an apparent area of 0.48 cm². In the same manner as in Example 5, a charge and discharge test was performed using the three-electrode cell at a current of 1.17 mA (charge and discharge times: 1 hour).

### (Example 62)

A 2-L beaker was charged with zinc chloride (58.7 g, special grade, Wako Pure Chemical Industries, Ltd.) and water (900 g), and the zinc chloride was completely dissolved in water. Then, a solution of indium oxide (0.9, NACALAI TESQUE, INC.) dissolved in hydrochloric acid (53.1 g, special grade, Wako Pure Chemical Industries, Ltd.) was added to the beaker. The substances were stir-mixed to provide a uniform aqueous solution. Next, a 14% by mass ammonia water was gradually added to the aqueous solution until the pH of the aqueous solution reached 8 while stirred. The stirring was continued for 15 minutes after completion of the addition of the ammonia water. Then, the stirring was stopped and the mixture was left to stand for two hours, thereby providing generation of precipitate. The precipitate and the supernatant were separated by filtration. The obtained precipitate was sufficiently washed with water and ethanol, and the washed precipitate was dried overnight under reduced pressure at 60°C. The dried solid (powder) obtained was calcined for two hours under atmospheric pressure at 500°C, thereby providing an indium oxide-doped zinc oxide powder. The composition (ratio by weight) of this powder was ZnO/In₂O₃ = 97.5/2.5.

The indium oxide-doped zinc oxide powder (30.0 g), acetylene black (0.90 g, average particle size: about 50 nm, specific surface area: about 40 m²/g), ethanol (92.7 g, 99.5%, Wako Pure Chemical Industries, Ltd.), and water (92.7 g) were mixed in a ball mill. Then, a zinc mixture electrode was produced in the same manner as in Example 5 and was used as a working electrode (zinc mixture weight: 1.80 mg) having an apparent area of 0.48 cm². In the same manner as in Example 5, a charge and discharge test was performed using the three-electrode cell at a current of 0.87 mA (charge and discharge times: 1 hour).

### (Example 63)

The zinc mixture electrode produced in Example 12 was used as a working electrode (zinc mixture weight: 1.26 mg) having an apparent area of 0.50 cm². The counter electrode was an air electrode with air holes (TOMOE ENGINEERING CO., LTD., QSI-Nano manganese gas diffusion electrode), and the electrolyte solution was a saturated solution of zinc oxide in an aqueous solution of 8 mol/L potassium hydroxide and 20 g/L lithium hydroxide (dissolved oxygen concentration: 2.9 mg/L). A charge and discharge test was performed using the two-electrode cell at a current of 0.829 mA (charge and discharge times: 20 minutes, cut off at 2.0 V and 0.5 V).

### [2. Examples of the second and third aspects of the present invention]

### (Example 64)

To a saturated solution of zinc oxide in an aqueous solution of 4 mol/L potassium hydroxide (dissolved oxygen concentration: 5.2 mg/L) (10 mL) were added hydrotalcite (1. 5 g, [Mg_{0.8}Al_{0.2}(OH)₂] (CO₃²⁻)_{0.1}·mH₂O) and sodium polyacrylate (0.8 g, weight average molecular weight: 6500000) and the mixture was stirred for three days, thereby providing a hydrotalcite-cross-linked acrylic acid salt gel.

Zinc oxide (10.5 g, average particle size: 20 nm), acetylene black (AB) (0.36 g), and tin oxide (0.87 g, average particle size: about 50 µm) were put into a bottle, and the mixture was pulverized using a zirconia ball in a ball mill for 12 hours. The obtained solid was passed through a sieve to provide an average particle size of 25 µm or smaller. This solid (1.29 g), a solution of 12% polyvinylidene fluoride in N-methylpyrrolidone (2.17 g), and N-methylpyrrolidone (1.2 g) were put into a glass vial and stirred overnight using a stirrer with a stir bar. The obtained slurry was applied to a copper foil using an automatic coating device, and then dried at 80°C for 12 hours and dried in vacuo (at room temperature) for six hours. The copper foil coated with the zinc mixture was pressed at 1 t so that the thickness of the zinc mixture was 10 µm. The workpiece was punched using a punching device to provide a zinc mixture electrode, and this was used as a working electrode (zinc mixture weight: 11.8 mg) having an apparent area of 0.48 cm². The counter electrode was a zinc plate, the reference electrode was a zinc wire, and the electrolyte solution was a saturated solution of zinc oxide in an aqueous solution of 4 mol/L potassium hydroxide. On the surface of the zinc negative electrode was placed the prepared hydrotalcite-cross-linked acrylic acid gel (thickness: 5 mm), and a charge and discharge test was performed using the three-electrode cell at a current of 1.52 mA (charge and discharge times: 1 hour, cut off at -0.1 V and 0.4 V). The charge and discharge operation was repeated 100 times, and then the cell was disassembled and the zinc electrode was visually observed. The observation found that changes in form and growth of dendrite of the active material in the zinc electrode mixture were suppressed.

### (Comparative Example 1)

Zinc oxide (10.5 g, average particle size: 20 nm), acetylene black (AB) (0.36 g), and tin oxide (0.87 g, average particle size: about 50 µm) were put into a bottle, and the mixture was pulverized using a zirconia ball in a ball mill for 12 hours. The obtained solid was passed through a sieve to provide an average particle size of 25 µm or smaller. This solid (1.29 g), a solution of 12% polyvinylidene fluoride in N-methylpyrrolidone (2.17 g), and N-methylpyrrolidone (1.2 g) were put into a glass vial and stirred overnight using a stirrer with a stir bar. The obtained slurry was applied to a copper foil using an automatic coating device, and then dried at 80°C for 12 hours and dried in vacuo (at room temperature) for six hours. The copper foil coated with the zinc mixture was pressed at 1 t so that the thickness of the zinc mixture was 10 µm. The workpiece was punched using a punching device to provide a zinc mixture electrode, and this was used as a working electrode (zinc mixture weight: 12.0 mg) having an apparent area of 0.48 cm². In the same manner as in Example 64, a charge and discharge test was performed using the three-electrode cell at a current of 1.53 mA (charge and discharge times: 1 hour, cut off at -0.1 V and 0.4 V). The charge and discharge operation was repeated 100 times, and then the cell was disassembled and the zinc electrode was visually observed. The observation found that the zinc electrode expanded due to changes in form and growth of dendrite of the active material in the zinc electrode mixture.

### (Example 65)

Zinc oxide (10.5 g, average particle size: 20 nm) and acetylene black (AB) (1.5 g) were put into a bottle. Thereto were added a polymer having a moiety where a quaternary ammonium salt (counter anion: hydroxy group) was bonded to the aromatic ring of polystyrene and a solution of 12% polyvinylidene fluoride in N-methylpyrrolidone, and the mixture was pulverized using a ball mill for 12 hours. The obtained slurry was applied to a copper foil using an automatic coating device, and then dried at 80°C for 12 hours and dried in vacuo (at room temperature) for six hours. The copper foil coated with the zinc mixture was pressed at 1 t so that the thickness of the zinc mixture was 10 µm. The workpiece was punched using a punching device to provide a zinc mixture electrode, and this was used as a working electrode having an apparent area of 0.48 cm². The counter electrode was a zinc plate, the reference electrode was a zinc wire, and the electrolyte solution was a saturated solution of zinc oxide in an aqueous solution of 4 mol/L potassium hydroxide (dissolved oxygen concentration: 5.2 mg/L). A charge and discharge test was performed using the three-electrode cell (charge and discharge times: 1 hour). The initial coulombic efficiency was about 70%. The zinc electrode was SEM-observed after the charge and discharge operation was repeated 60 times, and the observation revealed that changes in form of the active material were suppressed.

### (Comparative Example 2)

Zinc oxide (10.5 g, average particle size: 20 nm) and acetylene black (AB) (1.5 g) were put into a bottle. Thereto was added a solution of 12% polyvinylidene fluoride in N-methylpyrrolidone, and the mixture was pulverized using a ball mill for 12 hours. The obtained slurry was applied to a copper foil using an automatic coating device, and then dried at 80°C for 12 hours and dried in vacuo (at room temperature) for six hours. The copper foil coated with the zinc mixture was pressed at 1 t so that the thickness of the zinc mixture was 10 µm. The workpiece was punched using a punching device to provide a zinc mixture electrode, and this was used as a working electrode having an apparent area of 0.48 cm². In the same manner as in Example 64, a charge and discharge test was performed using the three-electrode cell (charge and discharge times: 1 hour). The initial coulombic efficiency was about 30%. The zinc electrode was SEM-observed after the charge and discharge operation was repeated 60 times, and the observation revealed that changes in form of the active material occurred.

### (Example 66)

To a saturated solution of zinc oxide in an aqueous solution of 6 mol/L potassium hydroxide (10 mL, dissolved oxygen concentration: 4.8 mg/L) were added hydroxyapatite (1.6 g, Ca₁₀(PO₄)₆(OH)₂) and sodium polyacrylate (1.0 g, weight average molecular weight: 1500000), and the mixture was stirred for three days, thereby providing a hydroxyapatite-cross-linked acrylic acid salt gel.

Zinc oxide (27.6 g, average particle size: about 1.1 µm, mode diameter: about 820 nm, median diameter: about 760 nm, true density: about 5.98 g/cm³, specific surface area: about 4 m²/g), acetylene black (0.90 g, average particle size: about 50 nm, specific surface area: about 40 m²/g), cerium (IV) oxide (2.4 g, Wako Pure Chemical Industries, Ltd.), ethanol (92.7 g, 99.5%, Wako Pure Chemical Industries, Ltd.), and water (92.7 g) were mixed in a ball mill. Then, a zinc mixture electrode was produced in the same manner as in Example 5 and was used as a working electrode (zinc mixture weight: 5.4 mg) having an apparent area of 1.1 cm². The counter electrode was a nickel electrode (active material: cobalt-coated nickel hydroxide, the capacity was set three times or more as high as that of the zinc electrode), and the gel electrolyte was the prepared hydroxyapatite-cross-linked acrylic acid salt gel (thickness: 1 mm). A charge and discharge test was performed using the coin cell at a current of 0.79 mA (charge and discharge times: 3 hours 20 minutes, cut off at 1.9 V and 1.2 V). The battery endured at least 20 or more charge and discharge cycles. The zinc electrode was SEM-observed after the charge and discharge test, and the observation found neither changes in form nor passivation of the active material.

### (Example 67)

To a saturated solution of zinc oxide in an aqueous solution of 8 mol/L potassium hydroxide (10 mL, dissolved oxygen concentration: 3.5 mg/L) were added hydrotalcite (1.5 g, [Mg_{0.67}Al_{0.33}(OH)₂](CO₃²⁻)_{0.165}·mH₂O) and sodium polyacrylate (1.0 g, weight average molecular weight: 1500000) and the mixture was stirred for three days, thereby providing a hydrotalcite-cross-linked acrylic acid salt gel.

Zinc oxide (27.6 g, average particle size: about 1.1 µm, mode diameter: about 820 nm, median diameter: about 760 nm, true density: about 5.98 g/cm³, specific surface area: about 4 m²/g), acetylene black (0.90 g, average particle size: about 50 nm, specific surface area: about 40 m²/g), cerium (IV) oxide (2.4 g, Wako Pure Chemical Industries, Ltd.), ethanol (92.7 g, 99.5%, Wako Pure Chemical Industries, Ltd.), and water (92.7 g) were mixed in a ball mill. Then, a zinc mixture electrode was produced in the same manner as in Example 5 and was used as a working electrode (zinc mixture weight: 2.3 mg) having an apparent area of 0.50 cm². The counter electrode was a nickel electrode (active material: cobalt-coated nickel hydroxide, the capacity was set three times or more as high as that of the zinc electrode), and the gel electrolyte was the prepared hydrotalcite-cross-linked acrylic acid salt gel (thickness: 1 mm). A charge and discharge test was performed using a coin cell at a current of 1.1 mA (charge and discharge times: 1 hour). The battery endured at least 50 or more charge and discharge cycles. The zinc electrode was SEM-observed after the charge and discharge test, and the observation found neither changes in form nor passivation of the active material.

### (Example 68)

To a saturated solution of zinc oxide in an aqueous solution of 8 mol/L potassium hydroxide (10 g, dissolved oxygen concentration: 3.5 mg/L) were added hydrotalcite (1. 5 g, [Mg_{0.8}Al_{0.2}(OH)₂](CO₃²⁻)_{0.1}·mH₂O) and sodium polyacrylate (1.0 g, weight average molecular weight: 1500000) and the mixture was stirred for three days, thereby providing hydrotalcite-cross-linked acrylic acid gel.

Zinc oxide (27.6 g, average particle size: about 1.1 µm, mode diameter: about 820 nm, median diameter: about 760 nm, true density: about 5.98 g/cm³, specific surface area: about 4 m²/g), acetylene black (0.9 g, average particle size: about 50 nm, specific surface area: about 40 m²/g), zirconium (IV) oxide (2.4 g, Wako Pure Chemical Industries, Ltd.), ethanol (92.7 g, 99.5%, Wako Pure Chemical Industries, Ltd.), and water (92.7 g) were mixed in a ball mill. Then, a zinc mixture electrode was produced in the same manner as in Example 5 and was used as a working electrode (zinc mixture weight: 2.0 mg) having an apparent area of 0.50 cm². The counter electrode was a nickel electrode (active material: cobalt-coated nickel hydroxide, the capacity was set three times or more as high as that of the zinc electrode), and the gel electrolyte was the prepared hydrotalcite-cross-linked acrylic acid gel (thickness: 1 mm). A charge and discharge test was performed using a coin cell at a current of 0.98 mA (charge and discharge times: 1 hour). The battery endured at least 50 or more charge and discharge cycles. The zinc electrode was SEM-observed after the charge and discharge test, and the observation found neither changes in form nor passivation of the active material.

### (Example 69)

Zinc oxide (27.6 g, average particle size: about 1.1 µm, mode diameter: about 820 nm, median diameter: about 760 nm, true density: about 5.98 g/cm³, specific surface area: about 4 m²/g), acetylene black (0.90 g, average particle size: about 50 nm, specific surface area: about 40 m²/g), cerium (IV) oxide (2.4 g, Wako Pure Chemical Industries, Ltd.), ethanol (92.7 g, 99.5%, Wako Pure Chemical Industries, Ltd.), and water (92.7 g) were mixed in a ball mill. Then, the mixture was dried using an evaporator under reduced pressure at 100°C for two hours, and further dried using a stationary-type vacuum dryer under reduced pressure at 110°C overnight. The dried solid was pulverized at 18000 rpm for 60 seconds using a pulverizer (WARING, X-TREME MX1200XTM). The obtained solid (1.0 g), a 50% styrene butadiene rubber (SBR)-dispersed aqueous solution (0.080 g), an aqueous solution (0.033 g) containing a 45% copolymer (AQUALIC) of sodium acrylate and a sulfonic acid sodium salt-containing monomer, and water (0.43 g) were put into a glass vial and stirred for one hour using a stirrer with a stir bar. The obtained slurry was applied to a copper foil using an automatic coating device, and then dried at 80°C for 12 hours. The copper foil coated with the zinc mixture was pressed at 3 t, so that the thickness of the zinc mixture was 10 µm or smaller. The workpiece was punched using a punching device (diameter: 15.95 mm) to provide a zinc mixture electrode, and this was used as a working electrode (zinc mixture weight: 8.22 mg) having an apparent area of 0.48 cm². The counter electrode was a zinc plate, the reference electrode was a zinc wire, and the electrolyte solution was a saturated solution of zinc oxide in an aqueous solution of 4 mol/L potassium hydroxide (dissolved oxygen concentration: 5.2 mg/L). Then, a charge and discharge test was performed using the three-electrode cell at a current of 4.63 mA (charge and discharge times: 1 hour, cut off at -0.1 V and 0.4 V). The test found that the battery endured at least 60 charge and discharge cycles stably.

### (Example 70)

Zinc oxide (27.6 g, average particle size: about 1.1 µm, mode diameter: about 820 nm, median diameter: about 760 nm, true density: about 5.98 g/cm³, specific surface area: about 4 m²/g), acetylene black (0.90 g, average particle size: about 50 nm, specific surface area: about 40 m²/g), cerium (IV) oxide (2.4 g, Wako Pure Chemical Industries, Ltd.), ethanol (92.7 g, 99.5%, Wako Pure Chemical Industries, Ltd.), and water (92.7 g) were mixed in a ball mill. Then, the mixture was dried using an evaporator under reduced pressure at 100°C for two hours, and further dried using a stationary-type vacuum dryer under reduced pressure at 110°C overnight. The dried solid was pulverized at 18000 rpm for 60 seconds using a pulverizer (WARING, X-TREME MX1200XTM). The obtained solid (2.1 g), a polyvinylidene fluoride-dispersed aqueous solution (0.48 g), an aqueous solution (0.088 g) containing a 45% copolymer (HW-1) of sodium acrylate and a compound prepared by adding ethylene oxide to isoprenol, and water (0.80 g) were put into a glass vial and stirred for one hour using a stirrer with a stir bar. The obtained slurry was applied to a copper foil using an automatic coating device, and then dried at 80°C for 12 hours. The copper foil coated with the zinc mixture was pressed at 3 t, so that the thickness of the zinc mixture was 10 µm or smaller. The workpiece was punched using a punching device (diameter: 15.95 mm) to provide a zinc mixture electrode, and this was used as a working electrode (zinc mixture weight: 7.71 mg) having an apparent area of 0.48 cm². The counter electrode was a zinc plate, the reference electrode was a zinc wire, and the electrolyte solution was a saturated solution of zinc oxide in an aqueous solution of 4 mol/L potassium hydroxide (dissolved oxygen concentration: 5.2 mg/L). Then, a charge and discharge test was performed using the three-electrode cell at a current of 4.04 mA (charge and discharge times: 1 hour, cut off at -0.1 V and 0.4 V). The test found that the battery endured at least 60 charge and discharge cycles stably.

### (Example 71)

To a saturated solution of zinc oxide in an aqueous solution of 8 mol/L potassium hydroxide and 20 g/L lithium hydroxide (8.0 g, dissolved oxygen concentration: 2.9 mg/L) were added hydrotalcite (1.6 g, [Mg_{0.8}Al₀.₂(OH)₂](CO₃²⁻)_{0.1}·mH₂O) and polyvinylpyrrolidone (1.0 g), and the mixture was stirred for one day, thereby providing a hydrotalcite-cross-linked vinylpyrrolidone gel.

The same zinc mixture electrode as in Example 67 was used as a working electrode (zinc mixture weight: 2.3 mg) having an apparent area of 0.50 cm². The counter electrode was a nickel electrode (active material: cobalt-coated nickel hydroxide, the capacity was set three times or more as high as that of the zinc electrode), and the gel electrolyte was the prepared hydrotalcite-cross-linked polyvinylpyrrolidone gel (thickness: 1 mm). A charge and discharge test was performed using a coin cell at a current of 1.10 mA (charge and discharge times: 1 hour, cut off at 1.9 V and 1.2 V). The battery endured at least 50 or more charge and discharge cycles. The zinc electrode was SEM-observed after the charge and discharge test, and the observation found neither changes in form nor passivation of the active material. The discharging capacity at the 20th cycle was 550 mAh/g.

### (Example 72)

To a saturated solution of zinc oxide in an aqueous solution of 8 mol/L potassium hydroxide and 20 g/L lithium hydroxide (7.8 g, dissolved oxygen concentration: 2.9 mg/L) were added hydrotalcite (1.6 g, [Mg_{0.8}Al_{0.2}(OH)₂](CO₃²⁻)_{0.1}·mH₂O) and an aqueous solution (0.5 g) containing a 45% copolymer (HW-1) of sodium acrylate and a compound prepared by adding ethylene oxide to isoprenol, and the mixture was stirred for one day, thereby providing a hydrotalcite-cross-linked HW-1 gel.

The same zinc mixture electrode as in Example 67 was used as a working electrode (zinc mixture weight: 2.8 mg) having an apparent area of 0.50 cm². The counter electrode was a nickel electrode (active material: cobalt-coated nickel hydroxide, the capacity was set three times or more as high as that of the zinc electrode), and the gel electrolyte was the prepared hydrotalcite-cross-linked HW-1 gel (thickness: 1 mm). A charge and discharge test was performed using a coin cell at a current of 1.34 mA (charge and discharge times: 1 hour, cut off at 1.9 V and 1.2 V). The discharging capacity at the 6th cycle was 565 mAh/g.

### (Example 73)

To a saturated solution of zinc oxide in an aqueous solution of 8 mol/L potassium hydroxide and 20 g/L lithium hydroxide (7.5 g, dissolved oxygen concentration: 2.9 mg/L) were added hydrotalcite (1.6 g, [Mg_{0.8}Al_{0.2}(OH)₂](CO₃²⁻)_{0.1}·mH₂O) and an aqueous solution (2.5 g) containing a 45% copolymer of sodium acrylate and sodium maleate, and the mixture was stirred for one day, thereby providing a hydrotalcite-cross-linked polymer gel.

The same zinc mixture electrode as in Example 67 was used as a working electrode (zinc mixture weight: 2.1 mg) having an apparent area of 0.50 cm². The counter electrode was a nickel electrode (active material: cobalt-coated nickel hydroxide, the capacity was set three times or more as high as that of the zinc electrode), and the gel electrolyte was the prepared hydrotalcite-cross-linked polymer gel (thickness: 1 mm). A charge and discharge test was performed using a coin cell at a current of 1.03 mA (charge and discharge times: 1 hour, cut off at 1.9 V and 1.2 V). The discharging capacity at the 5th cycle was 533 mAh/g.

### (Example 74)

To a saturated solution of zinc oxide in an aqueous solution of 8 mol/L potassium hydroxide and 20 g/L lithium hydroxide (7.8 g, dissolved oxygen concentration: 2.9 mg/L) were added hydrotalcite (1. 6 g, [Mg_{0.8}Al_{0.2}(OH)₂](CO₃²⁻)_{0.1}·mH₂O) and an aqueous solution (2.2 g) containing a 45% sodium acrylate polymer having a phosphoric acid group at an end, and the mixture was stirred for one day, thereby providing a hydrotalcite-cross-linked polymer gel.

The same zinc mixture electrode as in Example 67 was used as a working electrode (zinc mixture weight: 1.74 mg) having an apparent area of 0.50 cm². The counter electrode was a nickel electrode (active material: cobalt-coated nickel hydroxide, the capacity was set three times or more as high as that of the zinc electrode), and the gel electrolyte was the prepared hydrotalcite-cross-linked polymer gel (thickness: 1 mm). A charge and discharge test was performed using a coin cell at a current of 0.787 mA (charge and discharge times: 1 hour, cut off at 1.9 V and 1.2 V). The discharging capacity at the 15th cycle was 496 mAh/g.

### (Example 75)

To a saturated solution of zinc oxide in an aqueous solution of 8 mol/L potassium hydroxide and 20 g/L lithium hydroxide (7.8 g, dissolved oxygen concentration: 2.9 mg/L) were added hydrotalcite (1. 6 g, [Mg_{0.8}Al_{0.2}(OH)₂](CO₃²⁻)_{0.1}·mH₂O) and an aqueous solution (0.3 g) containing 40% copolymer of sodium methacrylate and a compound prepared by adding ethylene oxide to methacrylic acid, and the mixture was stirred for one day, thereby providing a hydrotalcite-cross-linked polymer gel.

The same zinc mixture electrode as in Example 67 was used as a working electrode (zinc mixture weight: 1.67 mg) having an apparent area of 0.50 cm². The counter electrode was a nickel electrode (active material: cobalt-coated nickel hydroxide, the capacity was set three times or more as high as that of the zinc electrode), and the gel electrolyte was the prepared hydrotalcite-cross-linked polymer gel (thickness: 1 mm). A charge and discharge test was performed using a coin cell at a current of 0.793 mA (charge and discharge times: 1 hour, cut off at 1.9 V and 1.2 V). The discharging capacity at the 10th cycle was 413 mAh/g.

### (Example 76)

To a saturated solution of zinc oxide in an aqueous solution of 8 mol/L potassium hydroxide and 20 g/L lithium hydroxide (7.8 g, dissolved oxygen concentration: 2.9 mg/L) were added hydrotalcite (1. 6 g, [Mg_{0.8}Al_{0.2}(OH)₂](CO₃²⁻)_{0.1}·mH₂O) and an aqueous solution (0.3 g) containing 20% copolymer of sodium methacrylate and a compound prepared by adding ethylene oxide to methacrylic acid and being partially cross-linked by a diepoxy compound, and the mixture was stirred for one day, thereby providing a hydrotalcite-cross-linked polymer gel.

The same zinc mixture electrode as in Example 67 was used as a working electrode (zinc mixture weight: 1.94 mg) having an apparent area of 0.50 cm². The counter electrode was a nickel electrode (active material: cobalt-coated nickel hydroxide, the capacity was set three times or more as high as that of the zinc electrode), and the gel electrolyte was the prepared hydrotalcite-cross-linked polymer gel (thickness: 1 mm). A charge and discharge test was performed using a coin cell at a current of 0.922 mA (charge and discharge times: 1 hour, cut off at 1.9 V and 1.2 V). The discharging capacity at the 20th cycle was 422 mAh/g.

### (Example 77)

To a saturated solution of zinc oxide in an aqueous solution of 8 mol/L potassium hydroxide and 20 g/L lithium hydroxide (7.8 g, dissolved oxygen concentration: 2.9 mg/L) were added hydrotalcite (1.2 g, [Mg_{0.8}Al_{0.2}(OH)₂](CO₃²⁻)_{0.1}·mH₂O), zirconium hydroxide hydrate (0.4 g), and sodium polyacrylate (1.0 g, weight average molecular weight: 1500000), and the mixture was stirred for one day, thereby providing a hydrotalcite/zirconium hydroxide-cross-linked acrylic acid salt gel.

The same zinc mixture electrode as in Example 67 was used as a working electrode (zinc mixture weight: 2.64 mg) having an apparent area of 0.50 cm². The counter electrode was a nickel electrode (active material: cobalt-coated nickel hydroxide, the capacity was set three times or more as high as that of the zinc electrode), and the gel electrolyte was the prepared hydrotalcite/zirconium hydroxide-cross-linked acrylic acid salt gel (thickness: 1 mm). A charge and discharge test was performed using a coin cell at a current of 1.26 mA (charge and discharge times: 1 hour, cut off at 1.9 V and 1.2 V). The discharging capacity at the 20th cycle was 517 mAh/g.

### (Example 78)

To a saturated solution of zinc oxide in an aqueous solution of 8 mol/L potassium hydroxide and 20 g/L lithium hydroxide (2.3 g, dissolved oxygen concentration: 2.9 mg/L) were added zirconium hydroxide hydrate (1.6 g) and sodium polyacrylate (1.0 g, weight average molecular weight: 1500000), and the mixture was stirred for one day, thereby providing a zirconium hydroxide-cross-linked acrylic acid salt gel.

The same zinc mixture electrode as in Example 67 was used as a working electrode (zinc mixture weight: 1.32 mg) having an apparent area of 0.50 cm². The counter electrode was a nickel electrode (active material: cobalt-coated nickel hydroxide, the capacity was set three times or more as high as that of the zinc electrode), and the gel electrolyte was the prepared zirconium hydroxide-cross-linked acrylic acid salt gel (thickness: 1 mm). A charge and discharge test was performed using a coin cell at a current of 0.629 mA (charge and discharge times: 1 hour, cut off at 1.9 V and 1.2 V). The discharging capacity at the 10th cycle was 424 mAh/g.

### (Example 79)

To a saturated solution of zinc oxide in an aqueous solution of 8 mol/L potassium hydroxide and 20 g/L lithium hydroxide (9.2 g, dissolved oxygen concentration: 2.9 mg/L) were added hydrotalcite (1.2 g, [Mg_{0.8}Al_{0.2}(OH)₂](CO₃²⁻)_{0.1}·mH₂O), ettringite (0.4 g), and sodium polyacrylate (0.2 g, weight average molecular weight: 1500000), and the mixture was stirred for one day, thereby providing a hydrotalcite/ettringite-cross-linked acrylic acid salt gel.

The same zinc mixture electrode as in Example 67 was used as a working electrode (zinc mixture weight: 1.49 mg) having an apparent area of 0.50 cm². The counter electrode was a nickel electrode (active material: cobalt-coated nickel hydroxide, the capacity was set three times or more as high as that of the zinc electrode), and the gel electrolyte was the prepared hydrotalcite/ettringite-cross-linked acrylic acid salt gel (thickness: 1 mm). A charge and discharge test was performed using a coin cell at a current of 0.709 mA (charge and discharge times: 1 hour, cut off at 1.9 V and 1.2 V). The discharging capacity at the 10th cycle was 561 mAh/g.

### (Example 80)

To a saturated solution of zinc oxide in an aqueous solution of 8 mol/L potassium hydroxide and 20 g/L lithium hydroxide (6.1 g, dissolved oxygen concentration: 2.9 mg/L) were added ettringite (1.6 g) and sodium polyacrylate (1.0 g, weight average molecular weight: 1500000), and the mixture was stirred for one day, thereby providing an ettringite-cross-linked acrylic acid salt gel.

The same zinc mixture electrode as in Example 67 was used as a working electrode (zinc mixture weight: 1.03 mg) having an apparent area of 0.50 cm². The counter electrode was a nickel electrode (active material: cobalt-coated nickel hydroxide, the capacity was set three times or more as high as that of the zinc electrode), and the gel electrolyte was the prepared ettringite-cross-linked acrylic acid salt gel (thickness: 1 mm). A charge and discharge test was performed using a coin cell at a current of 0.487 mA (charge and discharge times: 1 hour, cut off at 1.9 V and 1.2 V). The discharging capacity at the 20th cycle was 495 mAh/g.

### (Example 81)

To a saturated solution of zinc oxide in an aqueous solution of 8 mol/L potassium hydroxide and 20 g/L lithium hydroxide (7.8 g, dissolved oxygen concentration: 2.9 mg/L) was added hydrotalcite (1.6 g, [Mg_{0.67}Al_{0.33}(OH)₂](CO₃²⁻)_{0.165}·mH₂O), and the mixture was stirred for one day, thereby providing a hydrotalcite-cross-linked gel.

The same zinc mixture electrode as in Example 67 was used as a working electrode (zinc mixture weight: 2.56 mg) having an apparent area of 0.50 cm². The counter electrode was a nickel electrode (active material: cobalt-coated nickel hydroxide, the capacity was set three times or more as high as that of the zinc electrode), and the gel electrolyte was the prepared hydrotalcite-cross-linked gel (thickness: 1 mm). A charge and discharge test was performed using a coin cell at a current of 1.24 mA (charge and discharge times: 1 hour, cut off at 1.9 V and 1.2 V). The discharging capacity at the 3rd cycle was 513 mAh/g.

### (Example 82)

To a saturated solution of zinc oxide in an aqueous solution of 8 mol/L potassium hydroxide and 20 g/L lithium hydroxide (5.8 g, dissolved oxygen concentration: 2.9 mg/L) was added ettringite (1.6 g), and the mixture was stirred for one day, thereby providing an ettringite-cross-linked gel.

The same zinc mixture electrode as in Example 67 was used as a working electrode (zinc mixture weight: 1.02 mg) having an apparent area of 0.50 cm². The counter electrode was a nickel electrode (active material: cobalt-coated nickel hydroxide, the capacity was set three times or more as high as that of the zinc electrode), and the gel electrolyte was the prepared ettringite-cross-linked gel (thickness: 1 mm). A charge and discharge test was performed using a coin cell at a current of 0.484 mA (charge and discharge times: 1 hour, cut off at 1.9 V and 1.2 V). The discharging capacity at the 20th cycle was 495 mAh/g.

### (Example 83)

To acrylic acid (1.1 g) was slowly added a saturated solution of zinc oxide in an aqueous solution of 8 mol/L potassium hydroxide and 20 g/L lithium hydroxide (10 g, dissolved oxygen concentration: 2.9 mg/L), and then hydrotalcite (0.5 g, [Mg_{0.8}Al_{0.2}(OH)₂](CO₃²⁻)_{0.1}·mH₂O) was added and the mixture was stirred. Thereto was added a 4% ammonium persulfate aqueous solution (0.4 g), and the liquid was applied to the same zinc mixture electrode as in Example 12 and polymerized in nitrogen atmosphere, thereby forming a hydrotalcite-cross-linked acrylic acid gel film on the electrode.

To a saturated solution of zinc oxide in an aqueous solution of 8 mol/L potassium hydroxide and 20 g/L lithium hydroxide (7.8 g, dissolved oxygen concentration: 2.9 mg/L) were added hydrotalcite (1.6 g, [Mg_{0.8}Al_{0.2}(OH)₂](CO₃²⁻)_{0.1}·mH₂O) and a sodium acrylate polymer (1.0 g, weight average molecular weight: 1500000), and the mixture was stirred for one day, thereby providing a hydrotalcite-cross-linked acrylic acid salt gel.

The same zinc mixture electrode as in Example 67 was used as a working electrode (zinc mixture weight: 1.64 mg) having an apparent area of 0.50 cm². The counter electrode was a nickel electrode (active material: cobalt-coated nickel hydroxide, the capacity was set three times or more as high as that of the zinc electrode), and the gel electrolyte was the prepared hydrotalcite-cross-linked acrylic acid salt gel (thickness: 1 mm). A charge and discharge test was performed using a coin cell at a current of 0.778 mA (charge and discharge times: 1 hour, cut off at 1.9 V and 1.2 V). The discharging capacity at the 20th cycle was 590 mAh/g.

### (Example 84)

N,N'-methylenebisacrylamide (10 mg) was dissolved in acrylic acid (1.1 g), and to the solution was slowly added a saturated solution of zinc oxide in an aqueous solution of 8 mol/L potassium hydroxide and 20 g/L lithium hydroxide (10 g, dissolved oxygen concentration: 2.9 mg/L), and then calcium nitrate (65 mg) was added and the mixture was stirred. Thereto was added a 4% ammonium persulfate aqueous solution (0.4 g), and the liquid was applied to the same zinc mixture electrode as in Example 12 and polymerized in nitrogen atmosphere, thereby forming a calcium- and amide bond-cross-linked acrylic acid salt gel on the electrode.

To a saturated solution of zinc oxide in an aqueous solution of 8 mol/L potassium hydroxide and 20 g/L lithium hydroxide (7.8 g, dissolved oxygen concentration: 2.9 mg/L) were added hydrotalcite (1.6 g, [Mg_{0.8}Al_{0.2}(OH)₂](CO₃²⁻)_{0.1}·mH₂O) and a sodium acrylate polymer (1.0 g, weight average molecular weight: 1500000), and the mixture was stirred for one day, thereby providing a hydrotalcite-cross-linked acrylic acid salt gel.

The same zinc mixture electrode as in Example 67 was used as a working electrode (zinc mixture weight: 1.90 mg) having an apparent area of 0.50 cm². The counter electrode was a nickel electrode (active material: cobalt-coated nickel hydroxide, the capacity was set three times or more as high as that of the zinc electrode), and the gel electrolyte was the prepared hydrotalcite-cross-linked acrylic acid salt gel (thickness: 1 mm). A charge and discharge test was performed using a coin cell at a current of 0.903 mA (charge and discharge times: 1 hour, cut off at 1.9 V and 1.2 V). The discharging capacity at the 10th cycle was 505 mAh/g.

### (Example 85)

To a saturated solution of zinc oxide in an aqueous solution of 8 mol/L potassium hydroxide and 20 g/L lithium hydroxide (8.1 g, dissolved oxygen concentration: 2.9 mg/L) were added hydrotalcite (1.6 g, [Mg_{0.8}Al_{0.2}(OH)₂](CO₃²⁻)_{0.1}·mH₂O), sodium polyacrylate (0.2 g, weight average molecular weight: 1500000), and propylene carbonate (0.2 g), and the mixture was stirred for one day, thereby providing a hydrotalcite-cross-linked acrylic acid salt gel.

The same zinc mixture electrode as in Example 67 was used as a working electrode (zinc mixture weight: 1.65 mg) having an apparent area of 0.50 cm². The counter electrode was a nickel electrode (active material: cobalt-coated nickel hydroxide, the capacity was set three times or more as high as that of the zinc electrode), and the gel electrolyte was the prepared hydrotalcite/ettringite-cross-linked acrylic acid salt gel (thickness: 1 mm). A charge and discharge test was performed using a coin cell at a current of 0.784 mA (charge and discharge times: 1 hour, cut off at 1.9 V and 1.2 V). The discharging capacity at the 2nd cycle was 180 mAh/g.

### (Comparative Example 3)

N,N'-methylenebisacrylamide (10 mg) was dissolved in acrylic acid (1.1 g), and to the solution was slowly added a saturated solution of zinc oxide in an aqueous solution of 8 mol/L potassium hydroxide (10 g), and thereto was added a 4% ammonium persulfate aqueous solution (0.4 g). The mixture was polymerized in nitrogen atmosphere, thereby forming an amide bond-cross-linked acrylic acid salt gel electrolyte.

The same zinc mixture electrode as in Example 67 was used as a working electrode (zinc mixture weight: 1.88 mg) having an apparent area of 0.50 cm². The counter electrode was a nickel electrode (active material: cobalt-coated nickel hydroxide, the capacity was set three times or more as high as that of the zinc electrode), and the gel electrolyte was the prepared amide bond-cross-linked acrylic acid salt gel (thickness: 1 mm). A charge and discharge test was performed using a coin cell at a current of 0.891 mA (charge and discharge times: 1 hour, cut off at 1.9 V and 1.2 V), but the cell was not charged and discharged at all.

### (1) The results of Examples 1 to 63 show the following.

For storage batteries including a zinc negative electrode which is formed from a zinc negative electrode mixture containing a zinc-containing compound and/or an electric conduction which contain(s) particles having an average particle size of 1000 µm or smaller and/or particles having an aspect ratio (vertical/lateral) of 1.1 or higher, deterioration of the battery performance even after repeated charge and discharge was suppressed, and the batteries had an excellent cycle characteristic, as well as an excellent rate characteristic and coulombic efficiency.

Especially with a zinc negative electrode mixture in which the zinc-containing compound and the conductive auxiliary agent contain particles having an average particle size of 1000 µm or smaller and/or particles having an aspect ratio (vertical/lateral) of 1.1 or higher, storage batteries including a zinc negative electrode formed from such a zinc negative electrode mixture had a markedly excellent cycle characteristic.

Further, addition of an additional component (at least one selected from the group consisting of compounds having at least one element selected from the group consisting of elements in the groups 1 to 17 of the periodic table, organic compounds, and salts of organic compounds) in the zinc negative electrode mixture allowed batteries containing a water-containing electrolyte solution to effectively suppress a side reaction of decomposing water to generate hydrogen and corrosion, to markedly improve the charge and discharge characteristics and coulombic efficiency, and to suppress changes in form and passivation of the zinc electrode active material.

In addition, use of a zinc-containing compound having a specific median diameter or a specific true density suppressed self-discharge in a charged state or during storage in a charged state.

In the above examples, the zinc negative electrodes were each formed from a zinc negative electrode mixture containing a specific zinc-containing compound and a specific conductive auxiliary agent. Use of the zinc negative electrode mixture of the present invention as a zinc negative electrode mixture for forming a zinc negative electrode and use of such a zinc negative electrode in storage batteries allow the storage batteries to have excellent battery performance such as a cycle characteristic, rate characteristic, and coulombic efficiency, and to suppress self-discharge. This applies to all the cases of using the zinc negative electrode mixture of the present invention. Therefore, the results of the examples show that the present invention can be applied in the general technical scope of the present invention and in the various forms disclosed herein, and can achieve advantageous effects.

### (2) Examples 64 to 85 and Comparative Examples 1 to 3 show the following.

In batteries formed using the gel electrolyte of the second aspect of the present invention or the negative electrode mixture of the third aspect of the present invention, use of such a gel electrolyte or negative electrode mixture suppressed growth of dendrite even after repeated charge and discharge.

Further, the batteries formed using the gel electrolyte of the second aspect of the present invention or the negative electrode mixture of the third aspect of the present invention suffered neither changes in form nor passivation of the active material even after repeated charge and discharge. Thus, such batteries can stably endure repeated charge and discharge, and had an excellent cycle characteristic, rate characteristic, and coulombic efficiency.

In the examples, the gel electrolyte and the negative electrode mixture were formed using, for example, a specific polymer. Use of the gel electrolyte or the negative electrode mixture of the present invention in storage batteries allow the storage batteries to have excellent battery performance such as a cycle characteristic, rate characteristic, and coulombic efficiency. This applies to all the cases of using the gel electrolyte or the negative electrode mixture of the present invention. Therefore, the results of the examples show that the present invention can be applied in the general technical scope of the present invention and in the various forms disclosed herein, and can achieve advantageous effects.

## Claims

1. A zinc negative electrode mixture, comprising:
a zinc-containing compound; and
a conductive auxiliary agent,
the zinc-containing compound and/or the conductive auxiliary agent comprising particles having an average particle size of 1000 µm or smaller and/or particles having an aspect ratio (vertical/lateral) of 1.1 or higher.

2. The zinc negative electrode mixture according to claim 1, further comprising an additional component,
the additional component comprising at least one selected from the group consisting of compounds having at least one element selected from the group consisting of elements in the groups 1 to 17 of the periodic table, organic compounds, and salts of organic compounds.

3. The zinc negative electrode mixture according to claim 1 or 2,
wherein the conductive auxiliary agent comprises particles having an average particle size of 500 µm to 1 nm.

4. The zinc negative electrode mixture according to any one of claims 1 to 3,
wherein the conductive auxiliary agent comprises particles having a specific surface area of 0.1 m²/g or larger but 1500 m²/g or smaller.

5. The zinc negative electrode mixture according to any one of claims 1 to 4,
wherein an amount of the conductive auxiliary agent is 0.0001 to 100% by mass for 100% by mass of the zinc-containing compound.

6. The zinc negative electrode mixture according to any one of claims 2 to 5,
wherein an amount of the additional component is 0.01 to 100% by mass for 100% by mass of the zinc-containing compound.

7. The zinc negative electrode mixture according to any one of claims 2 to 6,
wherein the additional component comprises an oxide and/or a hydroxide of at least one element selected from the group consisting of elements in the groups 1 to 17 of the periodic table.

8. The zinc negative electrode mixture according to any one of claims 2 to 7,
wherein the element in the groups 1 to 17 of the periodic table is at least one element selected from the group consisting of Al, Ca, Ce, La, Nb, Nd, P, Sc, Y, and Zr.

9. A zinc electrode which is formed from the zinc negative electrode mixture according to any one of claims 1 to 8.

10. The zinc electrode according to claim 9, which is used as a negative electrode.

11. A gel electrolyte intended to be used in batteries, comprising:
a cross-linked structure formed by a multivalent ion and/or an inorganic compound.

12. The gel electrolyte according to claim 11, further comprising a polymer.

13. A negative electrode mixture intended to be used in batteries, comprising:
a negative electrode active material; and
a polymer.

14. An electrode which is formed from the negative electrode mixture according to claim 13.

15. A battery, comprising
the zinc electrode according to claim 9 or 10.

16. A battery, comprising:
a positive electrode;
a negative electrode; and
an electrolyte interposed therebetween,
the electrolyte being formed essentially from the gel electrolyte according to claim 11 or 12.

17. A battery, comprising:
a positive electrode;
a negative electrode; and
an electrolyte interposed therebetween,
the negative electrode being the electrode according to claim 14.
